# EUROPEAN PATENT APPLICATION

(11) **EP 1 139 260 A1**
(43) Date of publication of application: **04.10.2001**
(21) Application number: 01302711.5
(22) Date of filing: 23.03.2001
(51) Int. Cl.: G06F 17/60

(54) **Human resources employment method and system**

(30) Priority: 30.03.2000 JP 2000097878; 30.03.2000 JP 2000097919; 31.03.2000 JP 2000101160; 31.03.2000 JP 2000101169
(71) Applicant: SONY CORPORATION, Tokyo (JP)
(72) Inventor: Fukuda, Joji, Sony Corporation, Shinagawa-ku, Tokyo (JP); Ishiguro, Satomi, Sony Corporation, Shinagawa-ku, Tokyo (JP); Ozawa, Taketo, Sony Corporation, Shinagawa-ku, Tokyo (JP)
(74) Representative: Nicholls, Michael John

(57) **Abstract**

A human resources employment method and a human resources employment system make it possible for an enterprise having positions available to perform rapid job-offer activities. The human resources employment method and system not only externally provide job-offer information but also internally provide job-offer information. The human resources employment method and system accept, in addition to an application from a person, a job-seeking request from an enterprise, and acquire information on human resources belonging to the enterprise. The human resources employment method and system set job-offer conditions by considering human resources information on each job offer. By issuing a password and an identification code when an application is accepted, notifying an applicant of the result of examination when accessing using the password and the identification code is performed, and recording a failure result, the human resources employment method and system use comparison with the record to determine whether the application passes the examination.

## Description

The present invention relates to human resources employment methods, job-offer methods, human resources employment systems, and recording media containing human resources employing processing, and can be widely applied to, for example, systems that use the Internet to offer job positions.

Conventionally, the Internet-based job-offer services have been developed by some job-offer service providers. Specifically, the providers use the Internet to provide, as job-offer information, job-offer requirements from enterprises. Also, the providers select applications for the job offers, and introduce the applicants to the enterprises. With this type Internet-based job-offer service, it is possible to find required human resources more quickly than by using conventional job-offer media such as magazines.

In the above-described Internet job-offer service, it is difficult to cope flexibly with the circumstances peculiar to each enterprise and, further, with circumstances peculiar to each offer job type since the job-offer service is, in many cases, being developed by specialized job-offer service providers.

In other words, in an actual job-offer case, an enterprise having positions available may intend to employ extremely specialized human resources. In such a case, there is a possibility that the enterprise cannot determine whether or not a provider-introduced person is appropriate based only on information from the job-offer service provider,. Also, there is a possibility that the job-offering enterprise must employ persons so urgently that they cannot wait for the service provider to introduce the persons. The enterprise also might employ persons based on an extremely specialized pay system and working system. Furthermore, a person whom the enterprise desires to employ even changing employment conditions may apply for a position to be offered.

In one method for solving the above-described problems, it is possible for the enterprise to develop this type of job-offer service on the Internet by itself. In this case, the enterprise will be expected to not only employ persons, but also to effectively utilize a system for performing the service.

Also, it is possible that a job-offering department can perform job-offer activities by itself, and it is possible that the job-offering department rapidly cope with circumstances caused by the activities. However, an inexperienced person in charge of employment may perform the job-offer activities, and this makes it difficult to smoothly utilize the system, resulting in hindrance of rapid employment operations.

Moreover, in the Internet job-offer service, the enterprise having positions available provides information to all parts of the world. The job-offering enterprise must notify applicants of success or failure in the twenty-four-hour system while maintaining secrecy. Persons who failed may repeatedly apply for job offers, and repeated applications may finally hinder smooth operation of the system.

Accordingly, the present invention is made in view of the foregoing points, and it is an object of the present invention to provide a human resources employment method and system and a job-offer method in which effective and smooth system operations are used to perform rapid job-offer activities, and a recording medium containing human resources employing processing.

In a first aspect of the present invention, by not only externally providing job-offer information but also internally providing job-offer information, for example, when a job-offering enterprise develops job-offer activities on the Internet by itself, a system can be effectively utilized.

In a second aspect of the present invention, by accepting not only applications from persons but also job-seeking requests from enterprises, and acquiring information on persons belonging to the enterprises, for example, when a job-offering enterprise develops job-offer activities on the Internet by itself, a job-offer system can be effectively utilized.

In a third aspect of the present invention, by setting job-offer conditions by considering job-seeking human resources information, for example, when a job-offering enterprise develops job-offer activities on the Internet by itself, a system is smoothly operated, whereby rapid job-offer activities can be performed.

In a fourth aspect of the present invention, by issuing a password and an identification code when each application is made, and notifying each applicant of an examination result in response to accessing using the password and the identification code, or by recording failure results and comparing each application with the record in order to determine success or failure, for example, when a job-offering enterprise develops job-offer activities on the Internet by itself, a system can be effectively utilized.

According to the first aspect of the present invention, there is provided a human resources employment method including a job-offer-information acquiring step for acquiring job-offer requirements and conditions from a terminal linked to a local area network, a job-offer-information providing step for outputting the job-offer requirements and conditions to a terminal linked to an external network, an application accepting step for acquiring a job-seeking request and human resources information relating to the job-seeking request via the external network, and a job-seeking-information providing step for providing the human resources information relating to the job-seeking request to the terminal linked to the local area network. In the job-seeking-information providing step, the human resources information relating to the job-seeking request is allowed to be viewed by even a terminal other than the terminal which transmits the job-offer requirements.

According to the first aspect of the present invention, there is provided a human resources employment system for acquiring job-offer requirements and conditions from a terminal linked to a local area network and for outputting the job-offer requirements and conditions to a terminal linked to an external network, wherein a job-seeking request and human resources information relating to the job-seeking request are acquired via the external network, and wherein the human resources information relating to the job-seeking request are provided to the terminal linked to the local area network so as to be viewed by a terminal other than the terminal which transmits the job-offer requirements.

According to the first aspect of the present invention, there is provided a recording medium containing human resources employment processing that includes a job-offer-information acquiring step for acquiring job-offer requirements and conditions from a terminal linked to a local area network, a job-offer-information providing step for outputting the job-offer requirements and conditions to a terminal linked to an external network, an application accepting step for acquiring a job-seeking request and human resources information relating to the job-seeking request via the external network, and a job-seeking-information providing step for providing the human resources information relating to the job-seeking request to the terminal linked to the local area network wherein in the job-seeking-information providing step, the human resources information relating to the job-seeking request is allowed to be viewed by even a terminal other than the terminal which transmits the job-offer requirements.

According to the second aspect of the present invention, there is provided a human resources employment method including a job-offer-information acquiring step for acquiring job-offer requirements and conditions from a terminal linked to a local area network, a job-offer-information providing step for outputting the job-offer requirements and conditions to a terminal linked to an external network, an application accepting step for acquiring a job-seeking request and human resources information relating to the job-seeking request via the external network, and a job-seeking-information providing step for providing the human resources information relating to the job-seeking request to the terminal linked to the local area network. In the job-seeking-information providing step, an application by a person and a job-seeking request by an enterprise are accepted and information on a person belonging to the enterprise is acquired.

According to the second aspect of the present invention, there is provided a human resources employment system for acquiring job-offer requirements and conditions from a terminal linked to a local area network and for outputting the job-offer requirements and conditions to a terminal linked to an external network. The human resources employment system includes an application-accepting unit for acquiring a job-seeking request and human resources information relating to the job-seeking request via the external network, and a job-seeking-information providing unit for providing the human resources information to the terminal linked to the local area network. The application-accepting unit accepts an application by a person and a job-seeking request by an enterprise and acquires information on a person belonging to the enterprise.

According to the second aspect of the present invention, there is provided a recording medium containing human resources employment processing that includes a job-offer-information acquiring step for acquiring job-offer requirements and conditions from a terminal linked to a local area network, a job-offer-information providing step for outputting the job-offer requirements and conditions to a terminal linked to an external network, an application accepting step for acquiring a job-seeking request and human resources information relating to the job-seeking request via the external network, and a job-seeking-information providing step for providing the human resources information relating to the job-seeking request to the terminal linked to the local area network. In the job-seeking-information providing step, an application by a person and a job-seeking request by an enterprise are accepted and information on a person belonging to the enterprise is acquired.

According to the third aspect of the present invention, there is provided a human resources employment method including a job-offer-information acquiring step for acquiring job-offer requirements and conditions from a terminal linked to a local area network, a job-offer-information providing step for outputting the job-offer requirements and conditions to a terminal linked to an external network, an application accepting step for acquiring a job-seeking request and human resources information relating to the job-seeking request via the external network, and a job-seeking-information providing step for providing the human resources information relating to the job-seeking request to the terminal linked to the local area network. In the job-seeking-information providing step, selection on the human resources information relating to the job-seeking request is accepted, and the job-offer requirements and conditions are set corresponding to the accepted selection.

According to the third aspect of the present invention, there is provided a job-offer method for outputting job-offer requirements and conditions to a server linked to a network so that introduction of human resources is performed. The job-offer method comprises the steps of accepting human resources information on a job-seeking request via the network, accepting selection on the human resources information, and setting the job-offer requirements and conditions to correspond to the selection.

According to the third aspect of the present invention, there is provided a human resources employment system for acquiring job-offer requirements and conditions from a terminal linked to a local area network and for outputting the job-offer requirements and conditions to a terminal linked to an external network, wherein a job-seeking request and human resources information relating to the job-seeking request are acquired via the external network, the human resources information is provided to the terminal linked to the local area network, and selection on the human resources information is accepted, and the job-offer requirements and conditions are set corresponding to the selection.

According to the third aspect of the present invention, there is provided a human resources employment system for outputting job-offer requirements and conditions to a server linked to a network so that introduction of human resources is performed, wherein human resources information on a job-seeking request is acquired via the network, selection on the human resources information is accepted, and the job-offer requirements and conditions are set correspond to the selection.

According to the third aspect of the present invention, there is provided a recording medium containing human resources employment processing that includes a job-offer-information acquiring step for acquiring job-offer requirements and conditions from a terminal linked to a local area network, a job-offer-information providing step for outputting the job-offer requirements and conditions to a terminal linked to an external network, an application accepting step for acquiring a job-seeking request and human resources information relating to the job-seeking request via the external network, and a job-seeking-information providing step for providing the human resources information relating to the job-seeking request to the terminal linked to the local area network. In the job-seeking-information providing step, selection on the human resources information is accepted, and the job-offer requirements and conditions are set corresponding to the selection.

According to the third aspect of the present invention, there is provided a recording medium containing human resources employment processing that comprises the steps of accepting provision of human resources information on a job-seeking request via a network, accepting selection on the human resources information, and setting job-offer requirements and conditions to correspond to the selection.

According to the fourth aspect of the present invention, there is provided a human resources employment method including a job-offer-information acquiring step for acquiring job-offer requirements and conditions from a terminal linked to a local area network, a job-offer-information providing step for outputting the job-offer requirements and conditions to a terminal linked to an external network, an application accepting step for acquiring a job-seeking request and human resources information relating to the job-seeking request via the external network, an examination step for examining the job-seeking request, an examination-result notification step for posting the result of the examination in the examination step to a terminal used relating to the job-seeking request, and a job-seeking-information providing step for, based on the result of the examination in the examination step, providing the human resources information to the terminal linked to the local area network. In the application accepting step, an identification code and a password are posted by acquiring the job-seeking request and the human resources information. In the examination-result notification step, when the terminal used relating to the job-seeking request uses the ID code and the password to perform accessing, a corresponding response is posted as the result of the examination.

According to the fourth aspect of the present invention, there is provided a human resources employment method including a job-offer-information acquiring step for acquiring job-offer requirements and conditions from a terminal linked to a local area network, a job-offer-information providing step for outputting the job-offer requirements and conditions to a terminal linked to an external network, an application accepting step for acquiring a job-seeking request and human resources information relating to the job-seeking request via the external network, an examination step for examining the job-seeking request, and a job-seeking-information providing step for, based on the result of the examination in the examination step, providing the human resources information to the terminal linked to the local area network. The examination step comprises a recording step for recording, in at least a predetermined period, a job-seeking request which has failed in the examination and human resources information on the job-seeking request, and an examination-by-comparison step for examining the job-seeking request by comparing the job-seeking request with the record generated in the recording step

According to the fourth aspect of the present invention, there is provided a human resources employment system for acquiring job-offer requirements and conditions from a terminal linked to a local area network and for outputting the job-offer requirements and conditions to a terminal linked to an external network. The human resources employment system includes an application-accepting unit for acquiring a job-seeking request and human resources information relating to the job-seeking request via the external network, an examination unit for examining the job-seeking request, an examination-result notification unit for posting the result of the examination by the examination unit to a terminal relating to the job-seeking request, and a job-seeking-information providing unit for, based on the result of the examination by the examination unit, providing the human resources information to the terminal linked to the local area network. The application-accepting unit posts an identification code and a password by acquiring the job-seeking request and the human resources information, and an examination-result notification unit posts, when being accessed using the identification code and the password, a corresponding response as the result of the examination.

According to the fourth aspect of the present invention, there is provided a human resources employment system for acquiring job-offer requirements and conditions from a terminal linked to a local area network and for outputting the job-offer requirements and conditions to a terminal linked to an external network. The human resources employment system includes an application-accepting unit for acquiring a job-seeking request and human resources information relating to the job-seeking request via the external network, an examination unit for examining the job-seeking request, and a job-seeking-information providing unit for, based on the result of the examination by the examination unit, providing the human resources information to the terminal linked to the local area network. In the examination unit, a job-seeking request which has failed in the examination and human resources information on the job-seeking request are recorded in at least a predetermined period, and the job-seeking request is examined by comparing the job-seeking request with the record.

According to the fourth aspect of the present invention, there is provided a recording medium containing human resources employment processing that includes a job-offer-information acquiring step for acquiring job-offer requirements and conditions from a terminal linked to a local area network, a job-offer-information providing step for outputting the job-offer requirements and conditions to a terminal linked to an external network, an application accepting step for acquiring a job-seeking request and human resources information relating to the job-seeking request via the external network, an examination step for examining the job-seeking request, an examination-result notification step for posting the result of the examination in the examination step to a terminal used relating to the job-seeking request, and a job-seeking-information providing step for, based on the result of the examination in the examination step, providing the human resources information to the terminal linked to the local area network. In the application accepting step, an identification code and a password are posted by acquiring the job-seeking request and the human resources information, and in the examination-result notification step, when the terminal used relating to the job-seeking request uses the ID code and the password to perform accessing, a corresponding response is posted as the result of the examination.

According to the fourth aspect of the present invention, there is provided a recording medium containing human resources employment processing that includes a job-offer-information acquiring step for acquiring job-offer requirements and conditions from a terminal linked to a local area network, a job-offer-information providing step for outputting the job-offer requirements and conditions to a terminal linked to an external network, an application accepting step for acquiring a job-seeking request and human resources information relating to the job-seeking request via the external network, an examination step for examining the job-seeking request, and a job-seeking-information providing step for, based on the result of the examination in the examination step, providing the human resources information to the terminal linked to the local area network. The examination step comprises a recording step for recording, in at least a predetermined period, a job-seeking request which has failed in the examination and human resources information on the job-seeking request, and an examination-by-comparison step for examining the job-seeking request by comparing the job-seeking request with the record generated in the recording step.

According to the first aspect of the present invention, by not only externally providing job-offer information but also internally providing job-offer information, a job-offering enterprise develops job-offer activities on the Internet by itself, so that a system can be effectively utilized.

According to the second aspect of the present invention, by accepting not only applications from persons but also job-seeking requests from enterprises, and acquiring information on persons belonging to the enterprises, for example, when a job-offering enterprise develops job-offer activities on the Internet by itself, a job-offer system can be effectively utilized.

According to the third aspect of the present invention, by setting job-offer conditions by considering job-seeking human resources information, for example, when a job-offering enterprise develops job-offer activities on the Internet by itself, a system is smoothly operated, whereby rapid job-offer activities can be performed.

According to the fourth aspect of the present invention, by issuing a password and an identification code when each application is made, and notifying each applicant of an examination result in response to accessing using the password and the identification code, or by recording failure results and comparing each application with the record in order to determine success or failure, for example, when a job-offering enterprise develops job-offer activities on the Internet by itself, a system can be effectively utilized.

The invention will be further described by way of example only, with reference to the accompanying drawings, in which:-
Fig. 1 is a block diagram showing a human resources employment system according to an embodiment of the present invention;
Fig. 2 is a schematic flowchart-included illustration briefly showing processing in the human resources employment system shown in Fig. 1;
Fig. 3 is a schematic illustration showing the structure of a job-offer-form table T1;
Fig. 4 is a schematic illustration showing the structure of an applicant table T2;
Fig. 5 is a schematic illustration showing the structure of an enterprise table T3;
Fig. 6 is a schematic flowchart showing processing by each terminal;
Fig. 7 is an illustration of a top menu screen displayed in the processing shown in Fig. 6;
Fig. 8 is an illustration of a menu screen displayed in the personnel department processing (SP19) shown in Fig. 6;
Fig. 9 is a detailed flowchart showing the personnel department processing (SP19) shown in Fig. 6;
Fig. 10 is an illustration of a job-offer-form entry screen displayed in the personnel department processing (SP19) shown in Fig. 6;
Fig. 11 is an illustration of a template for use in operation on the job-offer-form entry screen shown in Fig. 10;
Fig. 12 is an illustration of a screen for confirming submission of a job-offer form;
Fig. 13 is a flowchart showing processing for approving the job-offer form submitted by operation on the screen shown in Fig. 12;
Fig. 14 is an illustration of an approval-awaiting-case list screen;
Fig. 15 is an illustration of a job-offer form selected using the approval-awaiting-case list screen shown in Fig. 14;
Fig. 16 is an illustration of a job-offer-form approval screen for approving the job-offer form shown in Fig. 15;
Fig. 17 is an illustration of a screen for requesting resubmission of a job-offer form;
Fig. 18 is a flowchart showing processing on a job-offer form relating to temporary storage and resubmission;
Fig. 19 is an illustration of a screen displaying a list of job-offer forms to be processed by the processing shown in Fig. 18;
Fig. 20 is an illustration of a displayed job-offer form to be resubmitted;
Fig. 21 is an illustration of a confirmation screen for resubmission;
Fig. 22 is an illustration of a job-offer form for an inquiry;
Fig. 23 is a flowchart showing processing for the viewing of a human resources list;
Fig. 24 is an illustration of a human resources list screen;

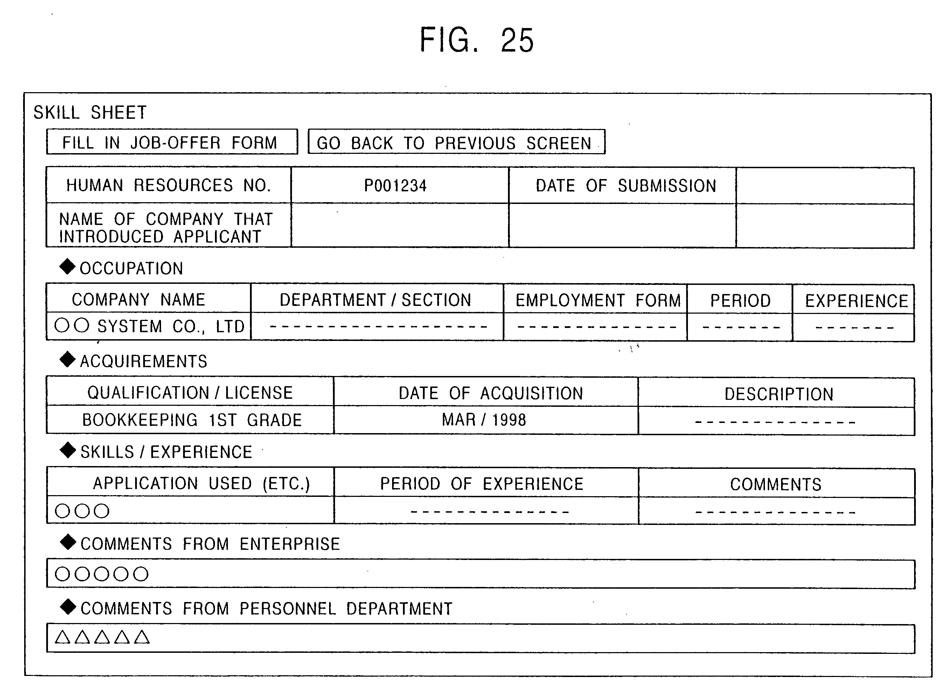

Fig. 25 is an illustration of a skill sheet displayed by operation on the human resources list screen;
Fig. 26 is an illustration of a job-offer form created using the human resources list;
Fig. 27 is an illustration of a displayed enterprise list;
Fig. 28 is an illustration of a menu screen displayed in personnel department processing;
Fig. 29 is a flowchart showing processing in accordance with the menu screen shown in Fig. 28;
Fig. 30 is an illustration of a screen displaying a list of cases awaiting acceptance by a personnel department;
Fig. 31 is an illustration of a screen displaying a job-offer form opened from the list shown in Fig. 30;
Fig. 32 is a flowchart showing processing for approving a job-offer form;
Fig. 33 is an illustration of a screen displaying a list of cases awaiting approval by a personnel department in which the list is displayed in the processing shown in Fig. 32;
Fig. 34 is an illustration of a personnel-department-approval screen;
Fig. 35 is a flowchart showing processing for editing a job-offer form;
Fig. 36 is an illustration of a job-offer-form editing list displayed in the processing shown in Fig. 35;
Fig. 37 is an illustration of a job-offer-form editing screen;
Fig. 38 is a flowchart showing processing performed by selecting another item of the menu screen shown in Fig. 28;
Fig. 39 is an illustration of a screen displayed when the JOB-OFFER FORM STATUS item is selected;
Fig. 40 is a flowchart showing external terminal processing in the applicant terminal 4A or 4B shown in Fig. 1;
Fig. 41 is an illustration of a main menu screen displayed in the processing shown in Fig. 40;
Fig. 42 is a flowchart showing enterprise information processing;
Fig. 43 is an illustration of a screen displayed when the INFORMATION ON ENTERPRISE OF ENTERPRISE item is selected on the main menu screen shown in Fig. 41;
Fig. 44 is an illustration of a screen displaying offer job types;
Fig. 45 is an illustration of a screen displaying an application screen;
Fig. 46 is an illustration of a screen for confirmation of registration items on the application screen shown in Fig. 45;
Fig. 47 is an illustration of a screen displayed after the application using the confirmation screen shown in Fig. 46;
Fig. 48 is a flowchart showing processing executed when the SEND SKILL SHEET item is selected on the screen shown in Fig. 43;
Fig. 49 is an illustration of a screen displayed when the SEND SKILL SHEET item is selected on the screen shown in Fig. 43;
Fig. 50 is an illustration of a screen for entry into a skill sheet for technology-related position;
Fig. 51 is an illustration of a template for use in the entry into a skill sheet;
Fig. 52 is an illustration of a skill sheet confirmation screen;
Fig. 53 is an illustration of a screen displayed after the application using the confirmation screen shown in Fig. 52;
Fig. 54 is a flowchart showing processing executed when the INFORMATION ON EMPLOYMENT OF PERSON item is selected on the menu screen shown in Fig. 41;
Fig. 55 is an illustration of a screen displayed in the processing shown in Fig. 54;
Fig. 56 is an illustration of a screen displaying job offers by job types;
Fig. 57 is an illustration of a screen displaying the details of software development as a job type;
Fig. 58 is an illustration of a screen displayed when one item shown in Fig. 57 is selected;
Fig. 59 is an illustration of a screen which allows application based on an employment form;
Fig. 60 is an illustration of a screen displayed when the REGULAR MEMBER item is selected on the screen shown in Fig. 59;
Fig. 61 is an illustration of a screen displaying a voluntary application form;
Fig. 62 is a flowchart showing processing that is executed by the applicant terminal 4A or 4B when it inquires about the result of registration of a person's application;
Fig. 63 is a flowchart showing management processing;
Fig. 64 is an illustration of a screen displayed in the processing shown in Fig. 63;
Fig. 65 is a flowchart showing enterprise application processing that is executed when the ACCEPTANCE OF APPLICATION FROM ENTERPRISE item is selected on the screen shown in Fig. 64;
Fig. 66 is an illustration of a screen displaying a list of enterprises awaiting acceptance;

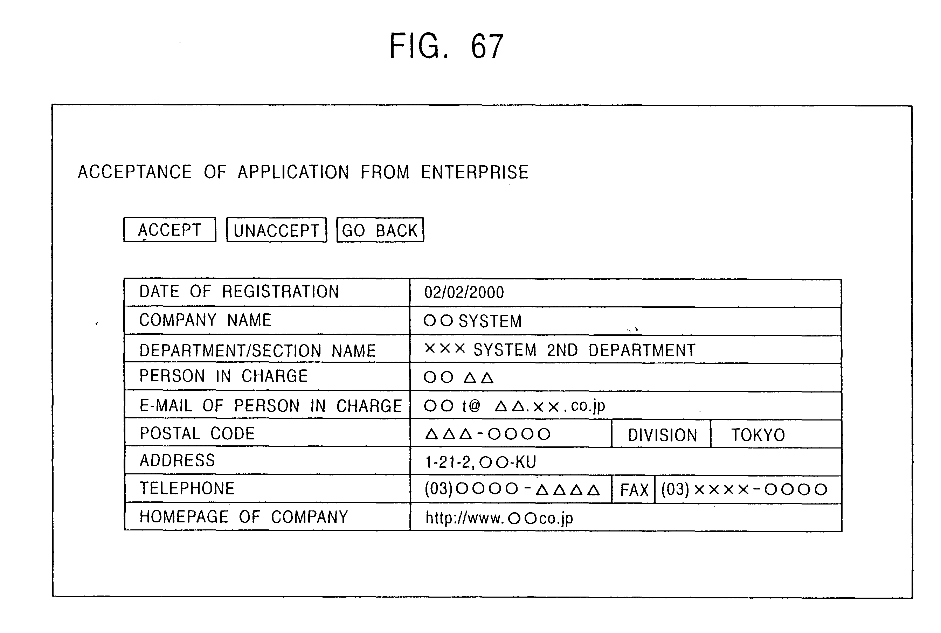

Fig. 67 is an illustration of a screen displayed when one item of the list shown in Fig. 66 is selected;
Fig. 68 is a flowchart showing enterprise-application examination processing on the accepted enterprise, which is executed when the EXAMINATION OF ENTERPRISE item is selected on the menu screen shown in Fig. 64;
Fig. 69 is an illustration of a screen displaying a list of applicant enterprises;
Fig. 70 is an illustration of a screen displaying examination of an application from an enterprise;
Fig. 71 is an illustration of a screen for confirmation of the examination shown in Fig. 70;
Fig. 72 is a flowchart showing primary examination processing that is executed by the management server 2A (Fig. 1) when an applicant as a person applies;
Fig. 73 is a flowchart showing applicant-accepting processing;
Fig. 74 is an illustration of a screen displaying a list of applicants awaiting acceptance of their applications;
Fig. 75 is an illustration of an application information screen displayed when an item of the list (Fig. 74) is selected;
Fig. 76 is a flowchart showing document examination processing for examining each accepted application based on entered information;
Fig. 77 is an illustration of a screen displaying a list of cases awaiting document examination;
Fig. 78 is an illustration of a screen displayed when an applicant is examined;
Fig. 79 is a flowchart showing interview-awaiting-case processing executed when the INTERVIEW AWAITING item is selected on the screen shown in Fig. 64;
Fig. 80 is an illustration of a screen displaying a list of interview-awaiting cases;
Fig. 81 is an illustration of an interview record screen displaying details entered in an application form;
Fig. 82 is a flowchart showing registration-to-human-resources-list processing that is executed when the HUMAN RESOURCES REGISTRATION item is selected on the screen shown in Fig. 64;
Fig. 83 is an illustration of a list-from screen for human resources registration;
Fig. 84 is an illustration of a human-resources-registration screen displayed when an item of the list (Fig. 83) is selected;
Fig. 85 is a flowchart showing human-resources-list-editing processing that is executed when the EDITING HUMAN RESOURCES LIST item is selected on the screen shown in Fig. 64;
Fig. 86 is an illustration of a human-resources-list editing screen;
Fig. 87 is an illustration of a list editing screen; and
Fig. 88 is an illustration of a completion screen displayed when the processing (Fig. 82) is completed.

Embodiments of the present invention are described below with reference to the accompanying drawings.

### 1. Construction of Embodiment

### 1-1. Entire Construction

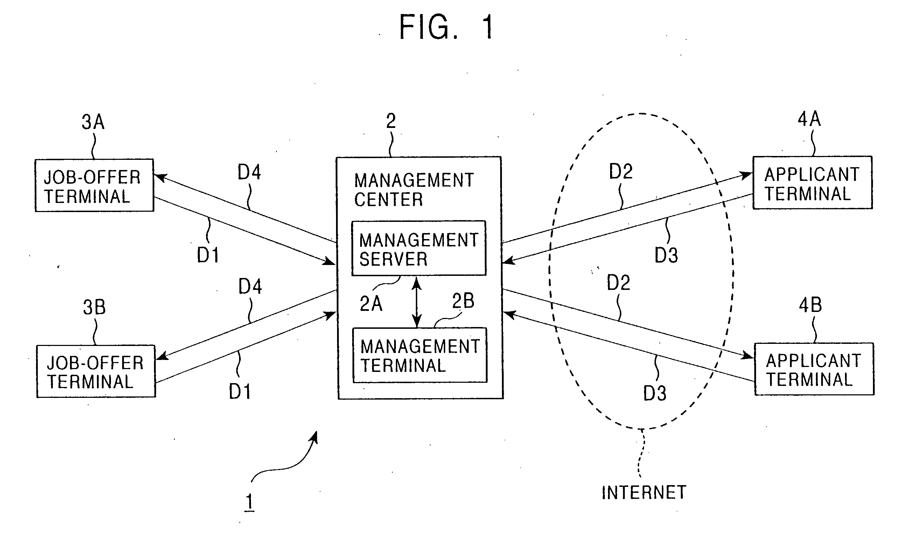

Fig. 1 is a block diagram of a human resources employment system 1 according to an embodiment of the present invention. In the human resources employment system 1, a management center 2 acquires job-offer requests and job-offer conditions from job-offer terminals 3A and 3B (provided in, for example, a job-offering department) that are connected to an in-company local area network, and provides the job-offer requests and conditions to each of applicant terminals 4A and 4B which are connected to the Internet as an external network. The management center 2 receives an application from each of the applicant terminals 4A and 4B, notifies the job offering department of the application, and also provides the application to other job-offer terminals (not shown) in the form of a list.

As described above, the human resources employment system 1 is designed to make it possible for each department to employ persons independently by using the application list provided to each department and to create information job-offer information by taking the application list into consideration. The job-offer terminals 3A and 3B are personal computers provided in each in-company department that offers jobs. The job-offer terminals 3A and 3B are connected to the management center 2 by the in-company network. The applicant terminals 4A and 4B are personal computers of persons and enterprises accessing the Internet.

In the above-described construction, the human resources employment system 1 can perform integrated management of job-offer information and employment-seeking information and can effectively use these types of information, so that the human resources employment system 1 can be smoothly and be effectively operated by using these types of information. In others words, since application information can be fed back to the job-offering department, and determination on each application for a job offer can be made, each department can perform job-offer activities by itself. As a result, right human resources can be rapidly secured. When each department performs job-offer activities by itself, fed-back application details can be utilized for the job-offer activities, and human resources can be secured flexibly changing job-offer conditions, etc. The period required up to employment can be shortened compared with a conventional case. In addition, by managing the job-offer activities in a management department, a possibility of releasing confidential information related to research and development is avoided by limiting specific particularities of a professional field according to a job offer, and human resources most suitable for employment can be employed.

In the human resources employment system 1, the management center 2 includes a management server 2A provided, for example, in a personnel department, and a management terminal 2B that accesses the management server 2A. The management center 2 receives internal job-offer information D1 as job-offer requirements and conditions from the job-offer terminals 3A and 3B, and creates external job-offer information D2. The internal job-offer information D1 includes specific job-offer-related conditions that must be kept confidential. The external job-offer information D2 is job-offer information obtained by modifying the confidential conditions into general job-offer conditions.

When the applicant terminal 4A or 4B sends a job-seeking application in response to provision of the external job-offer information D2, or a person uses the applicant terminal 4A or 4B to send a job-seeking application by the person's intention, the management center 2 accepts the application in the form of application information D3 having a predetermined format. The management center 2 notifies the job-offering department of the application in order to start the examination of the application for employment, and creates and provides a human resources list D4 based on the application information D3 to the job-offer terminals 3A and 3B. The human resources list D4 is a list of persons who desire to be employed, and is created based on the application information D3 in accordance with predetermined conditions. Accordingly, the management center 2 enables the job-seeking information to be viewed by the job-offering department and other departments, and the internal job-offer information D1 can be created considering the human resources list D4. Similarly, the management center 2 receives an enterprise's application for business, and provides this application to the job-offer terminals 3A and 3B.

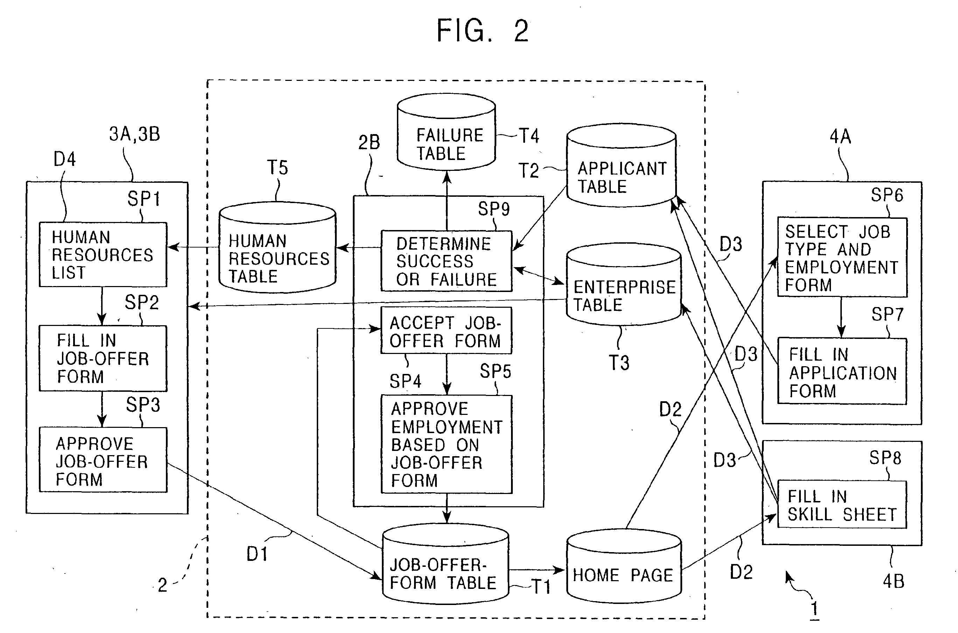

Fig. 2 is a schematic flowchart-included illustration of an example of the processing performed in each block shown in the human resources employment system 1. Each processing step (described below) is executed by performing data exchange between the management center 2 and each terminal, or is executed while displaying the result of processing performed by the management server 2. However, for brevity of description, each terminal is mainly described below.

A job-offer form that describes job-offer requirements and conditions is created and stored in the management server 2A by the job-offer terminal 3A or 3B. At this time, in step SP1, in accordance with operation by a person in charge, the job-offer terminal 3A or 3B displays the human resources list D4 by accessing the management server 2A. In step SP2, the job-offer terminal 3A or 3B accepts entry into a job-offer form from the person in charge by considering the human resources list D4. In step SP3, job-offer terminal 3A or 3B accepts permission of the job-offer form from the head of each department. The job-offer form is a display screen on the human resources employment system 1, which corresponds to a job-offer form as a document, or is corresponding information. The job-offer form indicates specific job-offer conditions.

In step SP4, the management terminal 2B in the management center 2 accepts the job offer based on the internal job-offer information D1 by accepting the job-offer form approved by each department. In step SP5, the management terminal 2B approves the job-offer form. The management server 2A uses the internal job-offer information D1 to create a job-offer-form table T1. Based on the approval by the management terminal 2B, home-page updating is performed in accordance with information in the job-offer-form table T1, and the accessing of the home page by the applicant terminal 4A transmits the external job-offer information D2.

At this time, when providing a corresponding home page in response to a request of the applicant terminal 4A, the external job-offer information D2 is provided to the applicant terminals 4A and 4B in the form of classified job types and employment forms, as'indicated by step SP6, and in step SP7, by transmitting a predetermined application form in which necessary items are filled, the application information D3 is accepted. Then, the management center 2 accepts an application for each job offer and an application that is not for each job offer, which is a so-called "voluntary application" in which the applicant applies for a position without considering employment forms and conditions.

In the above-described successive steps, an enterprise's application for business to be entrusted is accepted by the applicant terminal 4B. In the acceptance, the registration of human resources relating to the business is also accepted by submitting a skill sheet, as indicated by step SP8. This enables the human resources employment system 1 to perform integrated management of, together with information on ordinary persons who seek jobs, information on human resources for use in business about an application for business to be entrusted, whereby the human resources employment system 1 can be effectively utilized.

The management center 2 creates an applicant table T2 based on the application information D3, which relates to enterprises and persons, and creates an enterprise table T3 in response to applications from the enterprises. Determination of success or failure by the management terminal 2B in step SP9 determines whether an enterprise or a person has succeeded or failed in examination for employment. When an application from a person who has succeeded is directed to a job offer, the management center 2 notifies the corresponding job-offering department of the success and receives approval for employment. Applications other than applications from persons who are employed (i.e., successful) as described are recorded in the human resources table T5, and applications from persons who have failed are recorded in a failure table T4. When being accessed by the job-offer terminal 3A or 3B, the management center 2 provides the human resources list D4 from the human resources table T5, and sets information on enterprises that have succeeded so that it is accessible by the job-offer terminal 3A or 3B.

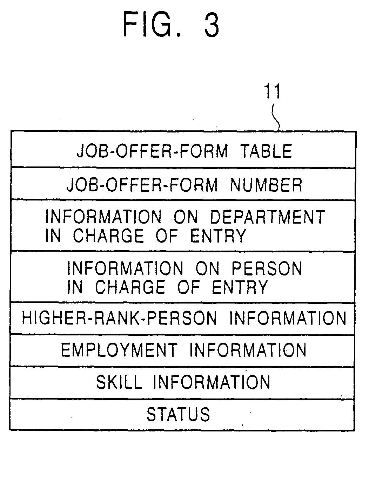

Each of the job-offer-form table T1, the applicant table T2, etc., is composed of the internal job-offer information D1, which is processed in the form of a database, etc. Fig. 3 shows one record of the job-offer-form table T1. A "job-offer-form number" is assigned to the job-offer-form table T1, corresponding to each job offer generated by the job-offer terminal 3A or 3B. The job-offer-form table T1 also includes "information on department in charge of entry" for specifying a department that (filled in the job-offer form) offers a job, "information on person in charge of entry" for specifying a person who filled in the job-offer form, "higher-rank-person information" for specifying a person at a rank higher than the person who filled, "employment information" relating to an employment form, an employment period, etc., "skill information" relating to required skills such as qualifications and licenses, "status" indicated by various flags indicating processing states such as states having approvals, and information (not shown) on the date and time of each processing.

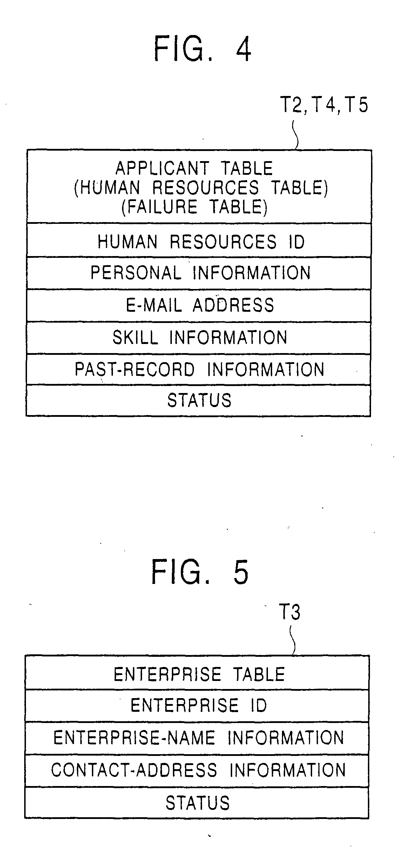

Fig. 4 shows one record of the applicant table T2. A "human resources ID" as an identifier is assigned to the application table T2 so as to correspond to each person who applies for a job offer, including a person described in a skill sheet submitted from an enterprise (applicant) to which business is entrusted. In the applicant table T2, which corresponds to each applicant, information such as address, name, date of a birth, and telephone number is recorded as "personal information", with an "e-mail address". The applicant table T2 also includes "skill information" including desired job type, technical field, and obtained licenses, "past-record information" including academic background, and "status" indicated by various flags indicating processing-progress states such as completion of an interview and determination of success or failure, and information (not shown) on the date and time of each processing. When the applicant table T2 belongs to an enterprise that has succeeded in examination, an identification code for the enterprise is assigned, whereby the other types of information are recorded so as to identify a person for business to be entrusted. In the case of an application for a job offer, the types of information are recorded so that the corresponding job-offer form can be specified.

The failure table T4 and the human resources table T5 each have a record arrangement similar to that of the applicant table T2, except for different status settings.

Fig. 5 shows one record of the enterprise table T3. An "enterprise ID" is assigned as an enterprise identifier to the enterprise table T3 so as to correspond to each enterprise that applies for entrustment of business. When an enterprise passes an examination, the enterprise ID is set to represent a value having significance. The enterprise table T3 also includes "enterprise-name information", "contact-address information", "status" indicated by various flags indicating processing-progress states such as success or failure in examination, and information (not shown) on the date and time of each processing.

In response to an access request from the job-offer terminal 3A or 3B, the applicant terminal 4A or 4B, or the management terminal 2B, the management server 2A provides a predetermined menu screen. By executing consecutive processes corresponding to items of the menu screen, the management server 2A provides various types of information from the tables T1 to T5 in accordance with operations by each of the terminals 2B to 4B, and creates and updates each of the tables T1 to T5 using the internal job-offer information D1, the application information D3, etc., which are input from the terminals 2B to 4B.

### 1-2. Processing in Terminal

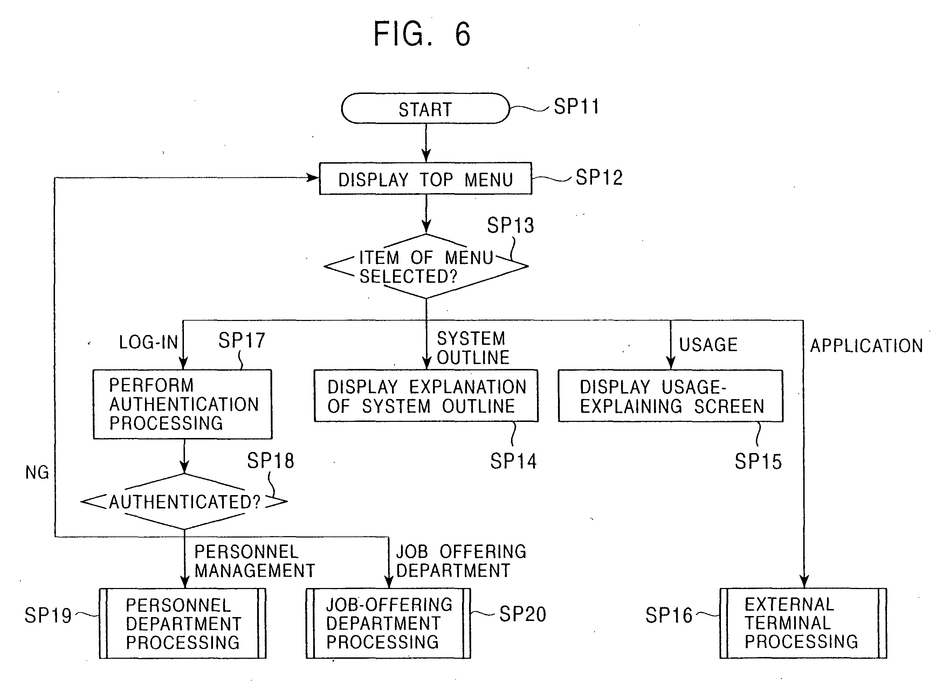

Fig. 6 shows a flowchart illustrating processing performed by each of the terminals 2B to 4B. In accordance with the operation of a browser, each terminal executes the processing by tracing a link set in each item of the menu and accesses the management server 2A so that the display screen is switched, and notifies the management server 2A of operation corresponding to each item selected from the menu. In each step of the processing shown in Fig. 6, the management server 2A restricts operations performed by some of the terminals 2B to 4B so that some items of the menu cannot be selected.

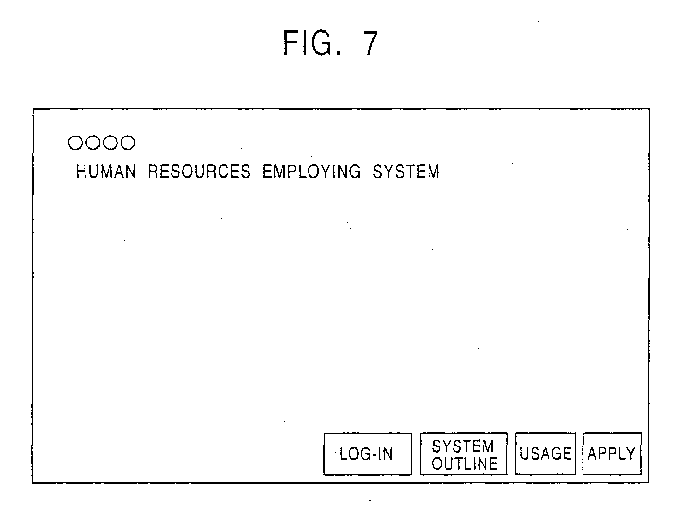

When accessing the management server 2A, each terminal proceeds from step SP11 to step SP12, and displays a predetermined top menu. On the top menu, the name of the enterprise operating the human resources employment system is displayed at the top, as shown in Fig. 7, and the system name follows. On the bottom, a menu composed of "LOG-IN", "SYSTEM OUTLINE", "USAGE", and "APPLY" items is displayed.

After displaying the top menu, each terminal proceeds to step SP13, and determines which item is selected on the menu. Each terminal executes each process by tracing a link provided for the selected item. Specifically, when the SYSTEM OUTLINE item is selected, each terminal proceeds to step SP14, and displays an explanation about a system outline. When the USAGE item is selected, each terminal proceeds to step SP15, and displays an explanation about usage of the human resources employment system 1.

When the APPLY item is selected, the applicant terminal 4A or 4B proceeds to step SP16, and executes external terminal processing. The external terminal processing corresponds to processing for accessing by the applicant terminal 4A or 4B in which, by accessing the management server 2A, the external job-offer information D2 is acquired and displayed, and the application information D3 is accepted.

When the LOG-IN item is selected, the management server 2A or the job-offer terminal 3A or 3B proceeds to step SP17 for displaying a predetermined input screen, and accepts input of user's password and ID. The management server 2A or the job-offer terminal 3A or 3B notifies the management server 2A of the input password and ID, and executes authentication processing. When the authentication processing determines that the user, who is operating the terminal, is not a person permitted as a job-offer-information provider to access the human resources employment system 1, the management server 2A or the job-offer terminal 3A or 3B proceeds back to step SP12. Conversely, when the user is a person permitted as a job-offer-information provider for access, and is a personnel department member, the management server 2A or the job-offer terminal 3A or 3B proceeds to step SP19, and executes personnel department processing (described later). Also, when it is determined that the user is a person permitted as a job-offer-information provider for access but is not a personnel department member, the user is considered as a member of a job-offering department that requires job offering. In this case, the management server 2A or the job-offer terminal 3A or 3B proceeds to step SP20, and executes job-offering department processing (described later).

### 1-2-1. Job-offering Department Processing

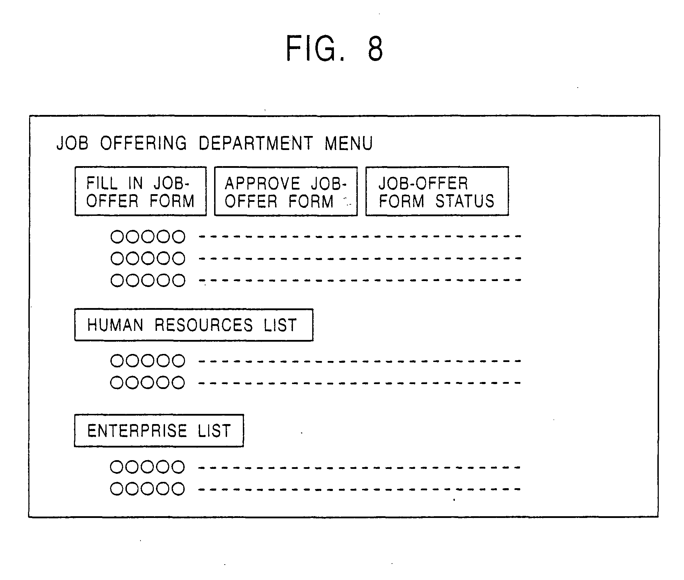

Fig. 8 is a plan view showing a job-offering department menu screen displayed in the job-offering department processing. The job-offering department processing is executed by the management server 2A or the job-offer terminal 3A or 3B. The management server 2A or the job-offer terminal 3A or 3B initially displays the job-offering department menu screen. On the job-offering department menu, a screen title is displayed at the top, and "FILL IN JOB-OFFER FORM", "APPROVE JOB-OFFER FORM", and "JOB-OFFER-FORM STATUS" items follow. Below these, explanations about the items are displayed. Below the explanations, a menu called "HUMAN RESOURCES LIST" is displayed with an explanation. At the bottom, a menu called "ENTERPRISE LIST" is displayed with an explanation.

The FILL IN JOB-OFFER FORM item is provided for opening a job-offer-form entry screen for creating a job-offer form, which corresponds to step SP2 in Fig. 2. The APPROVE JOB-OFFER FORM item is provided for opening an approval screen for approving a job offer, which corresponds to step SP3 in Fig. 2. The JOB-OFFER-FORM STATUS item is provided for confirming a processing state of each job-offer and for restarting interrupted processing. The HUMAN RESOURCES LIST item is provided for opening the human resources list recorded in the human resources table T5, and the ENTERPRISE LIST item is provided for opening a list of enterprises that apply for entrustment of business which is recorded in the human resources table T5.

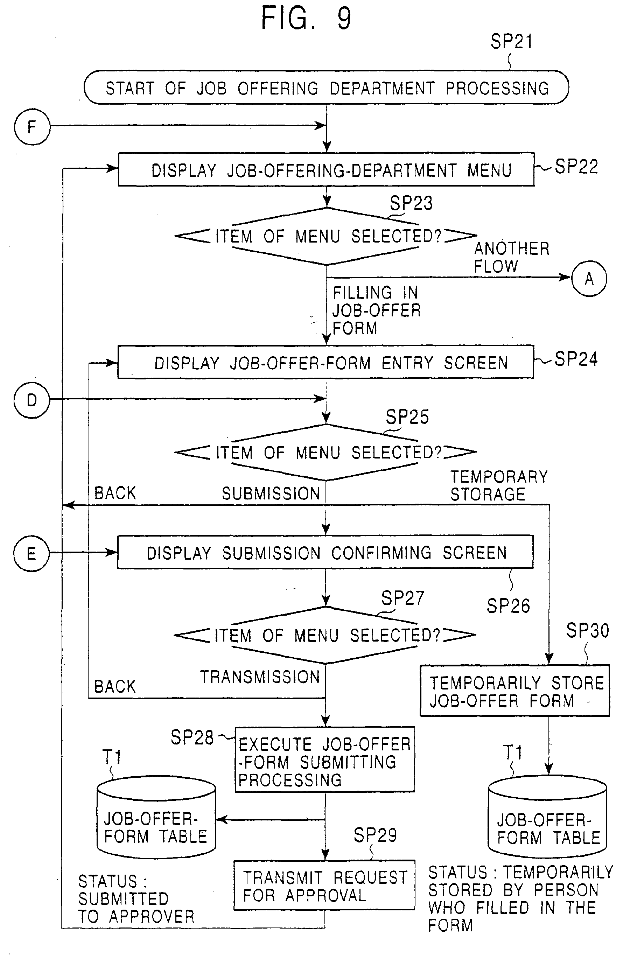

As shown in Fig. 9, on starting the job-offering department processing, the terminal 2B, 3A, or 3B proceeds from step SP21 to step SP22, and displays the job-offering department menu screen (Fig. 8). In step SP23, the terminal 2B, 3A, or 3B determines which item of the menu is selected. When the FILL IN JOB-OFFER FORM item is selected, the terminal 2B, 3A, or 3B proceeds from step SP23 to step SP24, and displays a job-offer-form entry screen.

On the job-offer-form entry screen, a screen title is displayed at the top, and "SUBMIT", "STORE TEMPORARILY", and "GO BACK TO PREVIOUS SCREEN" items follow. Below these items, "EMPLOYMENT FORM" is displayed, and two choices are displayed: one choice indicates whether determination of the employment form is completely entrusted to the personnel department; and the other choice indicates whether the employment form is designated. When the other choice is selected, specific employment forms are displayed in a selectable form. In addition, an information entry section for a job offering side is displayed, and a specific condition entry section is displayed below the information entry section.

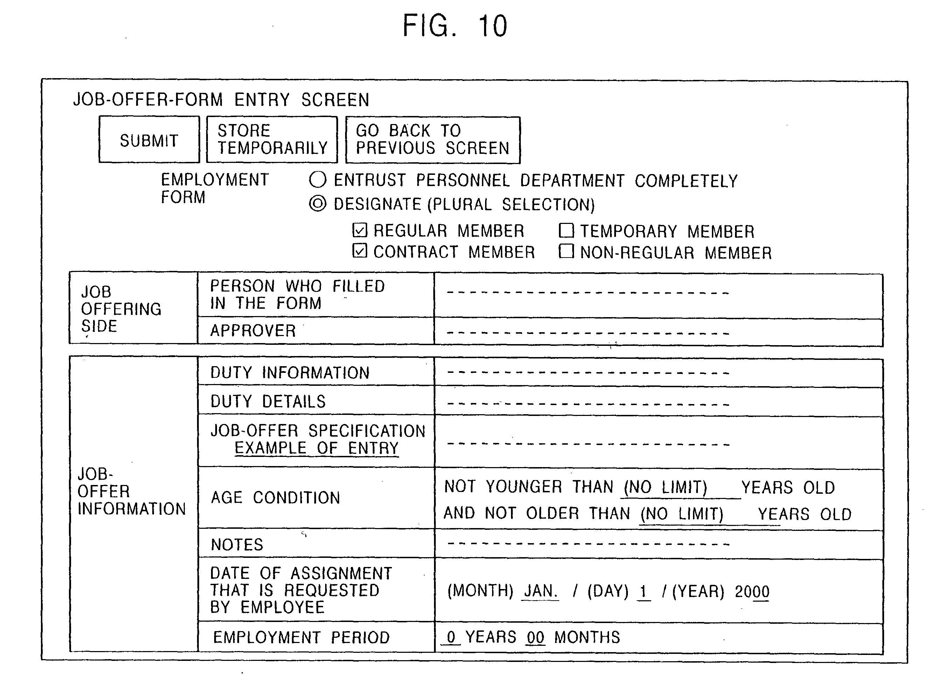

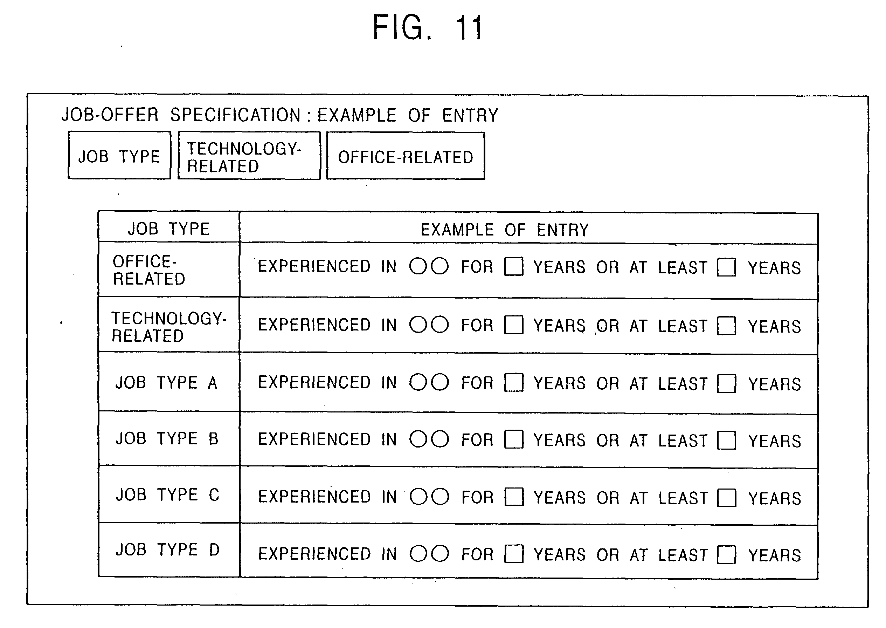

In the displayed information entry section for the job offering side, items that respectively specify a person who filled in the form and an approver, and communications to the person who filled and the approver can be entered. In the displayed specific condition entry section, items such as duty details and an age can be entered. Among the items in the specific condition entry section in Fig. 10, by clicking on "EXAMPLE OF ENTRY" item in "JOB-OFFER SPECIFICATION" item, a template that indicates the example of entry is displayed, as shown in, for example, Fig. 11. By entering necessary details in the template and operating a mouse, entry of regular types of information can be completed. Accordingly, in the human resources employment system 1, by performing entry into the job-offer form, job-offer requirement and conditions can be posted from the job-offering department to the personnel department. In the entry into the job-offer form, even an inexperienced person who fills in the form can easily and securely create a job-offer form, using the template.

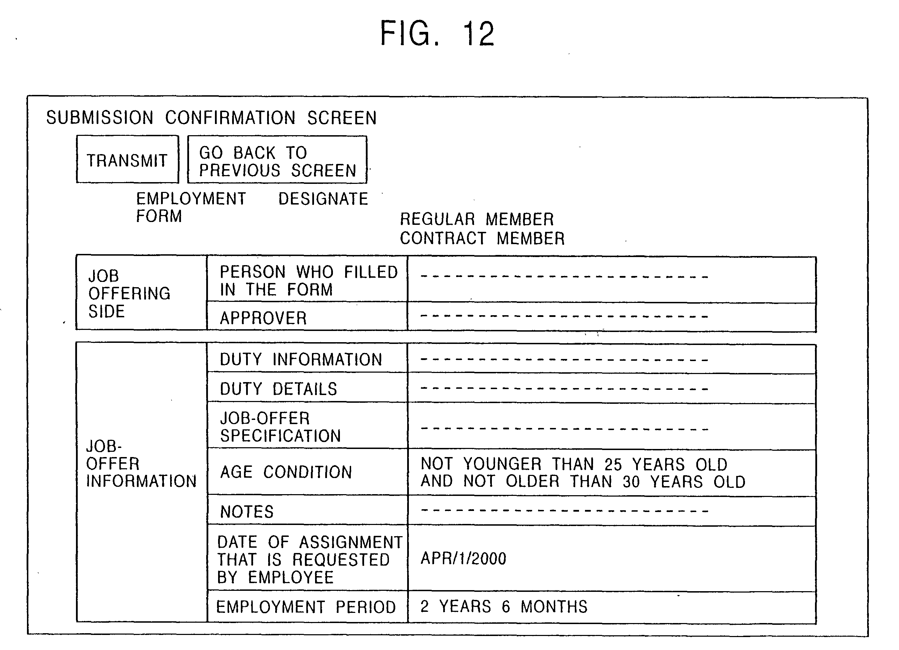

In step SP25, the terminal 2B, 3A, or 3B determines which item of the menu is selected. When the SUBMIT item is selected, the terminal 2B, 3A, or 3B proceeds from step SP25 to step SP26, and displays the submission confirmation screen shown in Fig. 12. On the submission confirmation screen, a screen title is displayed at the top, and "TRANSMIT" and "GO BACK TO PREVIOUS SCREEN" items follow. Below these items, details entered on the job-offer-form entry screen are displayed.

In step SP27, the terminal 2B, 3A, or 3B determines which item of the menu on the submission confirmation is selected. When the GO BACK TO PREVIOUS SCREEN item is selected, the terminal 2B, 3A, or 3B proceeds back from step SP27 to step SP24, and switches the displayed screen to the job-offer-form entry screen as the previous screen so that correction can be made for deficiency of details, etc. When the TRANSMIT item is selected, the terminal 2B, 3A, or 3B proceeds from step SP27 to step SP 28, and executes job-offer-form summating processing. At this time, the terminal 2B, 3A, or 3B posts the details entered into the job-offer form as the internal job-offer information D1 to the management server 2A, and records this job-offer information in the job-offer-form table T1. In this case, the management server 2A sets the status so that it indicates that the job-offer form is submitted to the approver and that a department for successive processing is specified. The management server 2A also sets a job-offer-form number and records the job-offer information in the job-offer-form table T1. Accordingly, in the human resources employment system 1, the subsequent processing is entrusted to the designated approver and the personnel department as the subsequent processing department.

When completing the job-offer-form submitting processing, the terminal 2B, 3A, or 3B proceeds to step SP29, and notifies a person in charge in the personnel department and the approver of the submission of the job-offer form by transmitting e-mail. After that, the terminal 2B, 3A, or 3B proceeds back to step SP22. In the human resources employment system 1, the transmission of e-mail allows the subsequent processing to be rapidly executed.

When the STORE TEMPORARILY item is selected on the job-offer-form entry screen (Fig. 10), the terminal 2B, 3A, or 3B proceeds from step SP25 to step SP30, and executes temporary storage of the job-offer form. At this time, the terminal 2B, 3A, or 3B posts the details entered into the job-offer form as the internal job-offer information D1 to the management server 2A, with a request for temporary storage. This records this job-offer information in the job-offer-form table T1. In this case, the management server 2A records the job-offer information in the job-offer-form table T1 after setting a job-offer-form number and also setting the status so that it indicates that a person who filled in the job-offer form in the job-offering department has requested the job-offer form to be temporarily stored and so that a department for successive processing is specified. Accordingly, in the human resources employment system 1, the temporarily stored job-offer form can be called again for restarting the consecutive processing, as required.

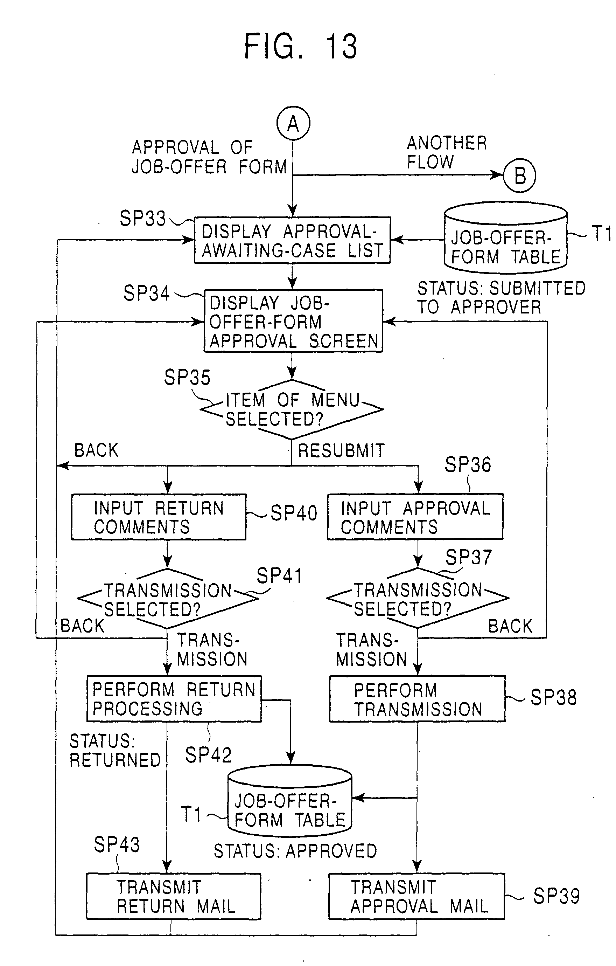

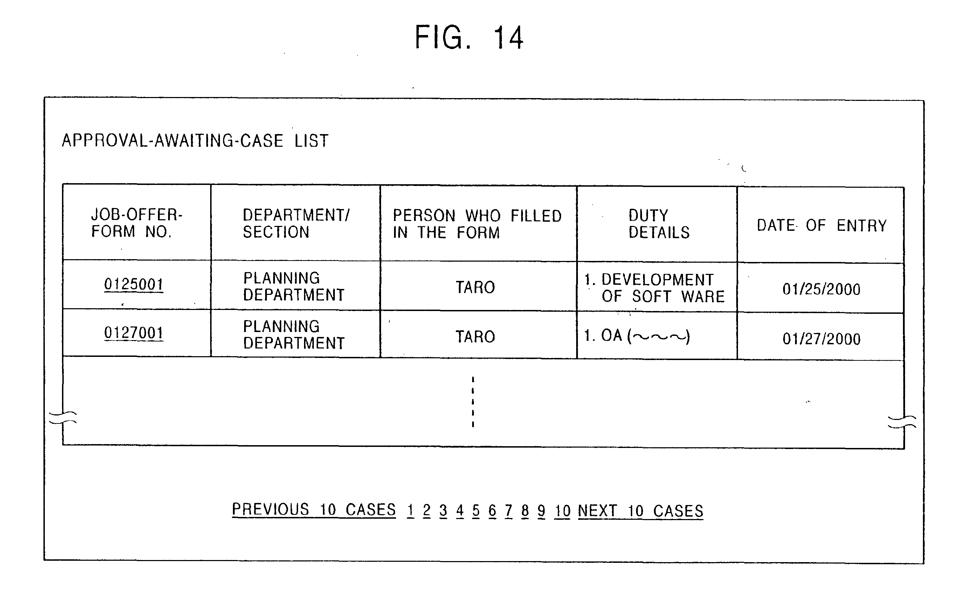

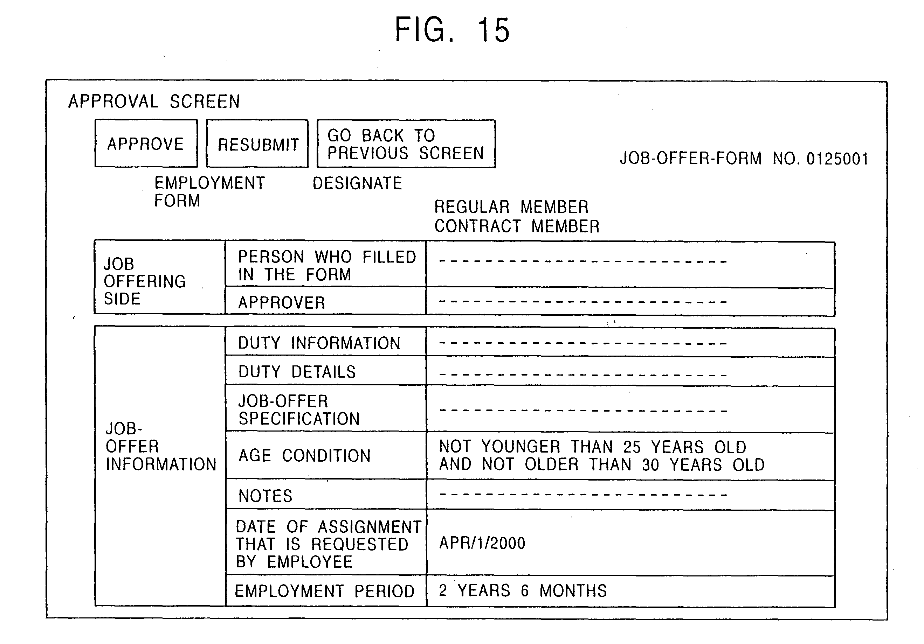

On the job-offering department menu screen (Fig. 8), when the APPROVE JOB-OFFER FORM item is selected, the terminal 2B, 3A, or 3B proceeds from step SP23 (Fig. 9) to step SP33 in Fig. 13, and displays the approval-awaiting case list shown in Fig. 14. The approval-awaiting case list is obtained such that, among pieces of internal job-offer information D1 recorded in the job-offer-form table T1 which are based on job-offer forms, those having a status that is set to indicate that the job-offer form is submitted to the approver are processed in the form of a list. Each item of the list includes the job-offer-form number of each job-offer form and a job-offering department. When one job-offer-form number is clicked on, the terminal 2B, 3A, or 3B proceeds to step SP34, and displays the job-offer-form approval screen shown in Fig. 15 by loading internal job-offer information D1 corresponding to this job-offer-form number from the job-offer-form table T1.

As shown in Fig. 15, on the job-offer-form approval screen, a screen title is displayed at the top, and "APPROVE", "RESUBMIT", and "GO BACK TO PREVIOUS SCREEN" items follow. In addition, a job-offer-form number, an employment form entered in the job-offer form, etc., are displayed. In step SP35, the terminal 2B, 3A, or 3B determines which item is selected on the job-offer-form approval screen. When the GO BACK TO PREVIOUS SCREEN item is selected, the terminal 2B, 3A, or 3B proceeds back from step SP35 to step SP33, and switches the display screen to the approval-awaiting-case list screen.

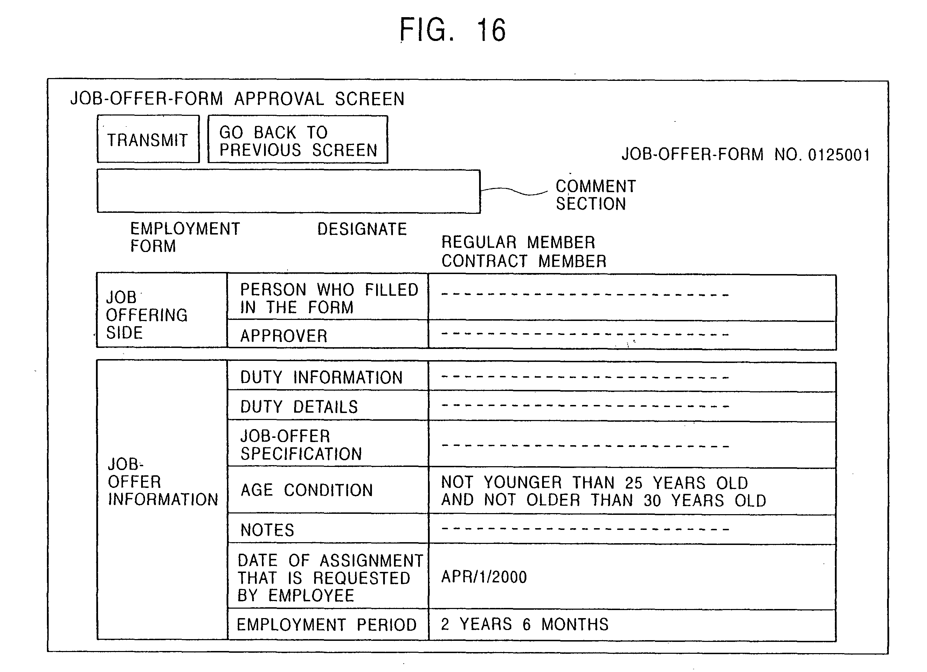

When the APPROVE item is selected, the terminal 2B, 3A, or 3B proceeds from step SP35 to step SP36, and displays the job-offer-form approval screen shown in Fig. 16. The job-offer-form approval screen includes a comment section, and the terminal 2B, 3A, or 3B accepts entry into the comment section. In step SP37, the terminal 2B, 3A, or 3B determines which item is selected on the job-offer-form approval screen. When the GO BACK TO PREVIOUS SCREEN item is selected, the terminal 2B, 3A, or 38 proceeds back from step SP37 to step SP34, and switches the display screen to the job-offer-form approval screen. When the TRANSMIT item is selected, the terminal 2B, 3A, or 3B proceeds to step SP38, and transmits the internal job-offer information D1 to the management server 2A. This allows the management server 2A to updates, based on the items set on the job-offer-form approval screen, information on the corresponding job-offer-form number recorded in the job-offer-form table T1, and sets the status so that it indicates that the job-offer form is approved. After completing transmission, the terminal 2B, 3A, or 3B proceeds to step SP39, and posts acceptance of the job-offer form to a person in charge of acceptance in the personnel department and the person who filled in the job-offer form by transmitting e-mail. After that, the terminal 2B, 3A, or 3B proceeds back to step SP33.

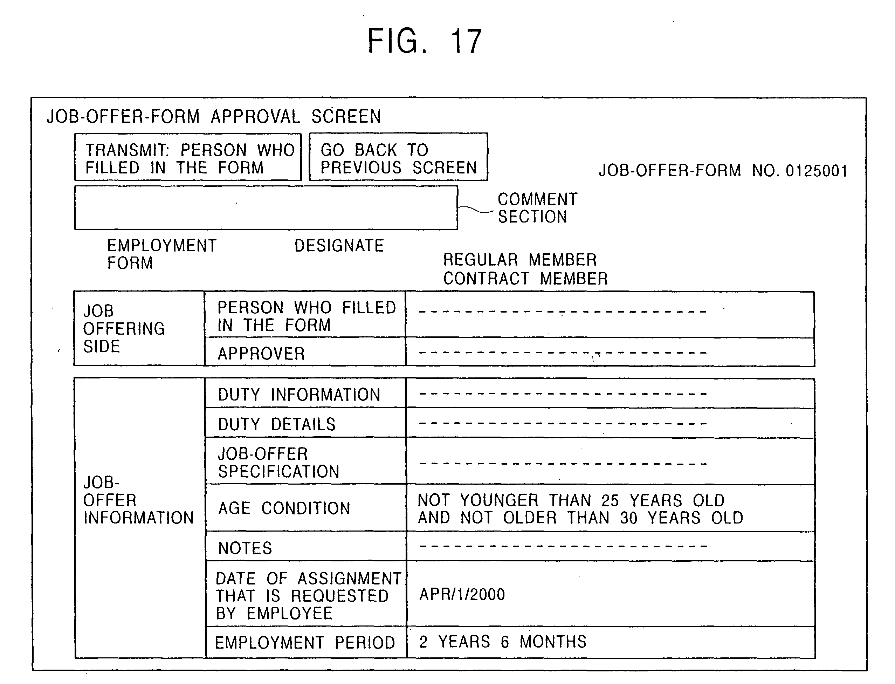

When the RESUBMIT item is selected on the job-offer-form approval screen (Fig. 16), the terminal 2B, 3A, or 3B proceeds from step SP35 to step SP40, and displays the resubmission requesting screen shown in Fig. 17. The resubmission requesting screen is generated by adding to a comment section to the approval screen (Fig. 15), and changing its menu and title. The terminal 2B, 3A, or 3B accepts entry into the comment section. In step SP41, the terminal 2B, 3A, or 3B determines which item is selected on the resubmission requesting screen. When the GO BACK TO PREVIOUS SCREEN item is selected, the terminal 2B, 3A, or 3B proceeds back from step SP41 to step SP34, and switches the display screen to the job-offer-form approval screen. When "TRANSMIT PERSON WHO FILLED IN THE FORM" item is selected on the resubmission requesting screen, the terminal 2B, 3A, or 3B proceeds to step SP42, and executes return processing.

In the return processing, the terminal 2B, 3A, or 3B updates, based on the items set on the resubmission requesting screen, information on the corresponding job-offer-form number which is recorded in the job-offer-form table T1, and sets the status so that it indicates that the job-offer form is returned. After completing transmission, the terminal 2B, 3A, or 3B proceeds to step SP43, and posts the return of the job-offer form to the person who filled in the job-offer form by transmitting e-mail. After that, the terminal 2B, 3A, or 3B proceeds back to step SP33.

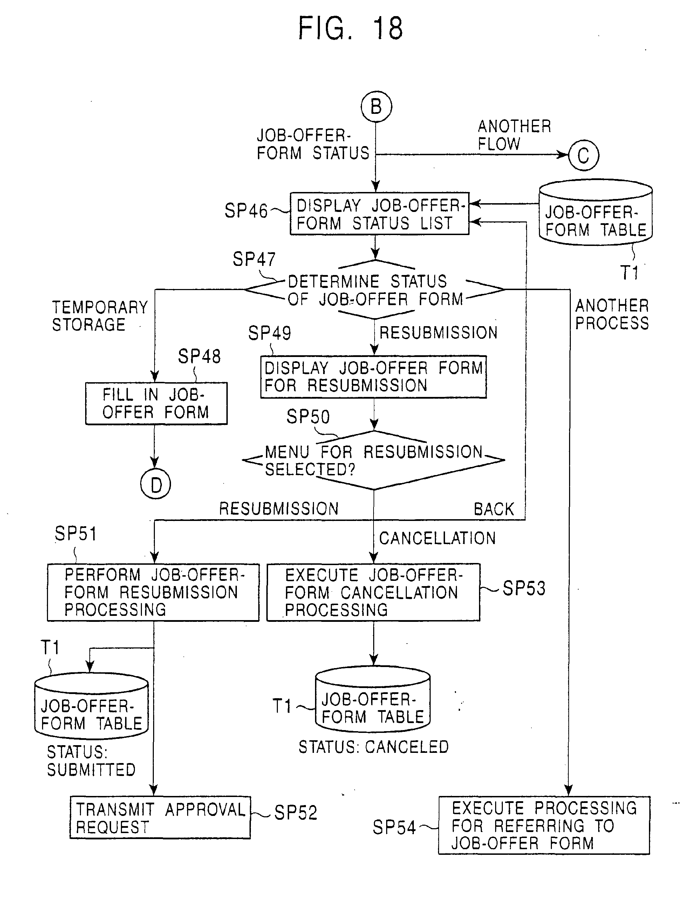

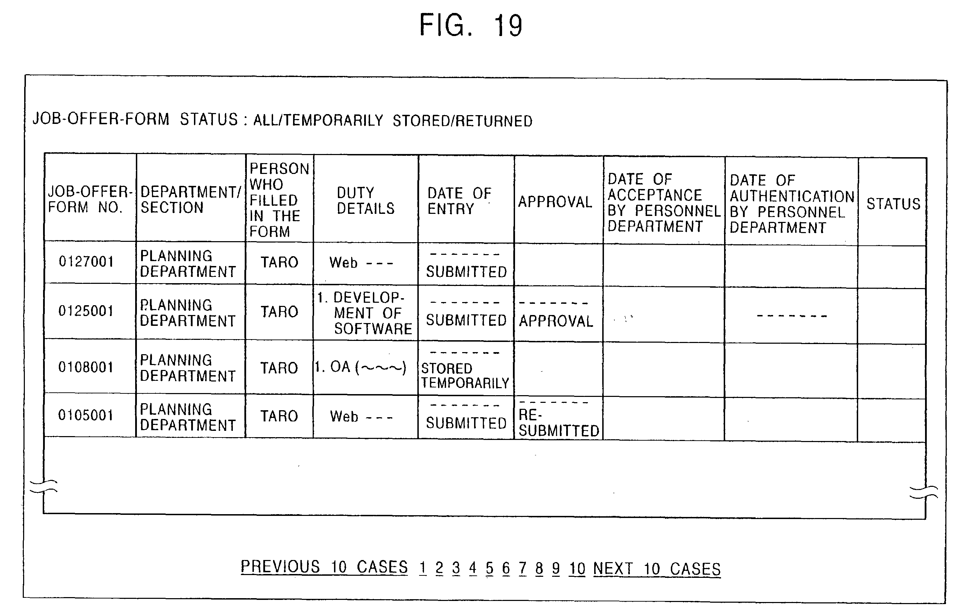

When the JOB-OFFER-FORM STATUS item is selected on the job-offering-department menu screen (Fig. 8), the terminal 2B, 3A, or 3B proceeds from step SP23 to step SP46 shown in Fig. 18, and displays the job-offer-form status (list) screen shown in Fig. 19. The job-offer-form status screen is generated by processing job-offer forms recorded in the job-offer-form table T1 in the form of a list. On the job-offer-form status screen, a screen title is displayed at the top, and "ALL", "TEMPORARILY STORED", and "RETURNED" items follow that are used for selectively displaying the job-offer forms. Each of the displayed job-offer forms includes a job-offer-form number, the name of a department that filled in the form, the name of a person who filled in the form, a date of acceptance by the personnel department, information on whether the job-offer form is approved, and a date of authentication by the personnel department, which enables the processing state of the job-offer form to be confirmed.

The terminal 2B, 3A, or 3B displays all the job-offer forms recorded in the job-offer-form table T1 on an initial screen in the order of their job-offer-form numbers, excluding cancelled job-offer forms. However, the TEMPORARILY STORED or RETURNED item is selected, job-offer forms that are temporarily stored in the job-offer-form table T1, or job-offer forms that are returned by an approving department are displayed in the form of a list by performing, in the management server 2A, filtering based on the status of each job-offer form.

When the job-offer-form number of one of the job-offer forms is clicked on by the user, in step SP47, the terminal 2B, 3A, or 3B detects the status of the clicked job-offer form. If the detected status indicates that the job-offer form is temporarily stored, the terminal 2B, 3A, or 3B proceeds from step SP47 to step SP48. In step SP48, the terminal 2B, 3A, or 3B displays the job-offer-form entry screen described using Fig. 10 and accepts entry into the job-offer form which has been interrupted, and proceeds to step SP25 (Fig. 9).

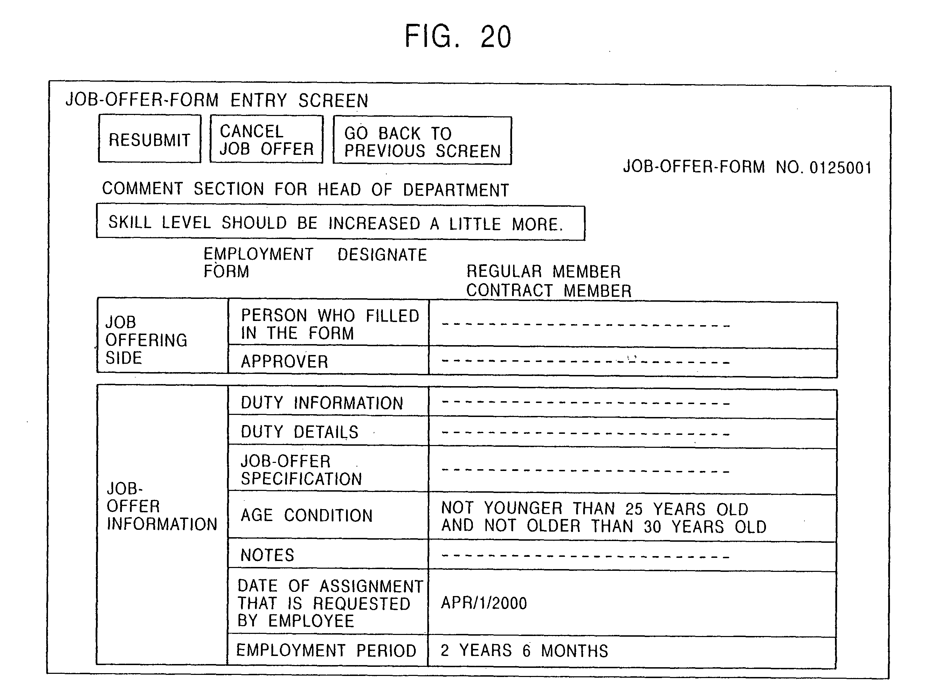

When a returned job-offer form whose status indicates resubmission is selected by the user, the terminal 2B, 3A, or 3B proceeds from step SP47 to step SP49, and displays the job-offer-form entry screen for resubmission that is shown in Fig. 20. On the job-offer-form entry screen for resubmission, a screen title is displayed at the top, and "RESUBMIT", "CANCEL JOB OFFER", and "GO BACK TO PREVIOUS SCREEN" items follow. In addition, a job-offer-form number, comments entered by the approver on the resubmission requesting screen, and job-offer details are displayed.

The terminal 2B, 3A, or 3B accepts, on the job-offer-form entry screen for resubmission, entry of job-offer conditions, etc. In step SP50, the terminal 2B, 3A, or 3B determines which item is selected by the user. If the RESUBMIT item is selected, the terminal 2B, 3A, or 3B proceeds from step SP50 to SP51, and executes job-offer-form resubmission processing. The job-offer-form resubmission processing is executed by changing, based on information changed by the user on the job-offer-form entry screen for resubmission, the details recorded in the job-offer-form table T1, and changing the status from an indication that the job-offer form is temporarily stored to an indication that the job-offer form has been submitted.

After completing the job-offer-form resubmission processing, the terminal 2B, 3A, or 3B proceeds to step SP52, and posts the resubmission of the job-offer form to the person in charge in the personnel department and the approver by transmitting e-mail. After that, terminal 2B, 3A, or 3B proceeds back to the predetermined menu screen.

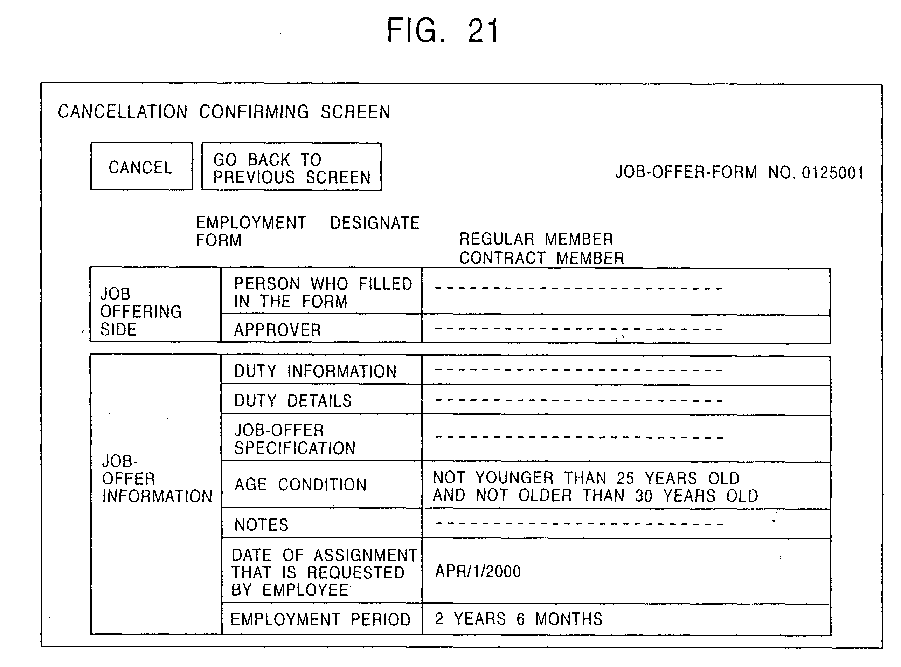

When the CANCEL JOB OFFER item is selected on the job-offer-form entry screen (Fig. 20), the terminal 2B, 3A, or 3B proceeds from step SP50 to step SP53, and executes job-offer-form cancellation processing. In step SP53, the terminal 2B, 3A, or 3B displays the cancellation confirming screen shown in Fig. 21. When "CANCEL" item is selected again, the terminal 2B, 3A, or 3B sets the status of the corresponding job-offer form recorded in the job-offer-form table T1, thereby canceling the job-offer requirement. The cancellation confirming screen is generated by changing the items of the job-offer-form entry screen (Fig. 20) for resubmission. When "GO BACK TO PREVIOUS SCREEN" item is selected on the cancellation confirming screen, the terminal 2B, 3A, or 3B switches the display screen to the job-offer-form entry screen (Fig. 20) for resubmission.

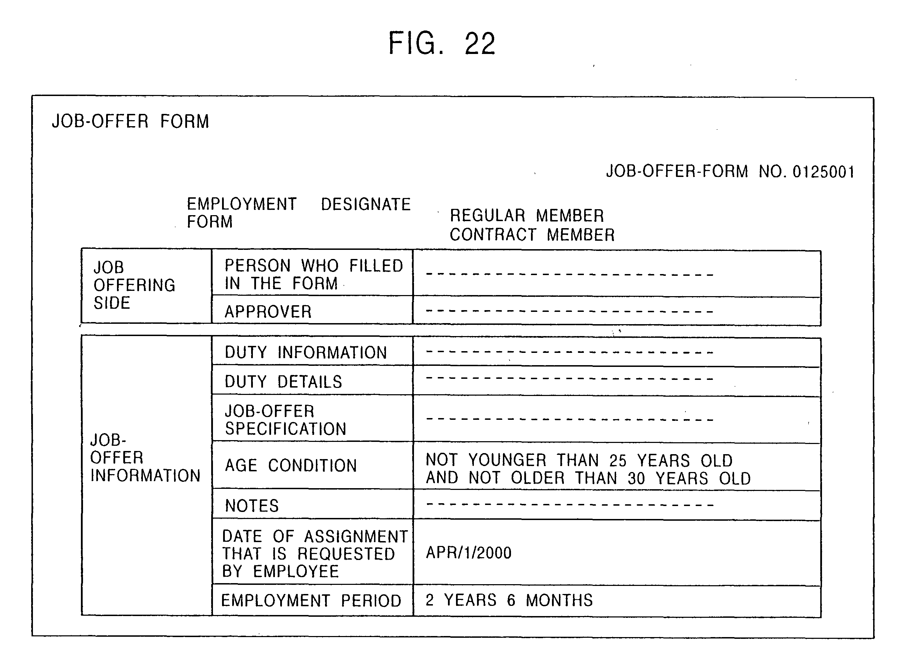

On the job-offer-form-status screen (Fig. 19), when a job-offer form other than one that is temporarily stored or returned is selected, terminal 2B, 3A, or 3B proceeds from step SP47 to step SP54, and executes processing for referring to the job-offer form. After that, the terminal 2B, 3A, or 3B proceeds back to the predetermined menu screen. The processing for referring to the job-offer form is executed, displaying the contents of the user-selected job-offer form shown in Fig. 22.

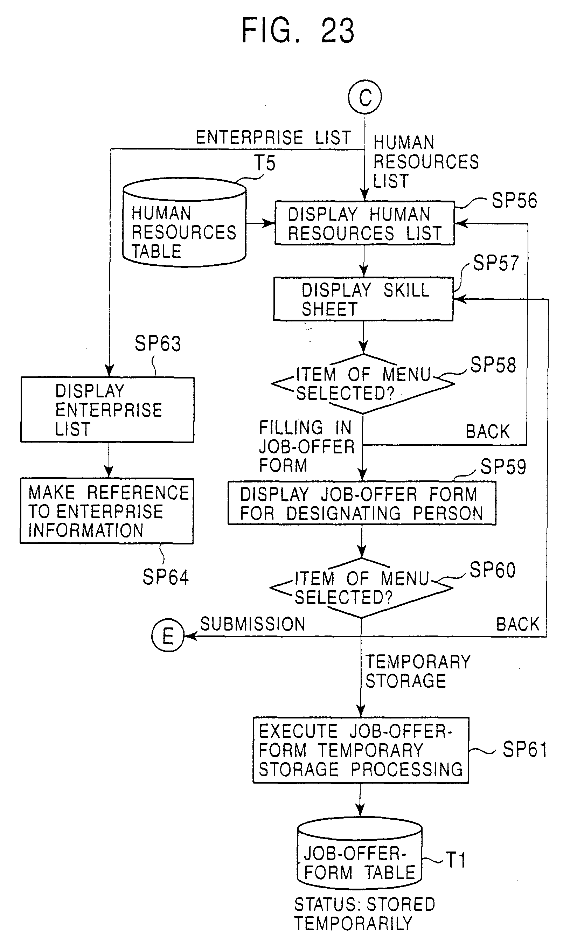

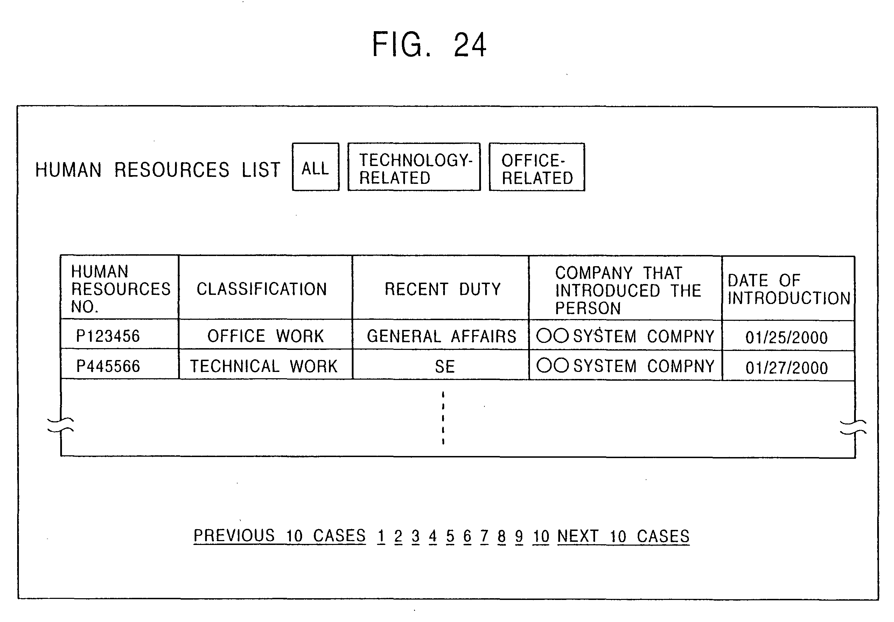

On the job offering department menu screen (Fig. 8), when the HUMAN RESOURCES LIST item is selected, the terminal 2B, 3A, or 3B proceeds from step SP23 (Fig. 9) to step SP56 shown in Fig. 23, and displays the human resources list shown in Fig. 24. On the human resources list, a screen title is displayed at the top, and "ALL", "TECHNOLOGY-RELATED", and "OFFICE-RELATED" items follow. Below these items, a list of applicants as human resources is displayed. The list is generated by displaying in the form a list those who passed interviews by the personnel department among interview-awaiting persons who have been registered as human resources. The initial screen displays all those recorded in the human resources table T5 in the order of their numbers. However, when either TECHNOLOGY-RELATED or OFFICE-RELATED item is selected on the human resources list screen, the list indicates persons in the selected field.

When the user clicks on one of human resources number on the human resources list screen (Fig. 24), terminal 2B, 3A, or 3B displays the skill sheet of the selected person in step SP57. The skill sheet indicates information such as skills of the corresponding person. On the skill sheet, its title is displayed at the top, and "FILL IN JOB-OFFER FORM" and "GO BACK TO PREVIOUS SCREEN" items follow. The skill sheet is displayed excluding personal information that specifies a person, such as an address, a name, and telephone number. This can protect applicant's privacy.

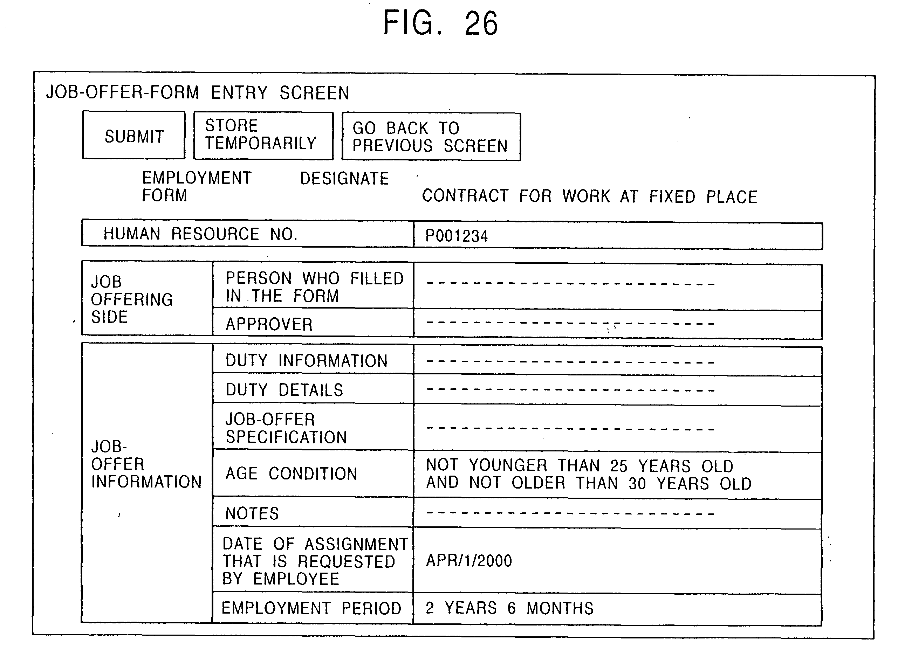

In step SP58, terminal 2B, 3A, or 3B determines which item is selected on the skill sheet. When the GO BACK TO PREVIOUS SCREEN item is selected, terminal 2B, 3A, or 3B proceeds back from step SP58 to SP56. When the FILL IN JOB-OFFER FORM item is selected, terminal 2B, 3A, or 3B proceeds from step SP58 to step SP59, and displays a job-offer-form entry screen (shown in Fig. 26) for specifying a person.

As shown in Fig. 26, on the job-offer-form entry screen, a screen title is displayed at the top, and "SUBMIT", "STORE TEMPORARILY", and "GO BACK TO PREVIOUS SCREEN" items follow. Below these items, a portion for setting the employment form is displayed, and the human resources number of the person selected by the user is displayed. In addition, a job-offer form is created and displayed that corresponds to details entered into the skill sheet of the selected person. The terminal 2B, 3A, or 3B uses the job-offer-form entry screen to accept input of various items. Based on the input items, the terminal 2B, 3A, or 3B specifies the registered person, and creates a job-offer form corresponding to the specified person. Fig. 26 shows a case in which the specified person is one of persons of the enterprises recorded on the enterprise table. The employment form in this case is entrustment of business, and the person is employed, for example, under contract for work at a fixed place.

In step SP60, the terminal 2B, 3A, or 3B determines which item is selected. When the GO BACK TO PREVIOUS SCREEN item is selected, the terminal 2B, 3A, or 3B proceeds back from step SP60 to step SP57, and displays the skill sheet. Conversely, when the SUBMIT item is selected by the user, terminal 2B, 3A, or 3B proceeds back from step SP60 to step SP26 (Fig. 9), and records, on the job-offer-form table T1, the job-offer form created from the human resources list. After that, terminal 2B, 3A, or 3B proceeds to subsequent approval possessing. This starts activities for employing the person specified by the job-offer form in the human resources employment system 1. When the STORE TEMPORARILY item is selected, terminal 2B, 3A, or 3B proceeds from step SP60 to step SP61, and executes temporary storage processing. The temporary storage processing is executed such that internal job-offer information D1 is created based on the details entered in the job-offer form and is posted to the management center 2 so that the job-offer form that is being created is temporarily stored in the job-offer table T1. At this time, a job-offer-form number is assigned to the job-offer form, and the status is set to indicate that the job-offer form is temporarily stored.

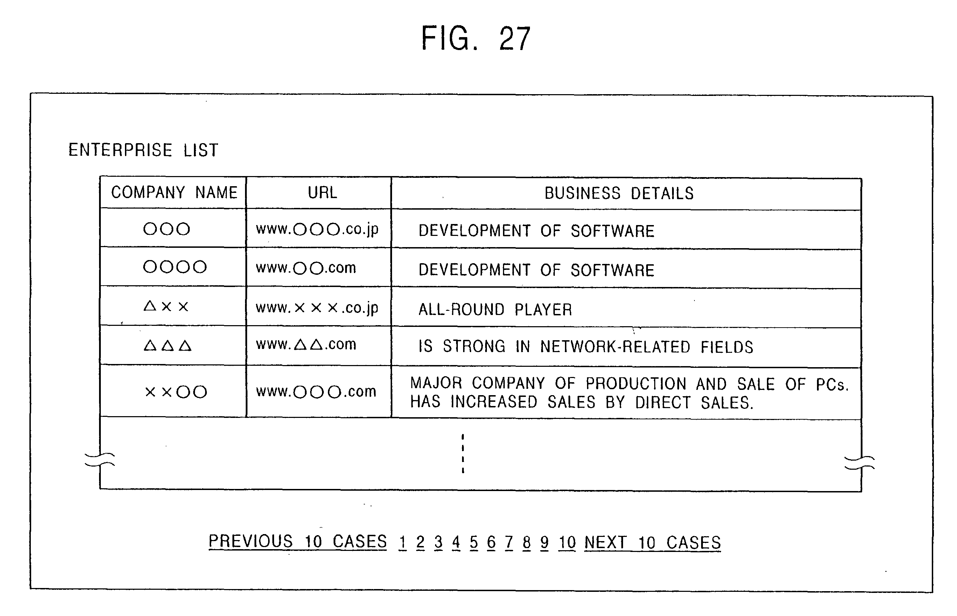

On the job-offering department menu screen (Fig. 8), when the ENTERPRISE LIST item is selected, terminal 2B, 3A, or 3B proceeds from step SP21 (Fig. 9) to step SP63, and displays the enterprise list. As shown in Fig. 27, the enterprise list indicates enterprises that are registered in the enterprise table T3 after passing examination. On the enterprise list, its title is displayed at the top, and company names, URLs, and business details follow.

When the user clicks on one of the displayed companies, terminal 2B, 3A, or 3B proceeds to step SP64. In step SP64, terminal 2B, 3A, or 3B accesses the home page of the company by tracing the corresponding URL, thereby inquiring about information on the company.

### 1-2-2. Job-offer-form Processing in Personnel Department

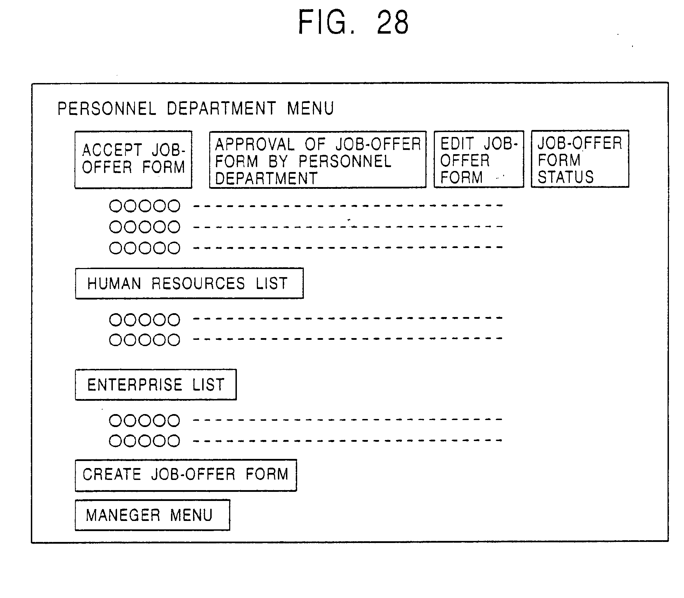

Fig. 28 shows a personnel department menu screen displayed in personnel department processing. The personnel department processing is executed mainly by the management terminal 2B or occasionally by the job-offer terminal 3A or 3B. Accordingly, in the following description, the management terminal 2B is mainly described. When starting the personnel department processing (Fig. 6), the management terminal 2B initially displays the personnel department menu screen (Fig. 28). On the personnel department menu screen, its title is displayed at the top, and "ACCEPT JOB-OFFER FORM", "APPROVAL OF JOB-OFFER FORM BY PERSONNEL DEPARTMENT", "EDIT JOB-OFFER FORM", and "JOB-OFFER FORM STATUS" items follow. Below these items, explanation messages are displayed. Subsequently, "HUMAN RESOURCES LIST", "ENTERPRISE LIST", items are displayed with explanation messages, and "CREATE JOB-OFFER FORM" and "MANAGER MENU" items follow.

The ACCEPT JOB-OFFER FORM item is used to perform processing for accepting by the personnel department the job-offer form created by the job-offering department. The APPROVAL OF JOB-OFFER FORM BY PERSONNEL DEPARTMENT item is used to approve, by the personnel department processing, the job-offer form accepted by the job-offer-form-accepting processing. The EDIT JOB-OFFER FORM item is used to edit the approved job-offer form. The HUMAN RESOURCES LIST item, the ENTERPRISE LIST item, and the CREATE JOB-OFFER FORM item are used to perform processes identical to the HUMAN RESOURCES LIST item, the ENTERPRISE LIST item, and the CREATE JOB-OFFER FORM item in the job-offering department. The MANAGER MENU item is used to manage the human resources employment system 1.

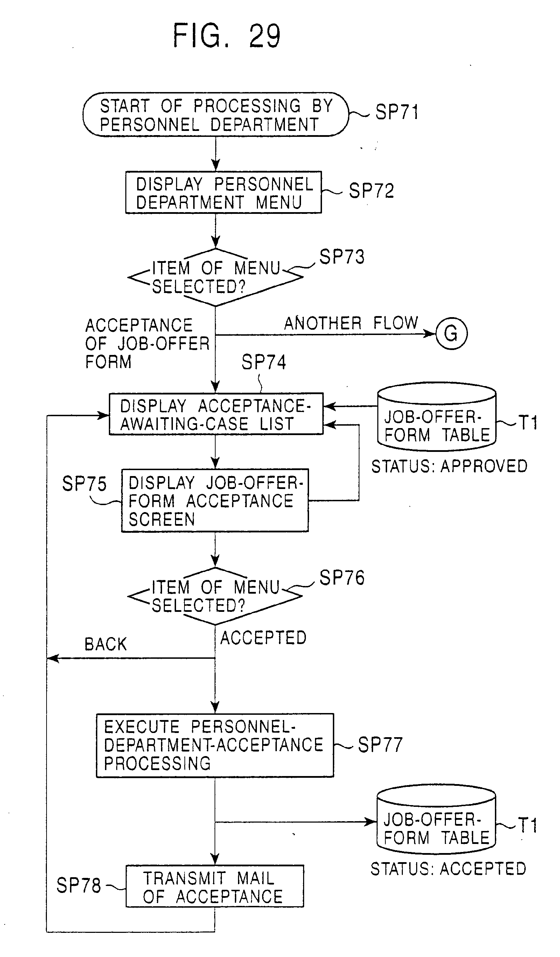

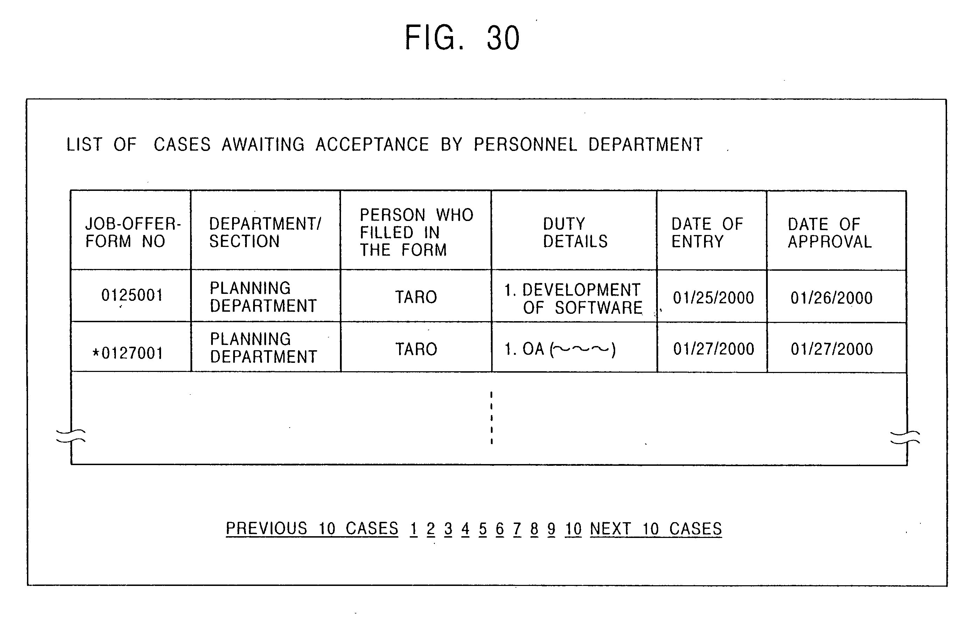

When starting the personnel department processing, the management terminal 2B proceeds from step SP71 to step SP 72, as shown in Fig. 29, and displays the personnel department menu screen. In step SP73, the management terminal 2B determines which item is selected. When the ACCEPT JOB-OFFER FORM item is selected, the management terminal 2B proceeds to step SP74, and displays a list of cases awaiting acceptance by the personnel department, which is shown in Fig. 30.

Fig. 30 shows the displayed list of cases awaiting acceptance by the personnel department. On this screen, the title is displayed at the top, and a list of job-offer forms approved by the job-offering department or the like is displayed. The list includes a job-offer-form-number item, a job-offering department/section item, an item of a person who filled in the form, a duty details item, and a date-of-approval item. In the case of a job-offer form created based on the human resources list, an asterisk is displayed ahead of the job-offer-form-number since this job-offer form is expected to have processing priority over the other job-offer forms, whereby this job-offer form can be distinguished from the other job-offer forms.

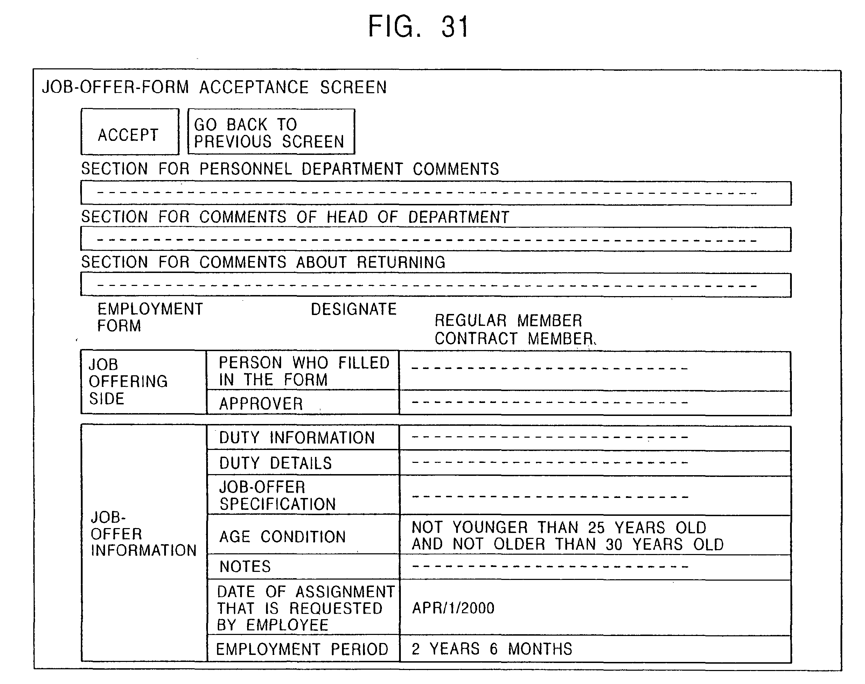

When the user clicks on one job-offer-form number on the list screen, the management terminal 2B proceeds from step SP74 to step SP75, and displays the corresponding job-offer-form acceptance screen as shown in Fig. 31. On the job-offer-form acceptance screen, its title is displayed at the top, and "ACCEPT" and "GO BACK TO PREVIOUS SCREEN" items follow. Below these items, sections for entering comments of an accepting department are displayed which have comments entered in the middle of the above types of processing. After the comment sections, the details entered in the job-offer form are displayed.

The management terminal 2B displays the job-offer-form acceptance screen (Fig. 31) and accepts entry into the comment sections. In step SP76, the management terminal 2B determines which item is selected. When the GO BACK TO PREVIOUS SCREEN item is selected, the display screen is switched to the screen (Fig. 30) displaying the list of cases awaiting acceptance by the personnel department. When the ACCEPT item is selected, the management terminal 2B proceeds to step SP77, and executes personnel-department acceptance processing. The management terminal 2B sets the status of the corresponding job-offer form on the job-offer-form table T1 so that it indicates acceptance, whereby the personnel-department acceptance processing is executed.

The management terminal 2B proceeds to step SP78, and transmits, to a person in charge in the personnel department, e-mail that indicates that the job-offer form has been accepted. After that, the management terminal 2B proceeds back to step SP74.

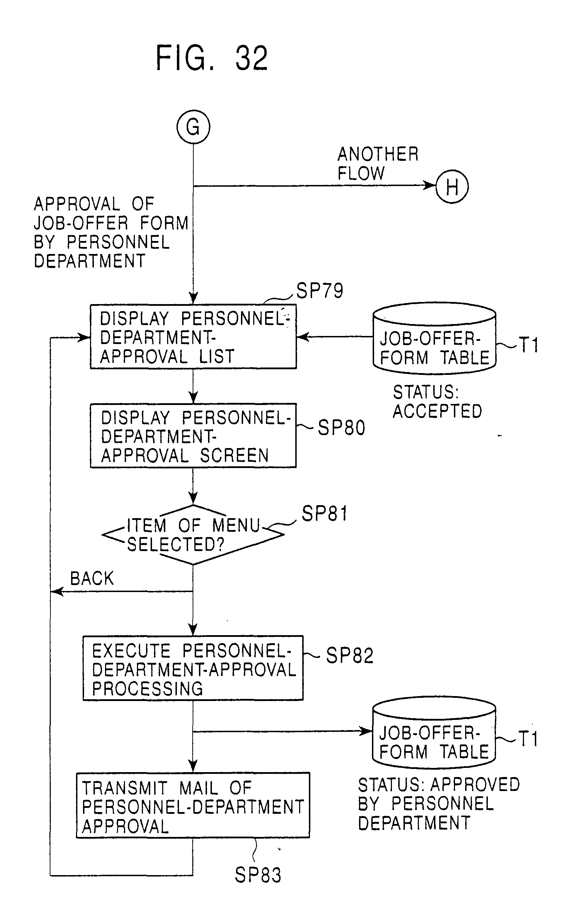

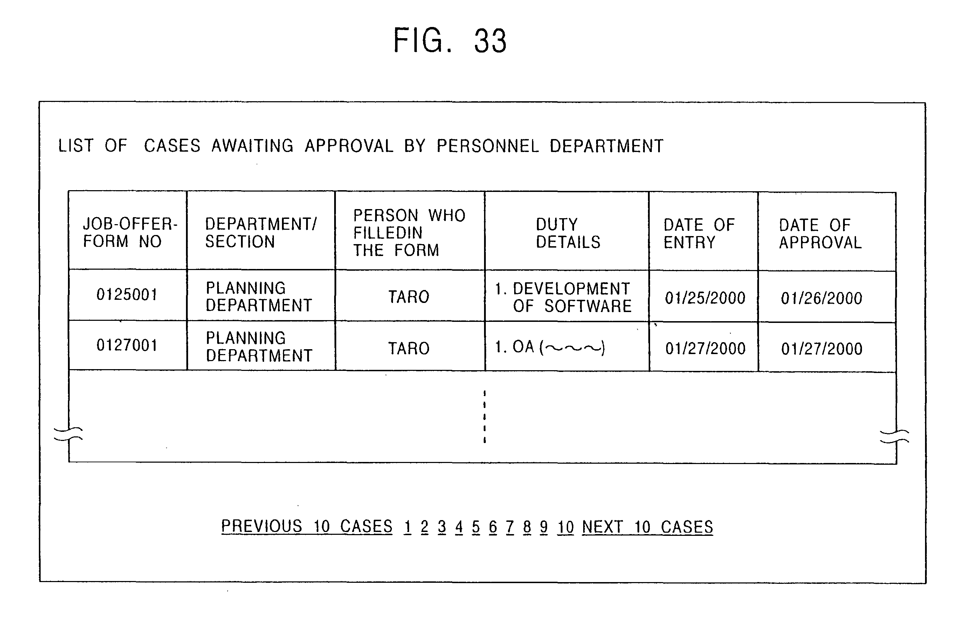

When the APPROVAL OF JOB-OFFER FORM BY PERSONNEL DEPARTMENT item is selected on the personnel department menu screen (Fig. 28), the management terminal 2B proceeds from step SP73 (Fig. 29) to step SP79 shown in Fig. 32. The management terminal 2B displays a list of cases awaiting approval by the personnel department which is shown in Fig. 33. On this list screen, its title is displayed at the top, and a list of job-offer forms is displayed which have been accepted by the personnel department and which have statuses set to indicate that they have been accepted. This list is generated by adding, for each job-offer form, a date of acceptance by the personnel department to the list (Fig. 30) of cases awaiting acceptance by the personnel department.

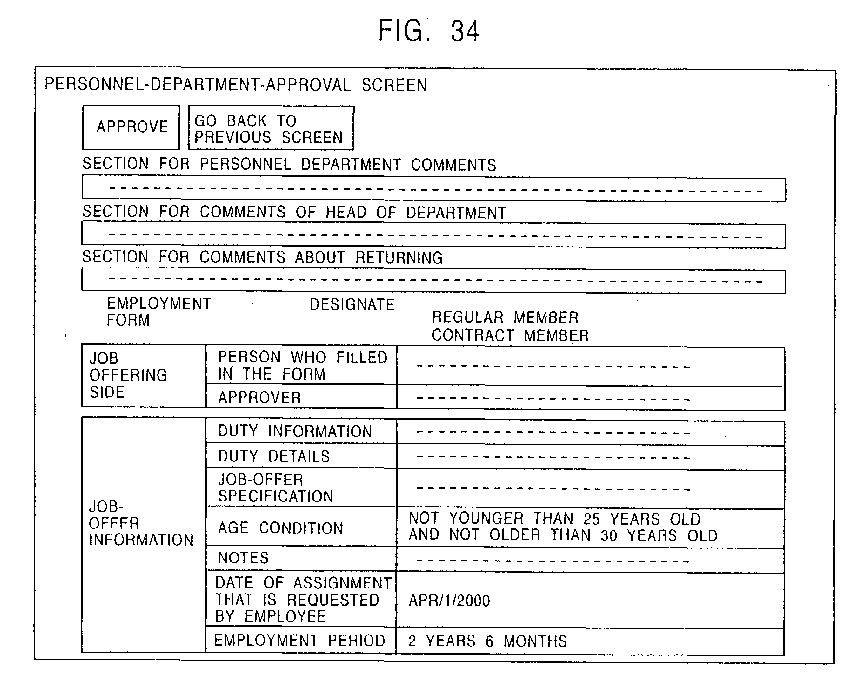

When the user clicks on one of the job-offer-form numbers on the screen (Fig. 33) displaying the list of cases awaiting approval by the personnel department, the management terminal 2B proceeds from step SP79 to step SP80, and displays the personnel-department-acceptance screen shown in Fig. 34 which corresponds to the selected job-offer form. On the personnel-department-acceptance screen, its title is displayed at the top, and "APPROVE" and "GO BACK TO PREVIOUS SCREEN" items follow. Below these items, sections for entering comments by an approving department are displayed, and comments entered in the middle of the above types of processing are displayed. Subsequently, the details entered in the job-offer form are displayed.

The management terminal 2B displays the personnel-department-acceptance screen (Fig. 34) and accepts entry into the comment sections. In step SP81, the management terminal 2B determines which item is selected. When the GO BACK TO PREVIOUS SCREEN item is selected, the display screen is switched to the screen (Fig. 33) displaying the list of cases awaiting approval by the personnel department. When the APPROVE item is selected, the management terminal 2B proceeds to step SP82, and executes personnel-department-approval processing. The management terminal 2B sets the status of the corresponding job-offer-form table T1 so that it indicates that the job-offer form has been approved by the personnel department.

In step SP83, the management terminal 2B transmits e-mail to a person in charge of the subsequent processing, namely, job-offer-form editing. After that, the management terminal 2B proceeds back to step SP79. In the case of the human resources employing list, as to a job-offer form created from the human resources list, the above-described approval processing can inquire about employment by e-mail. In the case of a person who is registered by an enterprise, negotiation on employment under contact with the enterprise is started using e-mail.

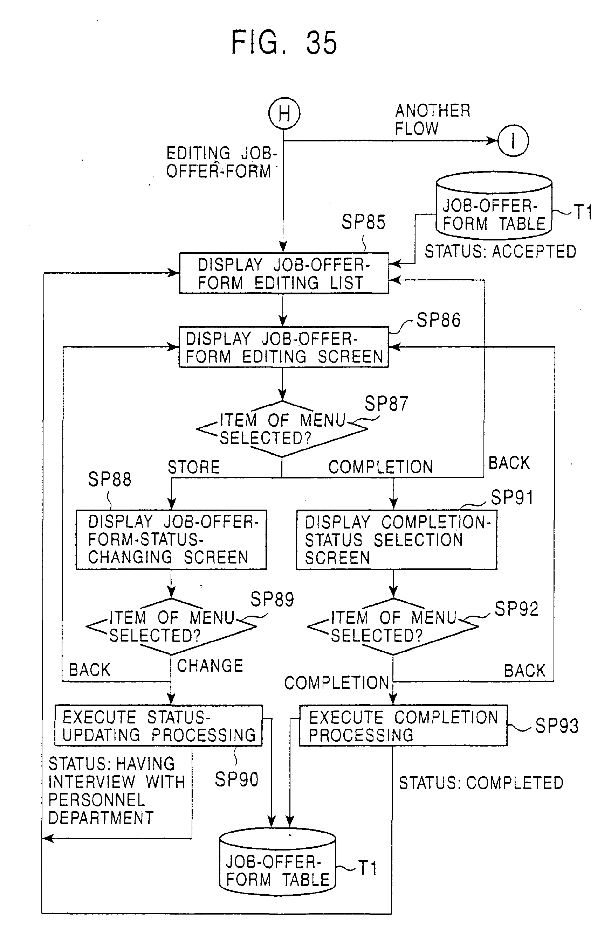

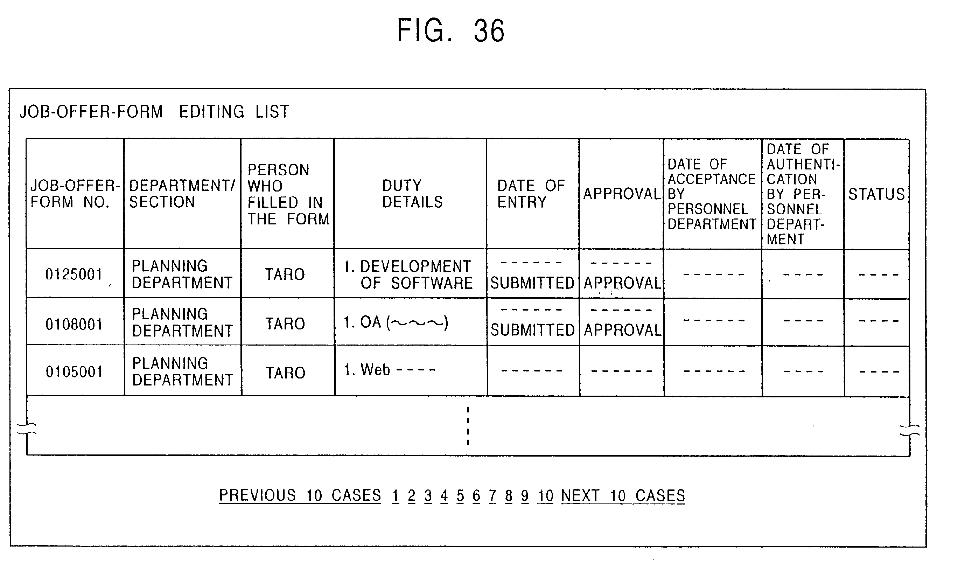

On the personnel department menu screen (Fig. 28), the EDIT JOB-OFFER FORM item is selected, the management terminal 2B proceeds from step SP73 (Fig. 29) to step SP85 shown in Fig. 35. In step SP85, the management terminal 2B displays the job-offer-form editing list shown in Fig. 36. On this screen, the screen title is displayed at the top, and a list of job-offer forms whose statuses have been set to indicate that they have been approved by the personnel department is displayed. This list is generated by adding a processing-state indicating status for each job-offer form to the list (Fig. 33) of cases awaiting approval by the personnel department.

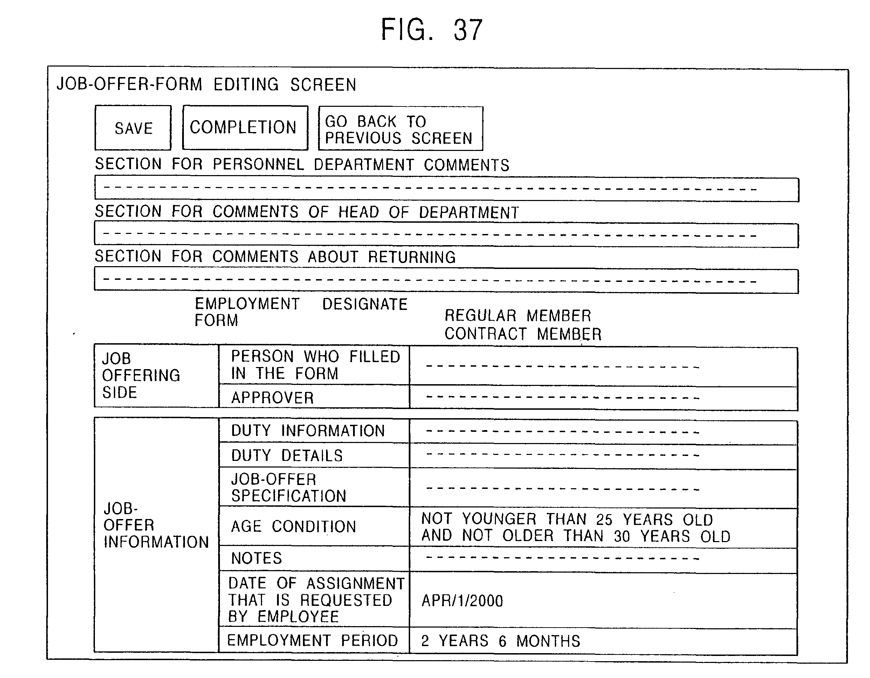

When the user clicks on one of the job-offer-form numbers on the job-offer-form editing list screen (Fig. 36), the management terminal 2B proceeds from step SP85 to step SP86, and displays the job-offer-form editing screen (shown in Fig. 37) corresponding to the selected job-offer form. On the job-offer-form editing screen, the screen title is displayed at the top, and "SAVE", "COMPLETION", and "GO BACK TO PREVIOUS SCREEN" items follow. Below these items, comment entry sections are displayed which have comments entered in the middle of the above types of processing. Subsequently, the details entered in the job-offer form are displayed.

The management terminal 2B displays the job-offer-form editing screen and accepts entry into the comment sections. In step SP87, the management terminal 2B determines which item is selected. When the GO BACK TO PREVIOUS SCREEN item is selected, the display screen is switched to the personnel-department-acceptance screen (Fig. 34). When the SAVE item is selected, the management terminal 2B proceeds to step SP88, and displays a job-offer-form-status-changing screen. The job-offer-form-status-changing screen is used to rewrite each status displayed on the job-offer-form editing list. The management terminal 2B accepts entry into a changed status by performing comparison with the present status. The status enables the management terminal 2B to grasp an employment process such as recruiting, an interview being held by the personnel department, or an interview being held by a job-offering department as a user department.

In step SP89, the management terminal 2B determines which item is selected on the status changing screen. When a go-back-to-previous-screen item is selected, the management terminal 2B proceeds from step SP89 to step SP86. When an updating item is selected, the management terminal 2B proceeds to step SP90, and changes the job-offer-form table T1 so that it has a corresponding status such as an interview being held by the personnel department. After that, the management terminal 2B proceeds back to step SP85.

Accordingly, in the human resources employment system 1, by transferring the details of the job-offer form approved by the personnel department to the home page to be provided to the applicant terminals 4A and 4B, the external job-offer information D2 is provided to the applicant terminals 4A and 4B. In the management terminal 2B, processing is executed that sequentially changes the status of each job-offer form after performing confirmation and that updates by the operator the corresponding detail on the home page at the same time. In the human resources employment system 1, by performing the transfer of the details to the home page, as described above, even if specific technical details are entered in the job-offer form so that development circumstances, etc., are externally understandable, such information is prevented from being accessed by the applicant terminal 4A or 4B. Accordingly, even if a job-offering department performs, by an inexperienced person in charge, employment activities by itself, various inconveniences are prevented from occurring.

On the job-offer-form editing screen (Fig. 37), when the COMPLETION item is selected, the management terminal 2B proceeds from step SP87 to step SP91, and displays a completion status selecting screen. This completion status selecting screen is a menu screen for registering completion of employment. In step SP92, the management terminal 2B determines which item of the menu is selected. When a go-back-to-previous-screen item is selected, the management terminal 2B proceeds back from step S92 to step SP86. When a completion item is selected, the management terminal 2B proceeds to step SP93, and sets the status of the corresponding job-offer-form table T1 so that it indicates completion. After that, the management terminal 2B proceeds back to step SP85.

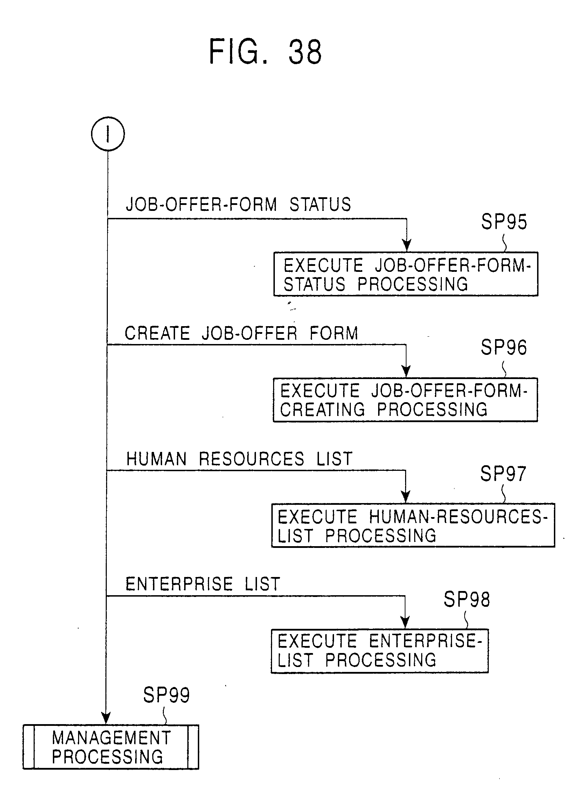

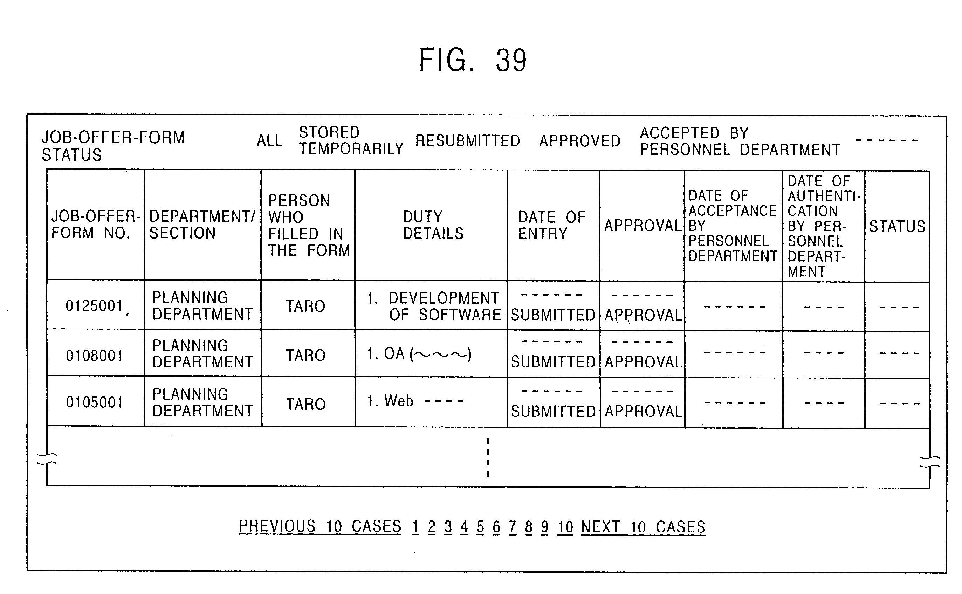

On the personnel department menu screen (Fig. 28), when the JOB-OFFER-FORM STATUS item is selected, the management terminal 2B proceeds from step SP73 (Fig. 29) to step SP95 shown in Fig. 38, and executes job-offer-form-status processing. Similarly to the case in which the JOB OFFER FORM STATUS item is selected on the job-offering department menu screen, the job-offer-form-status processing displays, in the form of a list, job-offer forms that each have before-completion status, as shown in Fig. 39. By selecting one of the job-offer-form numbers, the corresponding job-offer form can be displayed so that successive processing such as entry into the job-offer form or job-offer-form approval. In the job-offer-form-status processing, all job-offer forms for each of which job offering has not been completed yet are processed, including those belonging to the job-offering department. This makes it possible to display more items than those in the case of the job-offering department for each of the items followed by the title.

On the personnel department menu (Fig. 28), when the CREATE JOB-OFFER FORM item is selected, the job-offer-form table T1 proceeds from step SP96, and executes job-offer-form creating processing which is identical to that in the case of job-offer-form creating by the job-offering department. When the HUMAN RESOURCES LIST item is selected, the management terminal 2B proceeds to step SP97, and executes human-resources-list processing which is similar to that performed when the HUMAN RESOURCES LIST item is selected on the job-offering department menu screen (Fig. 8). When the ENTERPRISE LIST item is selected on the personnel department menu screen, the management terminal 2B proceeds to step SP98, and executes enterprise-list processing which is similar to that performed when the ENTERPRISE LIST item is selected on the job-offering department menu (Fig. 8). Therefore, in the human resources employment system 1, also the personnel department processing by the job-offer terminal 3B can create each job-offer form and can request job offering.

On the personnel department menu screen (Fig. 28), when the MANAGE MENU item is selected, the management terminal 2B proceeds to step SP99, and executes management processing that is described later.

### 1-2-3. External Terminal Processing

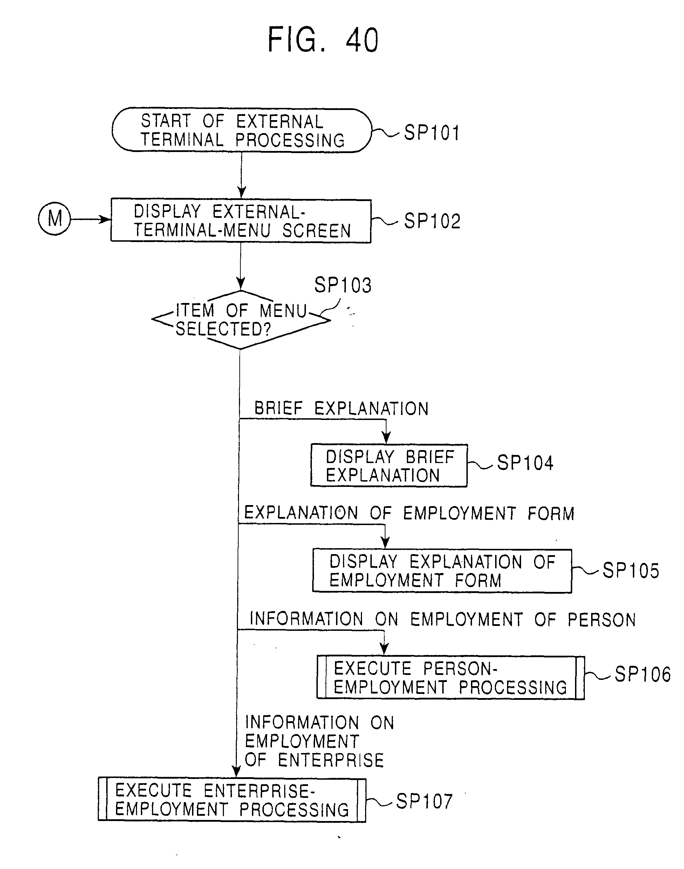

Fig. 40 is a flowchart showing the above external terminal processing described using Fig. 6. The external terminal processing is executed by the applicant terminal 4A or 4B when it accesses the management server 2A.

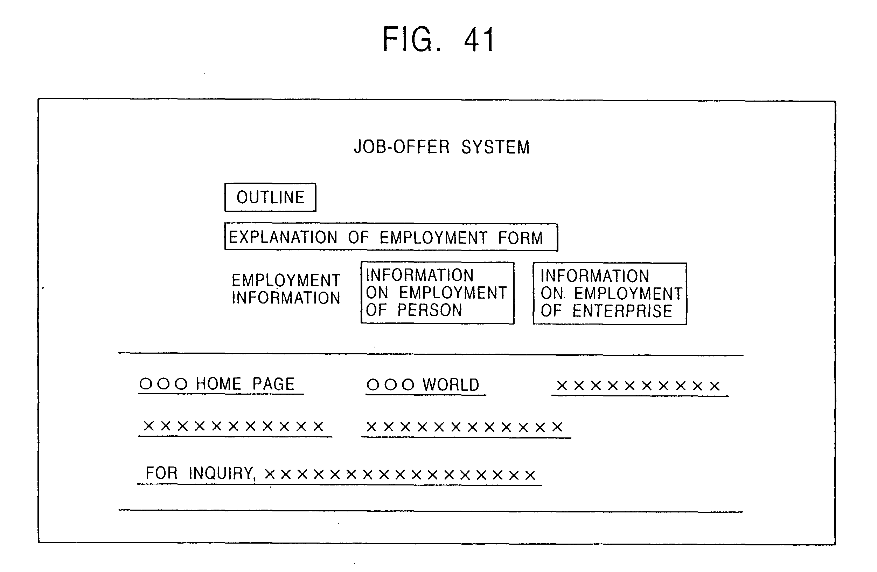

When the APPLY item is selected on the top menu screen (Fig. 7), the applicant terminal 4A or 4B proceeds from step SP101 to step SP102, and displays the applicant terminal menu screen shown in Fig. 41. On the applicant terminal menu screen, the system name is displayed at the top, and "OUTLINE" and "EXPLANATION OF EMPLOYMENT FORM" items, and "INFORMATION ON EMPLOYMENT OF PERSON" and "INFORMATION ON EMPLOYMENT OF ENTERPRISE" items that are included in employment information are displayed. Below these items, various contact addresses are displayed.

In step SP103, the applicant terminal 4A or 4B determines which item is selected. When the OUTLINE item is selected, the applicant terminal 4A or 4B proceeds from step SP103 to step SP104, and displays a brief explanation of sequential operations. When the EXPLANATION OF EMPLOYMENT FORM is selected, the applicant terminal 4A or 4B displays an explanation on each employment form.

When the INFORMATION ON EMPLOYMENT OF PERSON item or the INFORMATION ON EMPLOYMENT OF ENTERPRISE" item is selected, the applicant terminal 4A or 4B proceeds from step SP103 to step SP106 or SP107, and executes person-employment processing or enterprise-employment processing.

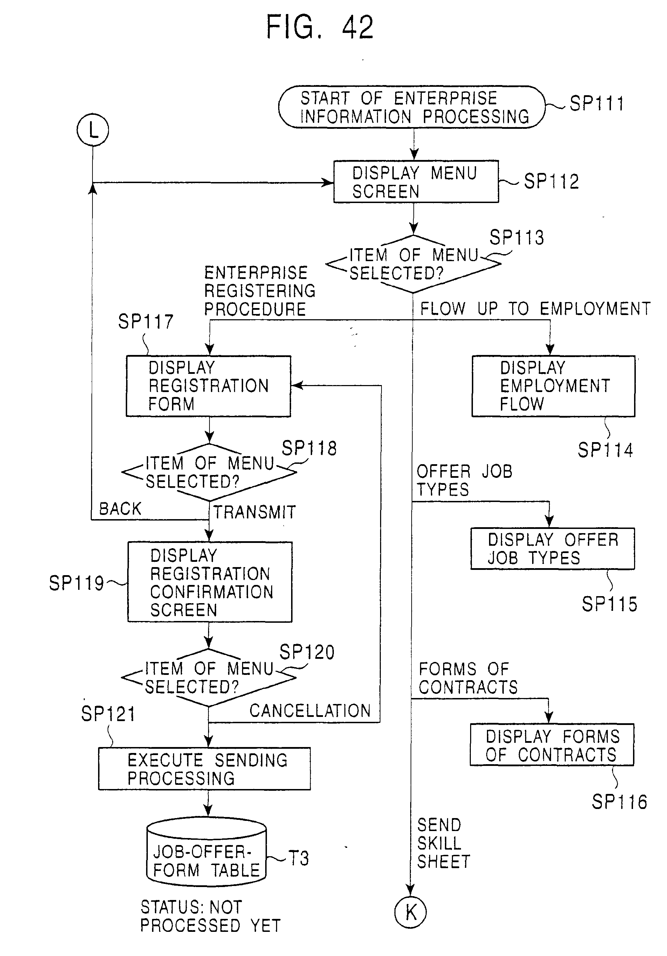

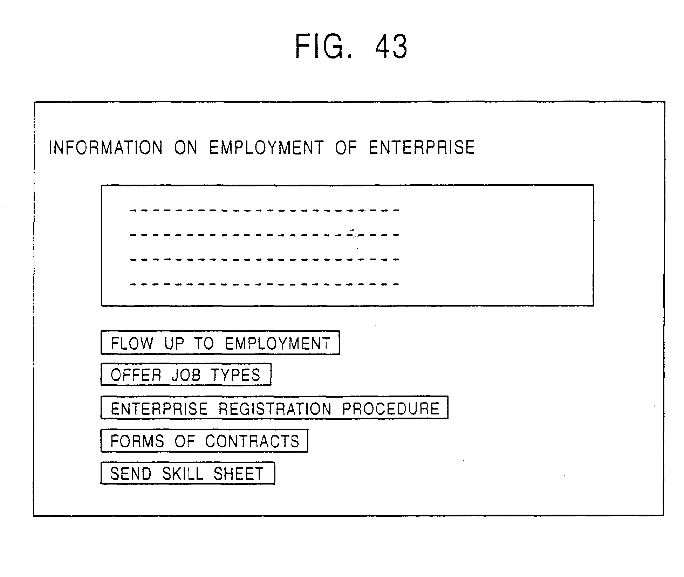

Fig. 42 is a flowchart showing enterprise information processing. When the INFORMATION ON EMPLOYMENT OF ENTERPRISE item is selected, the applicant terminal 4A or 4B proceeds from step SP111 to step SP112, and displays the menu screen shown in Fig. 43. On the menu screen, its title is displayed at the top, and an explanation is displayed, as shown in Fig. 43. Below the explanation, "FLOW UP TO EMPLOYMENT", "OFFER JOB TYPE", "ENTERPRISE REGISTRATION PROCEDURE", "FORMS OF CONTRACTS", and "SEND SKILL SHEET" items are displayed.

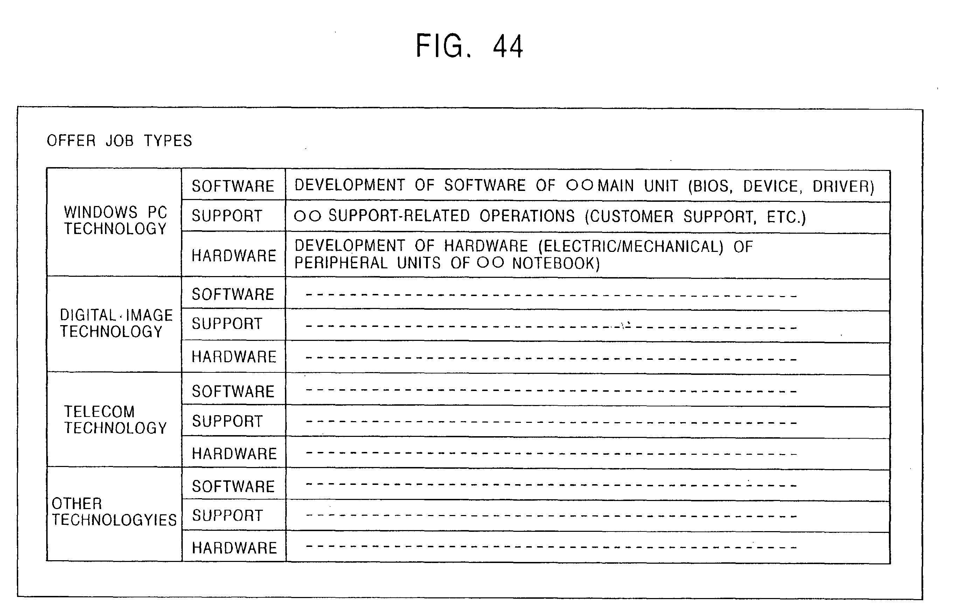

In step SP113, the applicant terminal 4A or 4B determines which item is selected on the menu screen. When the FLOW UP TO EMPLOYMENT item is selected, the applicant terminal 4A or 4B proceeds from'step SP113 to step SP114, and displays a flowchart illustrating a flow up to employment. When the OFFER JOB TYPE item is selected, the applicant terminal 4A or 4B proceeds from step SP113 to step SP115, and displays offer job types. The display of the offer job types is generated by accessing a home page to which each job-offer form recorded in the job-offer-form table T1 is transferred, as shown in Fig. 44.

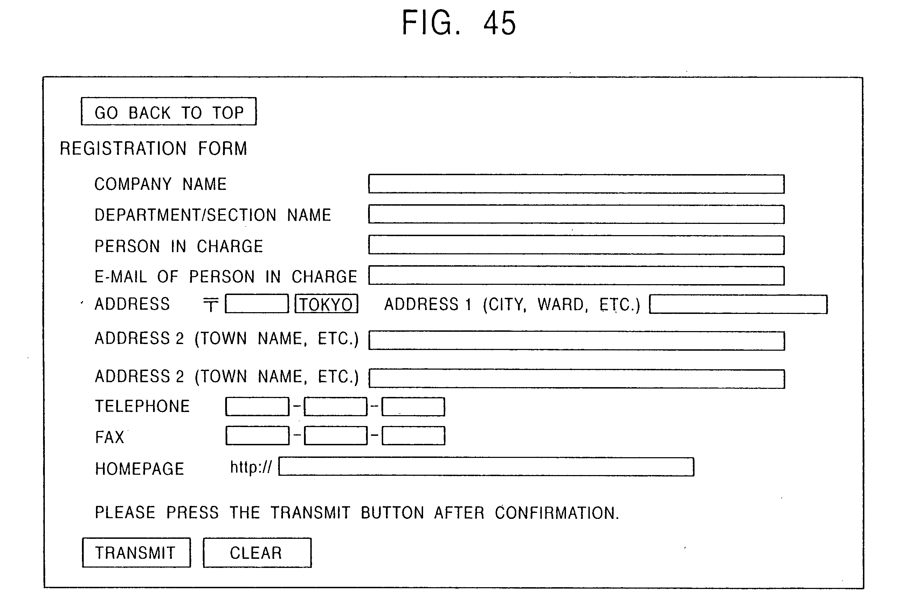

When the EXPLANATION OF EMPLOYMENT FORM item is selected on the menu screen (Fig. 41), the applicant terminal 4A or 4B displays a specific explanation of employment forms according to each job offer. When the FORMS OF CONTRACTS item is selected on the menu screen (Fig. 43), the applicant terminal 4A or 4B proceeds from step SP113 to step SP116, and displays an explanation of a contract on entrustment of business. When the ENTERPRISE REGISTRATION PROCEDURE item is selected on the menu screen (Fig. 43), the applicant terminal 4A or 4B proceeds from step SP113 to step SP117, and displays the registration form screen shown in Fig. 45. As shown in Fig. 45, on the registration form screen, "GO BACK TO TOP" item is displayed at the top, and the display screen title follows. Below the title, sections are provided in which necessary information such as a company name, and a contact address are entered. At the bottom of the screen, "TRANSMIT" and "CLEAR" items are displayed.

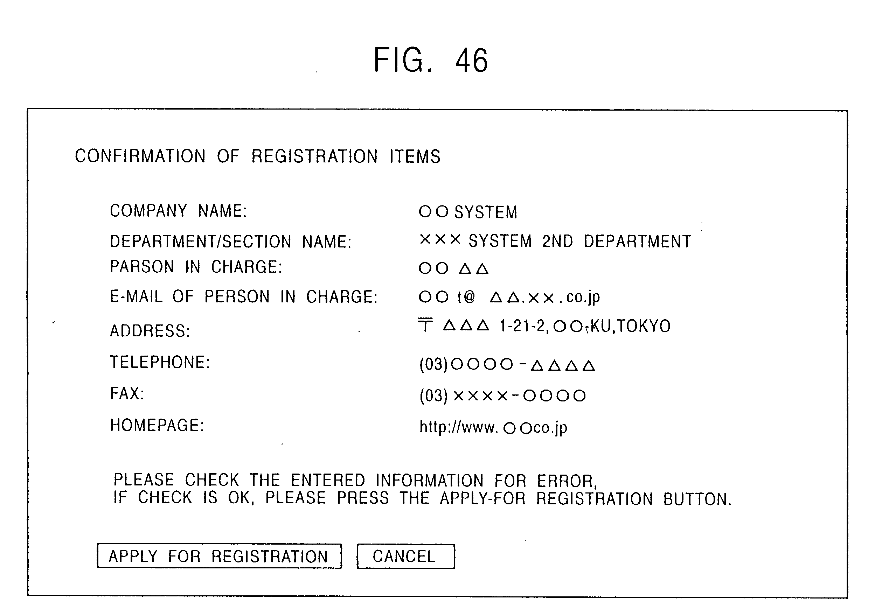

The applicant terminal 4A or 4B uses the above-described registration form to accept entry of the necessary information. In step SP118, the applicant terminal 4A or 4B determines which item is selected. When the GO BACK TO TOP item is selected, the applicant terminal 4A or 4B proceeds back from step SP118 to step SP112. When the CLEAR item is selected, the applicant terminal 4A or 4B clears the entered information. When the TRANSMIT item is selected, the applicant terminal 4A or 4B proceeds to step SP119, and displays the screen shown in Fig. 46 which is used to confirm registration items.

On the screen for confirming registration items, the screen title is displayed at the top, and details entered in the registration form are displayed. In addition, a message that prompts confirmation, and "APPLY FOR REGISTRATION" and "CANCEL" items are displayed. In step SP120, the applicant terminal 4A or 4B determines which item is selected. When the CANCEL item is selected, the applicant terminal 4A or 4B proceeds back from step SP120 to step SP117. When the APPLY FOR REGISTRATION item is selected, the applicant terminal 4A or 4B proceeds from step SP120 to step SP121, and executes sending processing.

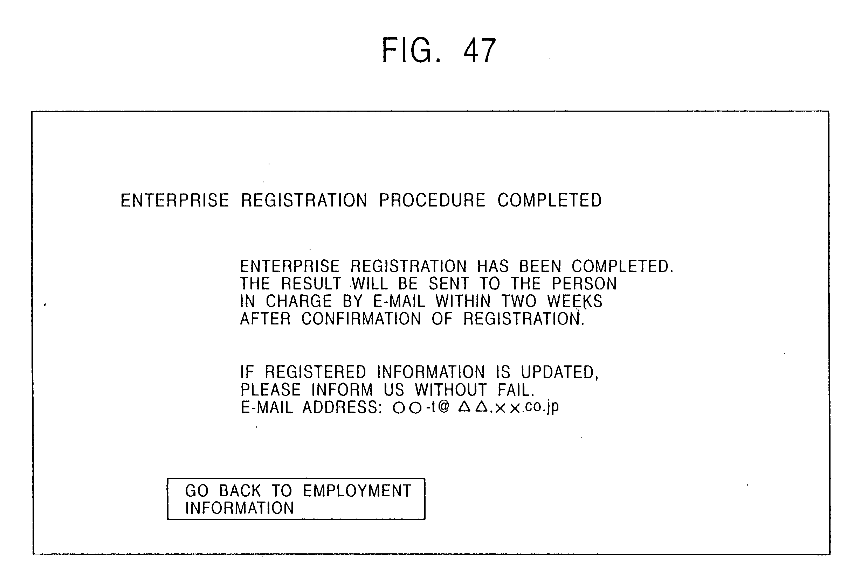

In the sending processing, the applicant terminal 4A or 4B transmits the information entered in the registration form to the management server 2A, whereby the application of each application is recorded in the enterprise table T3. At this time, for performing registration, the management server 2A sets the status of the enterprise table T3 so that it indicates an unprocessed state. When being notified of the registration, the applicant terminal 4A or 4B displays a message indicating completion of the registration procedure and an explanation of subsequent processing, as shown in Fig. 47.

Accordingly, in the human resources employment system 1, when an enterprise applies for registration, a provisional ID is assigned, and after the enterprises passes predetermined examination, a password and ID are assigned to the enterprise. The assigned password and ID are posted to an e-mail address recorded in the registration form corresponding to the enterprise. After that, by using the posted password and ID, processing such human resources registration can be executed, as required.

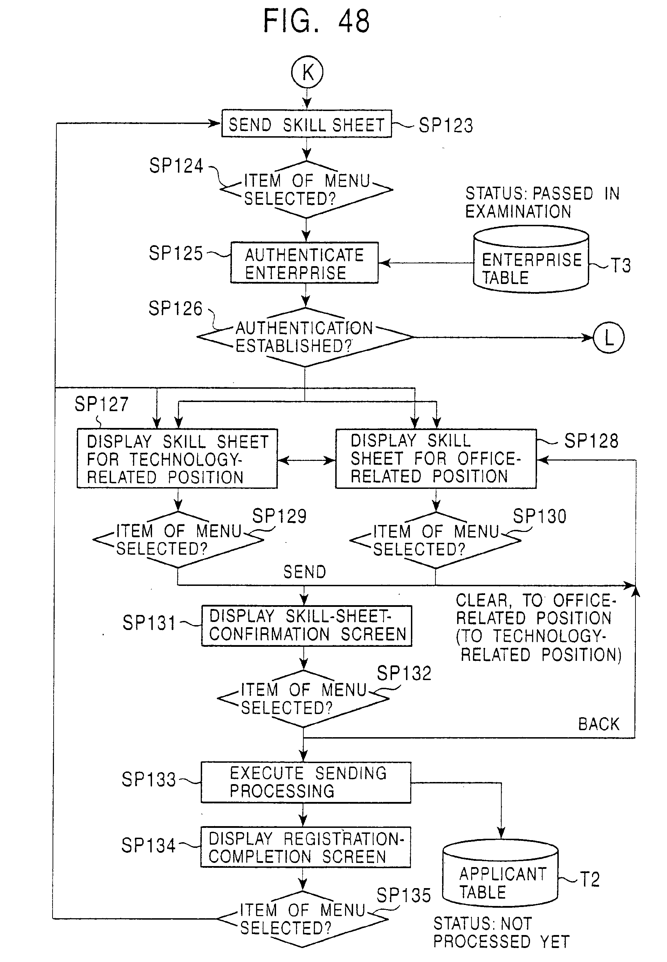

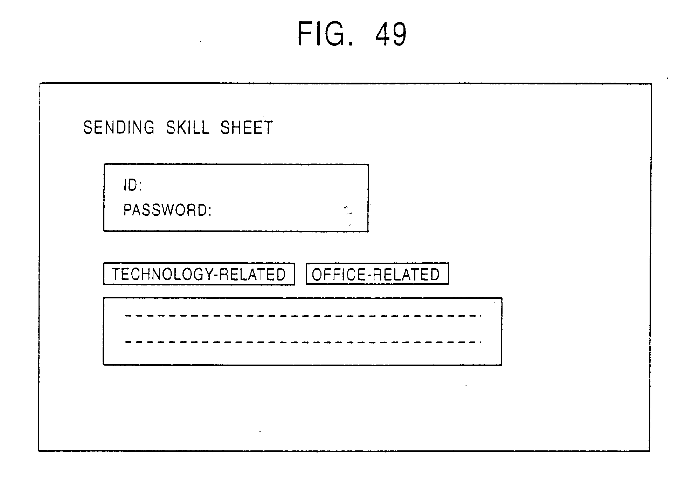

On the menu screen (Fig. 43) displaying the information on employment of enterprise, when the SEND SKILL SHEET item is selected, the applicant terminal 4A or 4B proceeds from step SP113 (Fig. 42) to step SP123 shown in Fig. 48, and displays the start screen shown in Fig. 49 which is used for sending a skill sheet. The start screen is used to accept input of the posted password and ID.

On the start screen for sending the skill sheet, the screen title is displayed at the top, and ID and password input sections, and "TECHNOLOGY-RELATED" and "OFFICE-RELATED" item are displayed as shown in Fig. 49. At the bottom of the screen, an operation explanation is displayed.

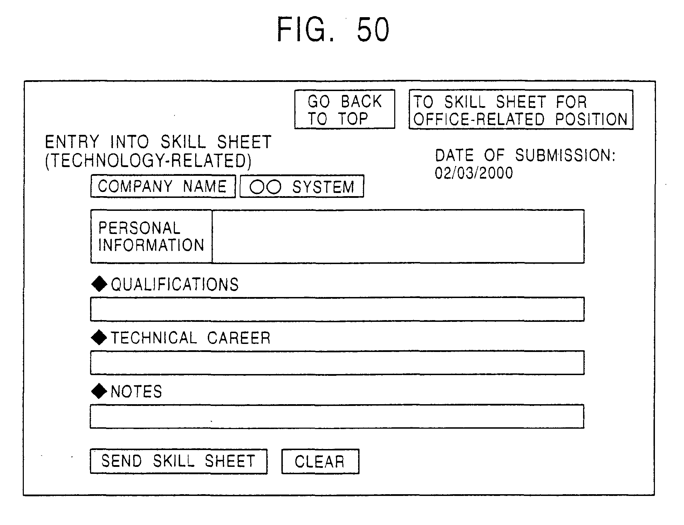

The applicant terminal 4A or 4B uses the start screen to accept input of the ID and password. In step SP124, the applicant terminal 4A or 4B determines which item is selected. In step SP125, by transmitting the input ID and password to the management server 2A, and accessing the enterprise table T3 by the management server 2A, it is determined whether an enterprise that accesses the human resources employment system 1 is one of enterprises that have passed examination. When the management server 2A rejects the accessing, the applicant terminal 4A or 4B proceeds back from step SP126 to step SP112 (Fig. 42) since that enterprise fails in the examination. Conversely, when the management server 2A permits the accessing, the applicant terminal 4A or 4B proceeds to step SP127 when it is determined in step SP124 that the TECHNOLOGY-RELATED item is selected, and displays the entry-into-skill-sheet screen shown in Fig. 50. When it is determined in step SP124 that the OFFICE-RELATED item is selected, the applicant terminal 4A or 4B proceeds to step SP128, and displays a screen for entry into an office-related skill sheet.

As shown in Fig. 50, "GO BACK TO TOP" item and "TO SKILL SHEET FOR OFFICE-RELATED POSITION" item are displayed at the top, and the screen title follows. Below the title, a date of submission, a company name, and a section for entering personal information such as a name, a birth date, an age, and an address are displayed. Subsequently, sections for entering qualifications, a technical career, and notes are displayed. At the bottom of the screen, "SEND SKILL SHEET" and "CLEAR." items are displayed. In the case of the skill sheet for the office-related position, an item for switching the display screen to the technology-related skill sheet is displayed instead of the item for switching the display screen to the office-related skill sheet, and sections for entering a carrier instead of the technical career, skills, and experience are displayed.

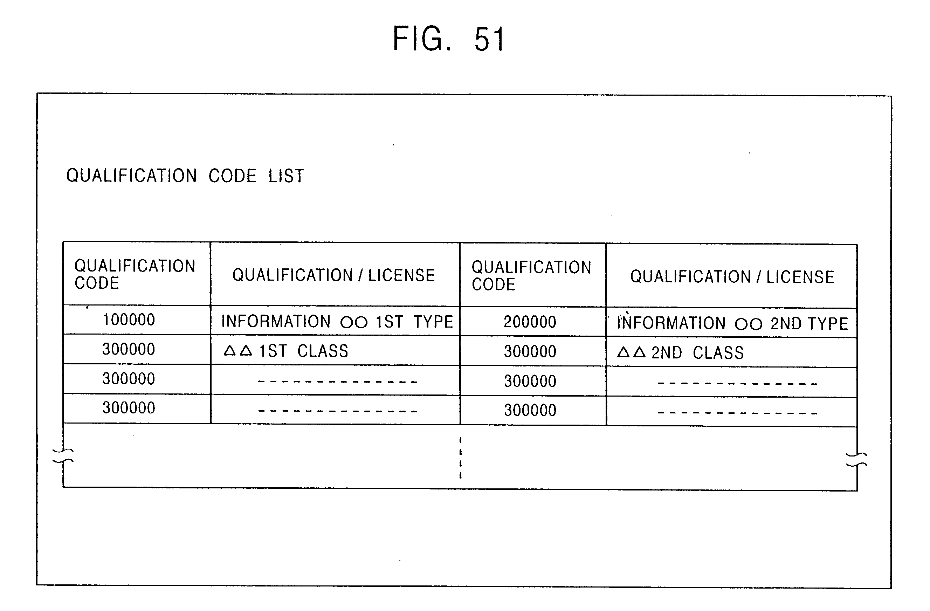

The applicant terminal 4A or 4B uses the screen (Fig. 50) to accept entry of the carrier from the user. In the entry, in response to operations by the user, the applicant terminal 4A or 4B displays, for a qualification entry section, the subwindow shown in Fig. 51 which indicates a qualification code list. When qualification codes displayed on the screen are used, entry of qualifications is accepted. On the qualification list (Fig. 51), its title is displayed at the top, and qualification codes and the corresponding qualification names are displayed in the form of a list.

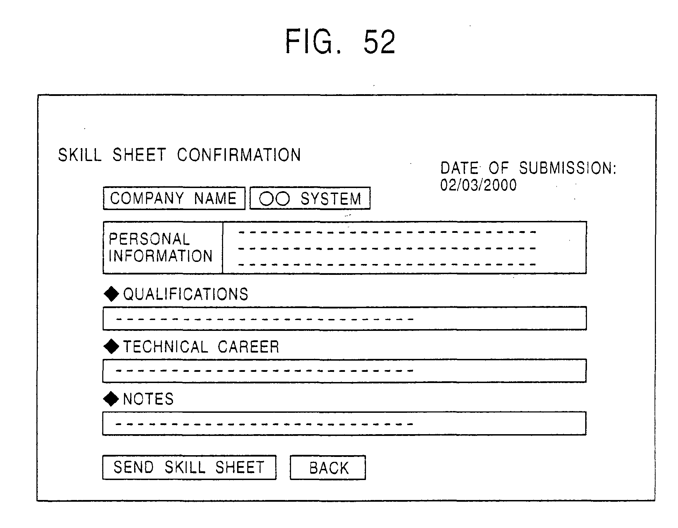

After accepting the entry from the skill sheet screen (Fig. 50), the applicant terminal 4A or 4B determines which item is selected in step SP129 after step SP127 or step SP130 after step Sp128. When the GO BACK TO TOP item is selected, the applicant terminal 4A or 4B proceeds back from step SP129 or SP130 to step SP112 (Fig. 42). When the skill sheet switching item is selected, the applicant terminal 4A or 4B proceeds to step SP128 or SP127, and the display screen is switched. When the CLEAR item is selected, the applicant terminal 4A or 4B clears the entered information. When the SEND SKILL SHEET item selected, the applicant terminal 4A or 4B proceeds to step SP131, and displays the skill sheet confirmation screen shown in Fig. 52.

As shown in Fig. 52, on the skill sheet confirmation screen, its title is displayed at the top, and the details entered in the skill sheet entry screen (Fig. 50) follow which enable confirmation of the entered details. At the bottom of the screen, "SEND SKILL SHEET" and "BACK" items are displayed. In step SP132, the applicant terminal 4A or 4B determines which item is selected. When the BACK item is selected, the applicant terminal 4A or 4B proceeds back to step SP127 or SP128. When the BACK item is selected, the applicant terminal 4A or 4B proceeds to step S133, and executes sending processing.

The sending processing is executed such that the details entered in the skill sheet are transmitted as the application information D3 to the management server 2A and are recorded in the applicant table T2. In this case, the status is set to indicate an unprocessed state.

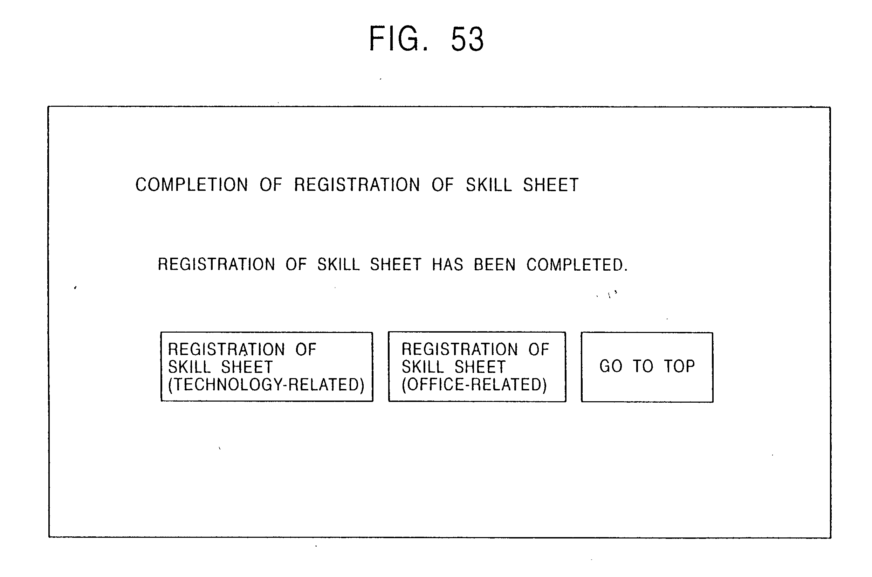

As shown in Fig. 53, the applicant terminal 4A or 4B displays a screen indicating completion of registration of the skill sheet. This screen notifies the user of completion of the registration. In step SP136, the applicant terminal 4A or 4B determines which item is selected on this screen, and proceeds back to step SP127 or SP128.

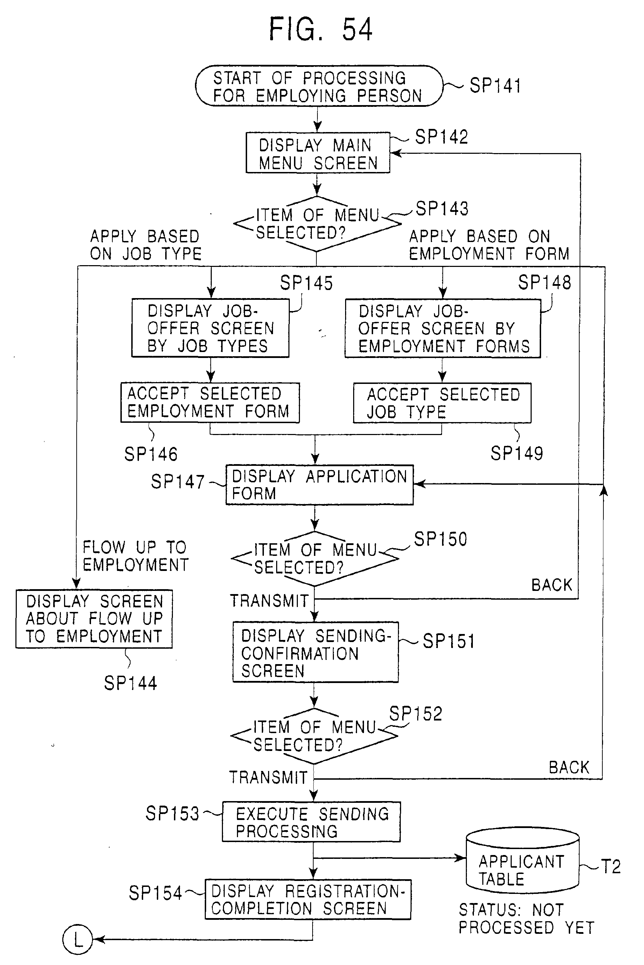

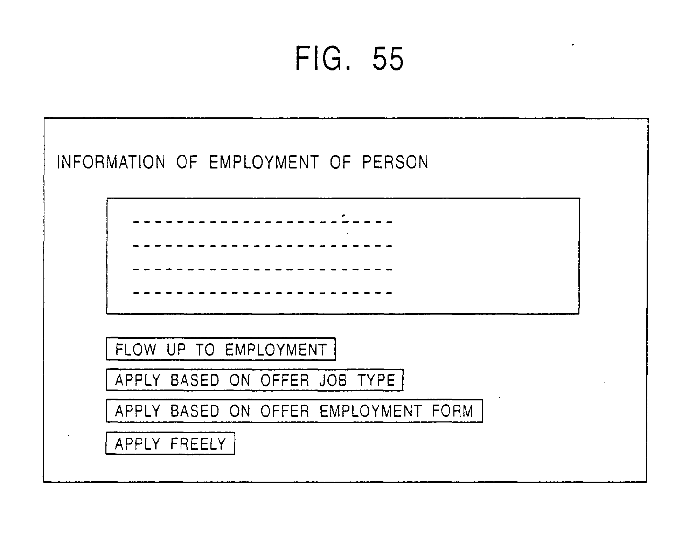

Fig. 54 is a flowchart showing processing for employing a person. When the INFORMATION ON EMPLOYMENT OF PERSON item is selected on the menu screen (Fig. 41), the applicant terminal 4A or 4B proceeds from step SP141 to step SP142, and displays the main menu screen shown in Fig. 55. On the main menu screen, its title is displayed at the top, and an explanation follows. In addition, "FLOW UP TO EMPLOYMENT", "APPLY BASED ON OFFER JOB TYPE", "APPLY BASED ON OFFER EMPLOYMENT FORM", "APPLY VOLUNTARILY" items are displayed.

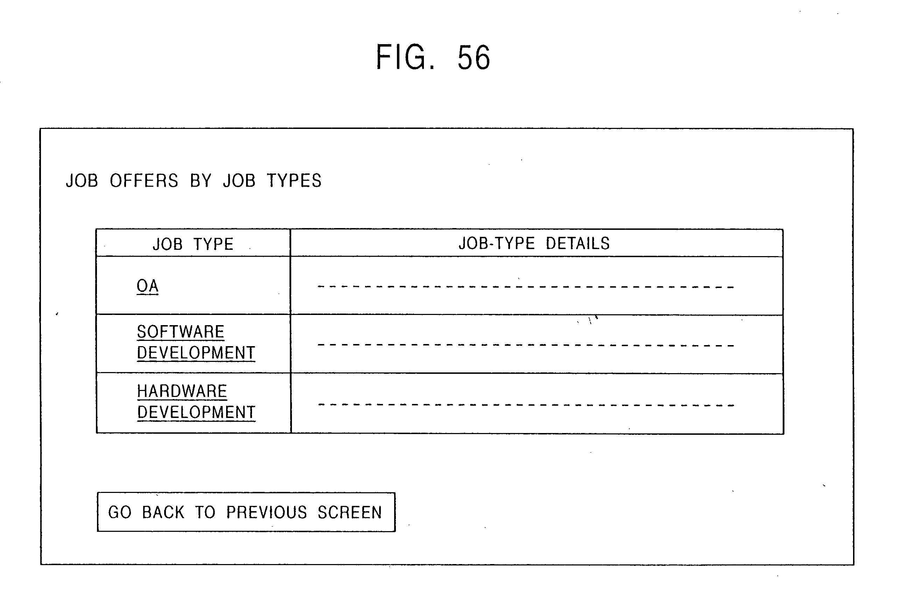

In step SP143, the applicant terminal 4A or 4B determines which item is selected. When the FLOW UP TO EMPLOYMENT item is selected, the applicant terminal 4A or 4B proceeds to step SP143 to step SP144, and displays a screen that uses a flowchart to illustrate a flow up to employment. When the APPLY BASED ON OFFER JOB TYPE item is selected, the applicant terminal 4A or 4B proceeds from step SP143 to step SP145, and displays the screen shown in Fig. 56 which indicates job offers by job types.

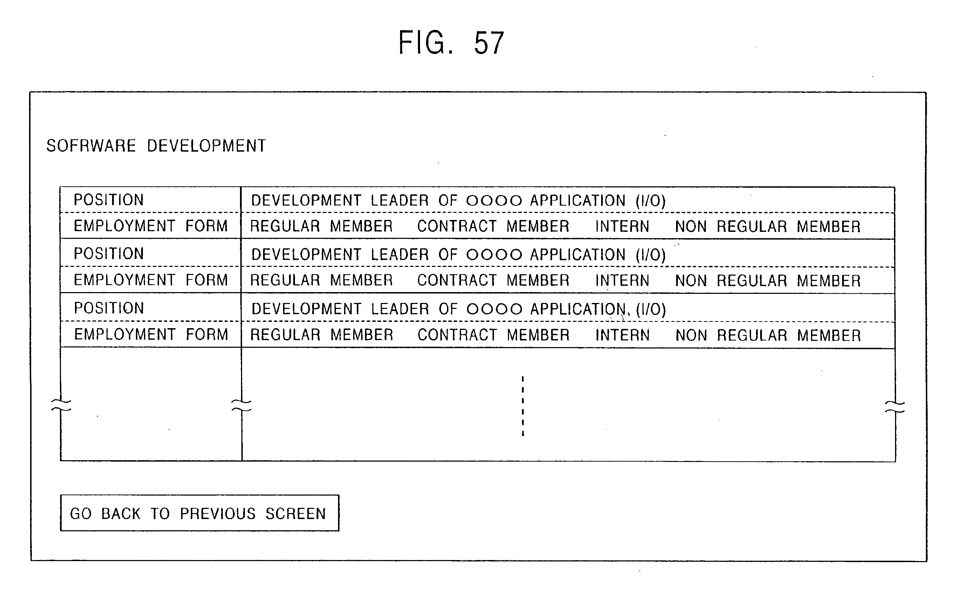

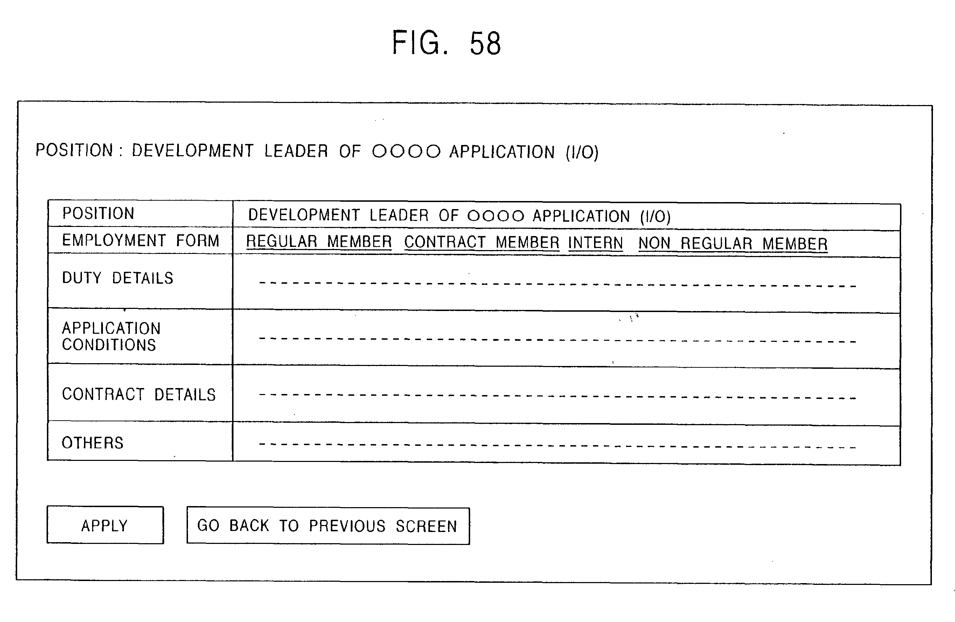

On the screen (Fig. 56) which indicates job offers by job types, the screen title is displayed at the top, and broadly classified job types are displayed with explanations. At the bottom of the screen, "GO BACK TO PREVIOUS SCREEN" item is displayed. When the GO BACK TO PREVIOUS SCREEN item is selected, the applicant terminal 4A or 4B switches the display screen to the previous screen. When each job type is selected, the applicant terminal 4A or 4B displays a job-detail screen corresponding to the job type. Fig. 57 shows a screen displaying the details of software development as a job type. On this screen, its title is displayed at the top, and descriptions of detailed offer job types are displayed with brief duty explanations and employment forms. At the bottom of the screen, "GO BACK TO PREVIOUS SCREEN" item is displayed. When the GO BACK TO PREVIOUS SCREEN item is selected, the applicant terminal 4A or 4B switches the display screen to the previous screen. When one of the displayed positions is selected, a further detailed description screen is displayed as shown in Fig. 58. The applicant terminal 4A or 4B uses the further detailed description screen to accept the selected employment form, as indicated in step SP146 (Fig. 54).

When the GO BACK TO PREVIOUS SCREEN item is selected on the further detailed description screen (Fig. 58), the applicant terminal 4A or 4B switches the display screen to the previous screen. When the APPLY item is selected, the applicant terminal 4A or 4B proceeds to step SP147, and displays an application form corresponding to the specified job offer. Accordingly, in this embodiment, by displaying job offer classified by job types, and narrowing the job offers from the job types, a job offer that is appropriate for the desire can be selected.

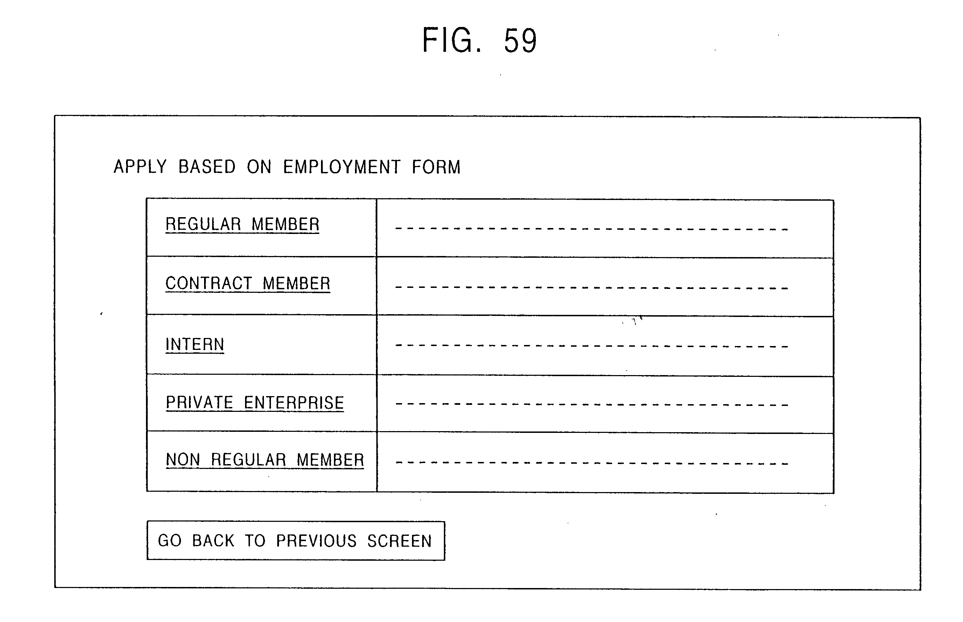

On the main menu screen (Fig. 55), when the APPLY BASED ON OFFER EMPLOYMENT FORM item is selected, the applicant terminal 4A or 4B proceeds from step SP143 to step SP148 (Fig. 54), and displays the screen shown in Fig. 59 which allows application based on an employment form.

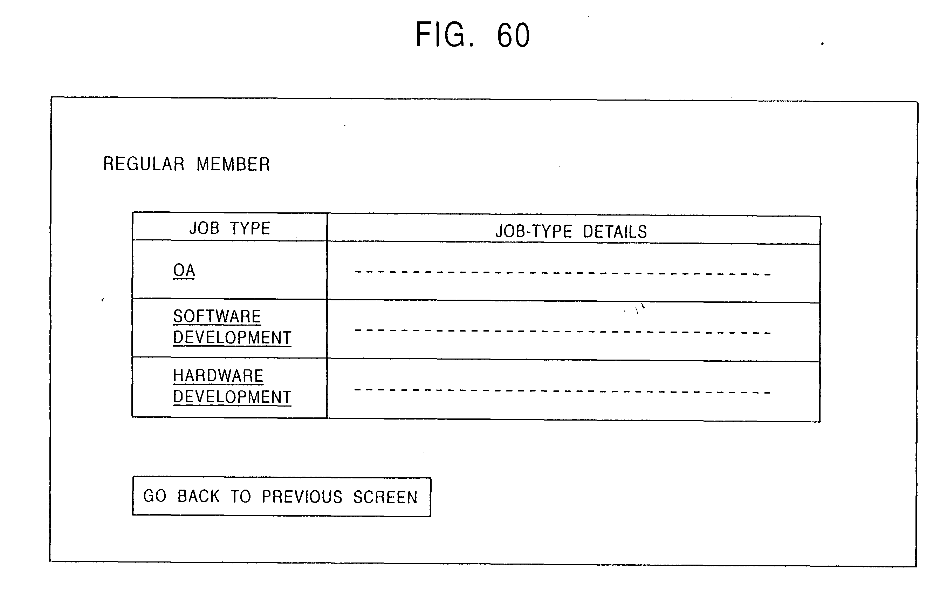

On this screen (Fig. 59), its title is displayed at the top, and employment forms relating to application are displayed with explanations. At the bottom of the screen, "GO BACK TO PREVIOUS SCREEN" item is displayed. When the GO BACK TO PREVIOUS SCREEN item is selected, the applicant terminal 4A or 4B switches the display screen to the previous screen. When each of the employment forms is selected, job types to be offered which have the selected employment form are displayed, as shown in Fig. 60. When one of job types is selected on this screen displaying the job types, the applicant terminal 4A or 4B displays detailed description screen that is similar to Fig. 57 or 58. This enables the applicant terminal 4A or 4B to display job offers that are classified by employment forms, whereby the desired job-offer form can be selected by narrowing the job offers using the employment forms.

When an item for application is selected by narrowing the job offers by the employment forms, the applicant terminal 4A or 4B proceeds to step SP147, and displays an application form applicant terminal the job offer selected based on the desired employment form. Accordingly, in this embodiment, by using job type classification and employment form classification to narrow job offers so that one of the job offers can be selected, the desired job offer can be easily selected.

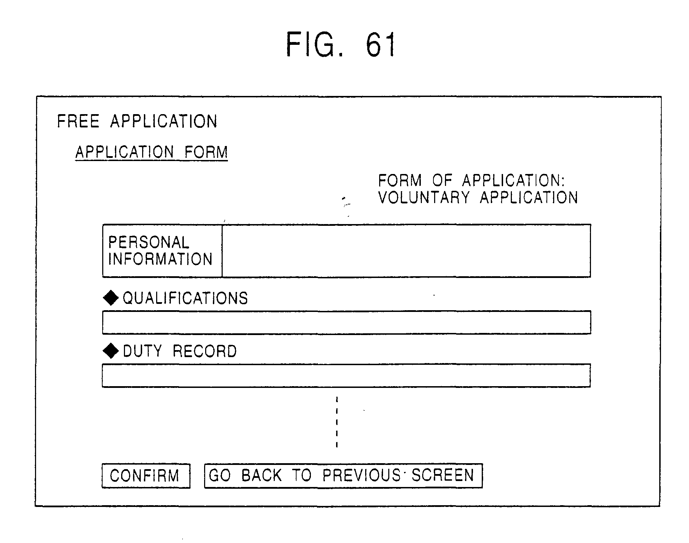

On the main menu screen (Fig. 55), the APPLY VOLUNTARILY item is selected, the applicant terminal 4A or 4B proceeds from step SP143 directly to step SP147, and displays the corresponding application form shown in Fig. 61.

As shown in Fig. 61, the form title is displayed at the top, and a form of application which indicates an application type is displayed below the title. This form of application is used to indicate an application form among application based on a job type, application based on an employment form, and voluntary application in which a job type and employment form are not designated. Subsequently, a section for entering personal information such as a name and an address, sections for entering qualifications, duty record, motivation for application, etc., are displayed. At the bottom of the screen, "CONFIRM" and "GO BACK TO PREVIOUS SCREEN" items are displayed.

The applicant terminal 4A or 4B uses the application form to accept the entry by the user. In step SP150, the applicant terminal 4A or 4B determines which item is selected. When the GO BACK TO PREVIOUS SCREEN item is selected, the applicant terminal 4A or 4B proceeds back from step SP150 to step SP142. When the CONFIRM item is selected, the applicant terminal 4A or 4B proceeds from step SP150 to step SP151, and displays a confirmation screen that displays the details entered in the application form, similarly to the case of the registration of a person in an enterprise.

In step SP152, the applicant terminal 4A or 4B determines which item is selected. When the GO BACK TO PREVIOUS SCREEN item is selected, the applicant terminal 4A or 4B proceeds back from step SP152 to step SP147. When the TRANSMIT item is selected on the screen (Fig. 45), the applicant terminal 4A or 4B proceeds from step SP152 to step SP153, and executes sending processing. The sending processing is executed such that the application information D3 as information entered in the application form is transmitted to the management server 2A and is registered in the applicant table T2 by the management server 2A. In the time the registration is performed, on the applicant table T2, a human resources ID is assigned and the status is set to indicate an unprocessed state. Each application based on employment form and each application based on job type, which are directed to job offers, are recorded in the applicant table T2 so that a link to the corresponding job-offer table can be traced and so that each voluntary application can be distinguished. Accordingly, in the human resources employment system 1, applications for job offers and voluntary applications are simultaneously managed with the job offers, whereby simplified and secured management of the applications and offers can be performed.

At this time, the management server 2A performs format examination, and notifies the applicant terminal 4A or 4B of rejection of registration about, for example, those obviously regarded as nuisance applications such as applications having incomplete details.

When being notified of completion of registration by the management server 2A, the applicant terminal 4A or 4B proceeds to step SP154. In step SP154, the applicant terminal 4A or 4B displays a registration-completion screen, uses this screen to notify the user of the registration in the applicant table T2, and notifies the user of a password, an ID, a URL which are posted by the management server 2A. Accordingly, in the human resources employment system 1, the result of each examination, etc., is individually posted by performing accessing using the posted password, ID, and URL because the result is related to personal privacy.

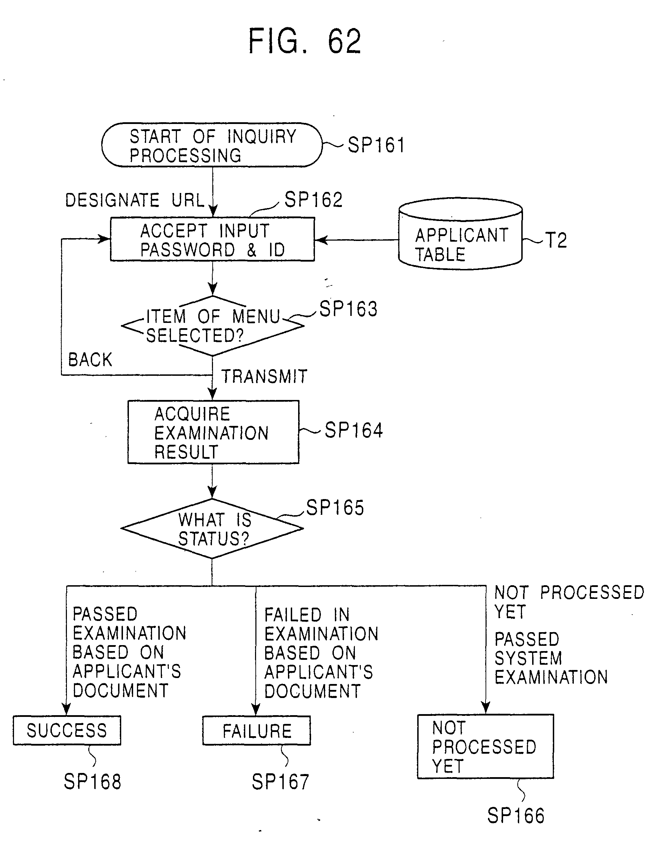

Fig. 62 is a flowchart showing processing that is executed by the applicant terminal 4A or 4B when it inquires about the result of registration of a person's application. The applicant terminal 4A or 4B proceeds from step SP161 to step SP162. In step SP162, when the applicant terminal 4A or 4B establishes a link to the management center 2 by using a URL acquired in registration performed after running a web browser, the applicant terminal 4A or 4B accepts input of a password and ID posted in the registration. In step SP163, the applicant terminal 4A or 4B determines which item of a menu is selected on a screen for the input. When an item for going back is selected, the applicant terminal 4A or 4B proceeds back to step SP162, and accepts input of the password and ID again. When an item for transmission is selected, the applicant terminal 4A or 4B proceeds to step SP164.

In step SP164, the applicant terminal 4A or 4B executes authentication processing by posting the password and the ID to the management server 2A, thereby acquiring an examination result. At this time, when the status of the applicant table T2 has not yet been set to indicate a failure or success in document examination, the applicant terminal 4A or 4B proceeds from step SP165 to step SP166, and posts the face of an unprocessed state. When the status of the applicant table T2 is set to indicate a failure as a result of various examinations, the applicant terminal 4A or 4B proceeds from step SP165 to step SP167, and posts the fact of a failure state. Conversely, the status is set to indicate success in document examination as a result of various examinations, the applicant terminal 4A or 4B proceeds from step SP165 to step SP168, and posts the success in document examination. In addition, for further communications, the applicant terminal 4A or 4B posts a contact e-mail address. Accordingly, in the human resources employment system 1, by performing e-mail communications, screening is repeatedly performed as required, and employment is finally determined based on an interview by the personnel department, etc. When a failure is posted when accessing by the applicant terminal 4A or 4B is performed, the management server 2A in the human resources employment system 1 deletes the corresponding record of the applicant table T2.

### 1-2-4. Management Processing

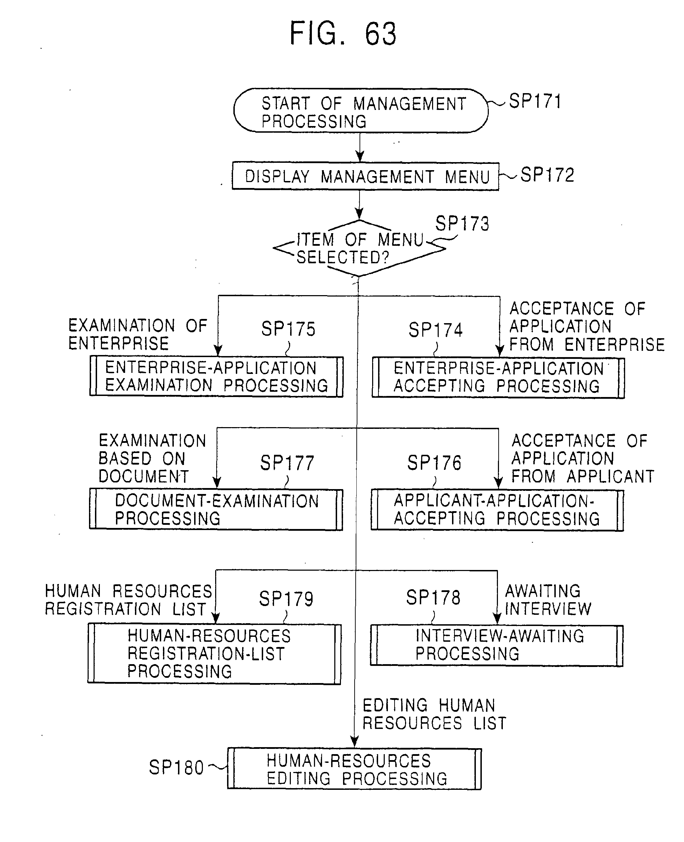

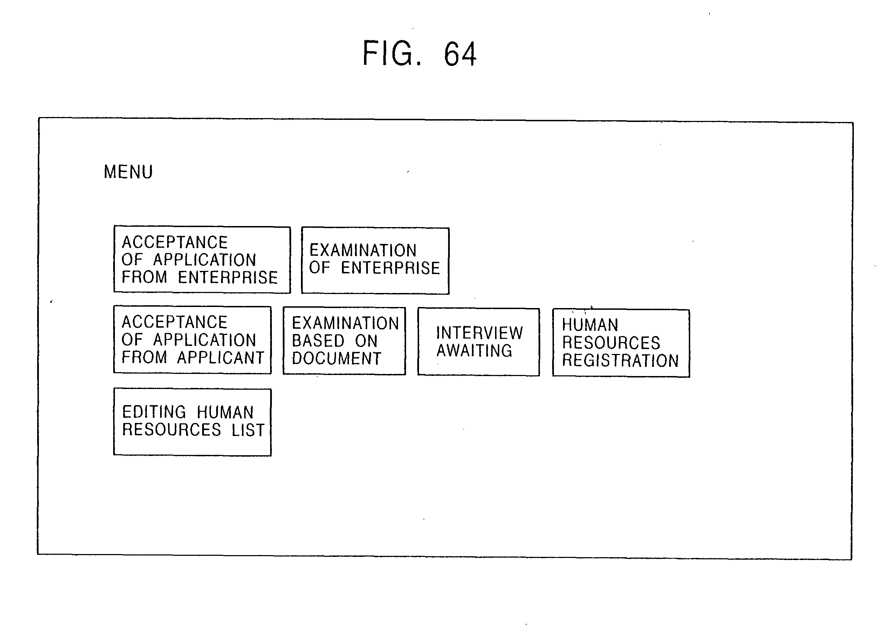

Fig. 63 is a flowchart of the management processing. When the MANAGER MENU item is selected on the displayed personnel department menu (Fig. 28), the management terminal 2B executes the management processing in step SP99 (Fig. 38). Specifically, in accordance with the selection of the MANAGER MENU item, the management terminal 2B proceeds from step SP171 to step SP172, and displays the management menu screen shown in Fig. 64. On the management menu screen, its title is displayed at the top, and "ACCEPTANCE OF APPLICATION FROM ENTERPRISE", "EXAMINATION OF ENTERPRISE", "ACCEPTANCE OF APPLICATION FROM APPLICANT", "EXAMINATION BASED ON DOCUMENT", "INTERVIEW AWAITING", "HUMAN RESOURCES REGISTRATION", and "EDITING HUMAN RESOURCES LIST" items are displayed. In step SP173, the management terminal 2B determines which item is selected on the management menu screen, and executes each of the types of processing in steps SP174 to SP180 in response to the operation corresponding to the selected item.

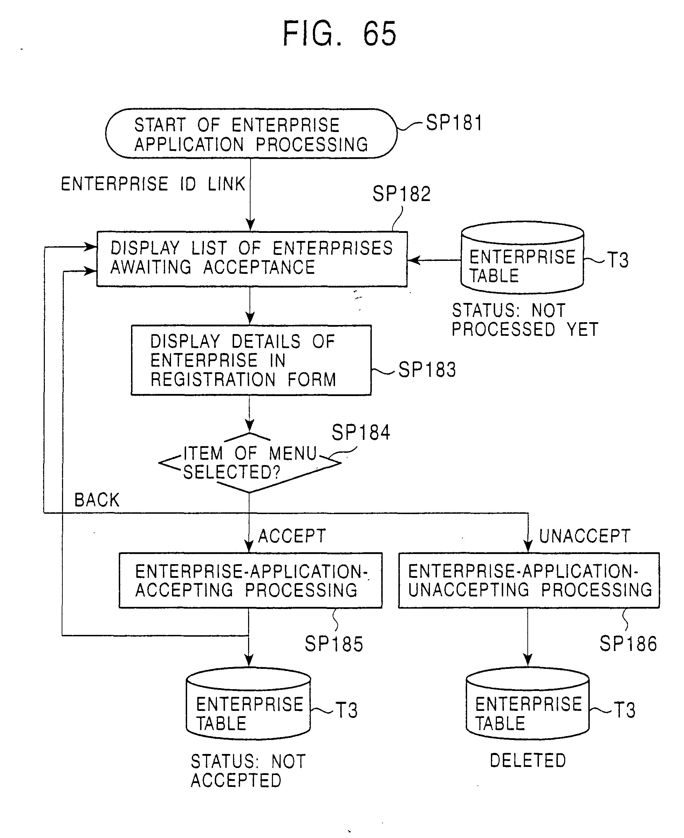

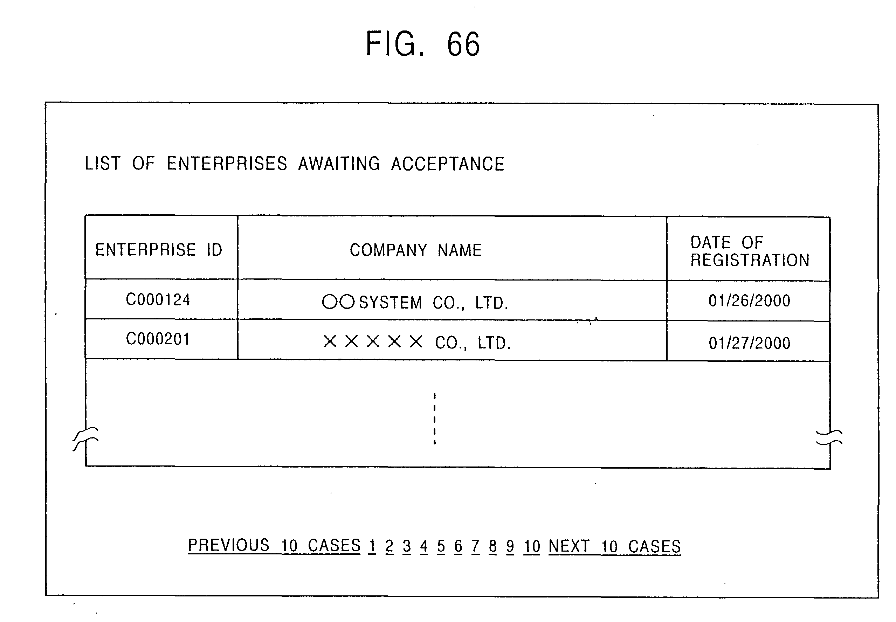

Fig. 65 is a flowchart showing enterprise application processing that is executed when the ACCEPTANCE OF APPLICATION FROM ENTERPRISE item is selected. The management terminal 2B proceeds from step SP181 to SP182, and displays the screen shown in Fig. 66 which indicates a list of enterprises awaiting acceptance. On the list screen, its title is displayed at the top. Below the title, enterprises that have been registered in the enterprise table T3 by the enterprise registration processing by the applicant terminal 4A or 4B and that has a status set to indicate an processed state are displayed in the form of a list, with provisional enterprise IDs, company names, and dates of registration.

When one of the enterprise IDs is selected by the user, in step SP183, the management terminal 2B uses an enterprise ID link to display the screen shown in Fig. 64 which indicates details of the enterprise recorded in the registration form. On the details-displayed screen, its title is displayed at the top, and "ACCEPT", "UNACCEPT" and "GO BACK" items follow. Below these items, the details are displayed.

In step SP184, the management terminal 2B determines which item is selected. When the GO BACK item is selected, the management terminal 2B proceeds back to step SP182. When the ACCEPT item is selected, the management terminal 2B proceeds to step SP185, and executes enterprise-application accepting processing. In the human resources employment system 1, excluding cases in which an application has a obviously wrong contact address and in which an application is regarded as a nuisance, enterprise applications are accepted when being received. In the enterprise-application accepting processing, the status of the enterprise table T3 is set to indicate that the application is accepted.

Conversely, in the cases in which an application has a obviously wrong contact address and in which an application is regarded as a nuisance, the UNACCEPT item is selected to allow the management terminal 2B to proceed from step SP184 to step SP186, and the management terminal 2B executes enterprise-application unaccepting processing. In this processing, the management terminal 2B deletes the corresponding record in the enterprise table T3, and sends a fixed-format deletion notification to the contact address entered in the application. After that, the management terminal 2B terminates the enterprise-application unaccepting processing.

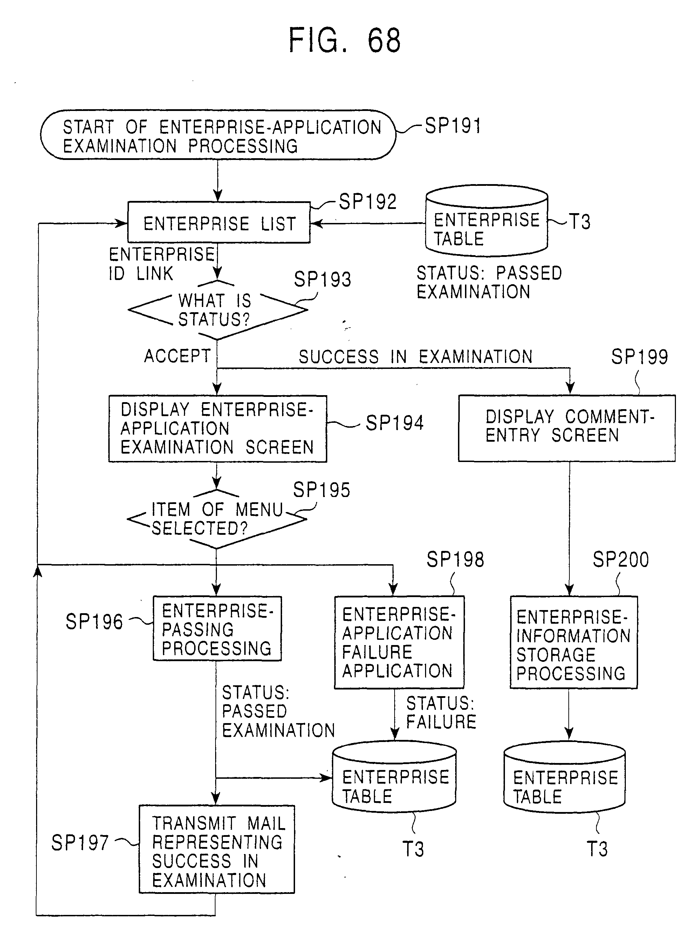

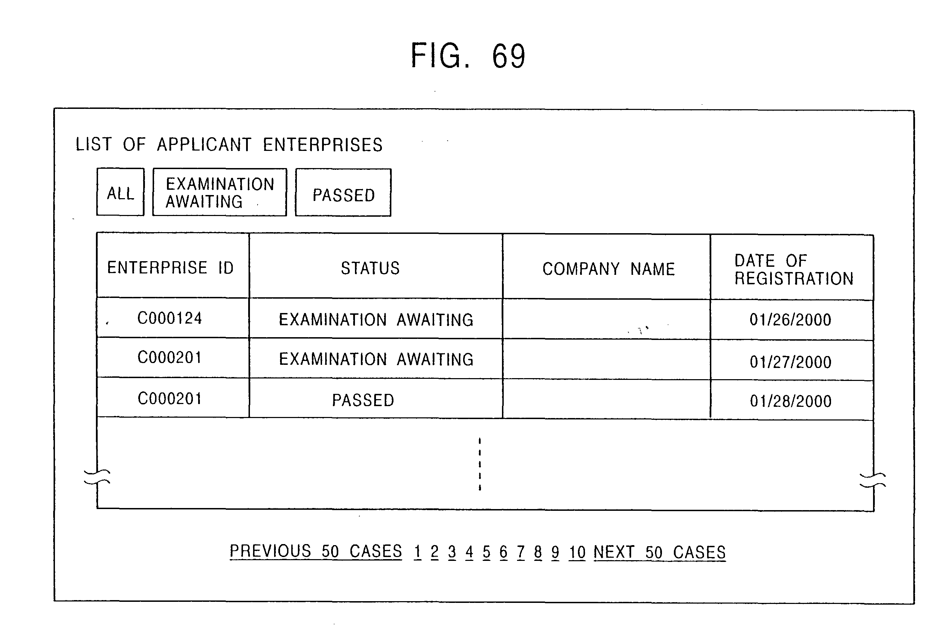

Fig. 68 is a flowchart showing enterprise-application examination processing on the accepted enterprise. When the EXAMINATION OF ENTERPRISE item is selected on the menu screen (Fig. 64), the management terminal 2B proceeds from step SP191 to step SP192, and displays the enterprise list screen shown Fig. 69 by accessing the management server 2A. On the enterprise list screen, its title is displayed at the top, and "ALL", "EXAMINATION AWAITING", and "PASSED" items follow. Below these items, company names recorded in the enterprise table T3 are displayed in the form of a list, with provisionally assigned enterprise IDs and statuses. When the All item is selected, the management terminal 2B displays all the enterprises whose applications have been accepted by the above enterprise-application accepting processing. When the EXAMINATION AWAITING item is displayed, the management terminal 2B displays enterprises whose applications await examination among all the enterprises whose applications have been accepted. When the PASSED item is selected, the management terminal 2B displays enterprises that have passed the enterprise-application examination processing.

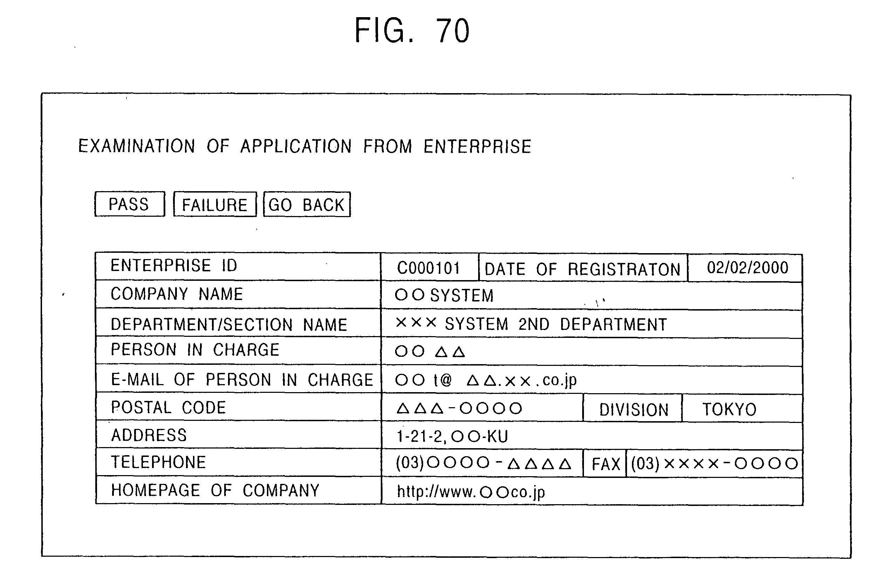

When the user clicks on one of the enterprise IDs, the management terminal 2B proceeds to step SP193, and detects the status of the corresponding enterprise application. When the status indicates an accepted state in which examination is being awaited, the management terminal 2B proceeds to step SP194, and displays the screen shown in Fig. 70 which indicates examination of the application from the enterprise. On this examination screen, its title is displayed at the top, and "PASS", "FAILURE", "GO BACK" items follow. Below these items, the details entered in the application are displayed.

In step SP195, the management terminal 2B accepts a user's operation based on the past record, etc. When the GO BACK item is selected, the management terminal 2B proceeds back to SP192. When the PASS item is selected, the management terminal 2B proceeds to step SP196, and executes enterprise-passing processing. The enterprise-passing processing is executed changing the status of the corresponding enterprise table T3 from the accepted state to a success-in-examination state.

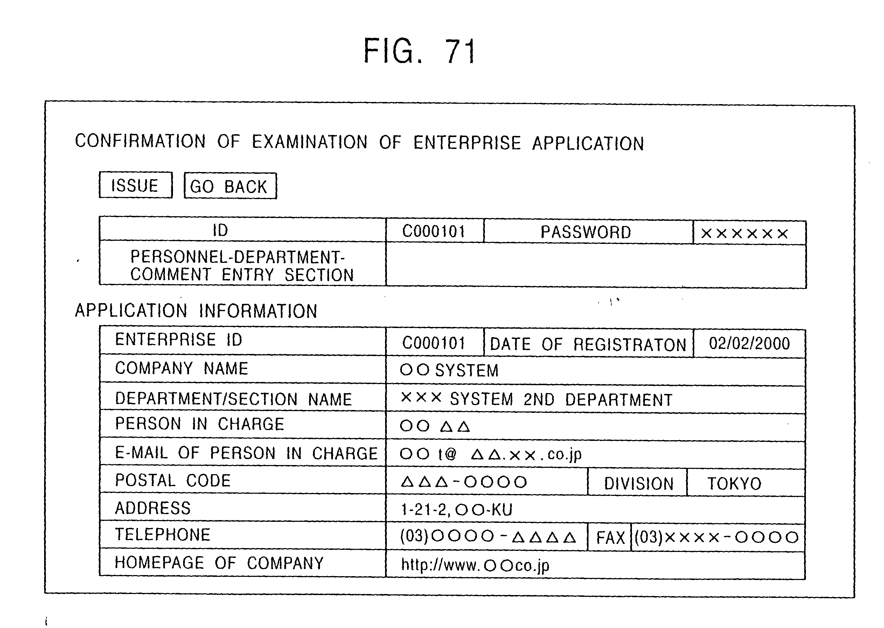

At this time, the management terminal 2B receives, from the management server 2A, a normal ID and password assigned to the enterprise, and displays the confirmation screen shown in Fig. 71. By performing an issuance operation using the confirmation screen, the management terminal 2B changes the status. The management terminal 2B proceeds to step SP197, and transmits e-mail that represents success in the examination to the contact address entered in the application. After that, the management terminal 2B proceeds back to step SP192. Accordingly, in the human resources employment system 1, an enterprise as an applicant can be used by a job-offering department.

On the examination screen (Fig. 70), when the FAILURE item is selected, the management terminal 2B proceeds from step SP195 to step SP198, and executes enterprise-application failure processing. The enterprise-application failure processing is executed changing the status of the corresponding enterprise table T3 from the accepted state to a failure.

When the enterprise selected by the user has a status representing success in the examination, the management terminal 2B proceeds from step SP193 to step SP199, and displays a comment-entry screen that indicates enterprise details and that is similar to the screen described using Fig. 70. The enterprise table T3 accepts entry of comments on the comment-entry screen. The entered comments are sentences, etc., which illustrate an enterprise outline or the like for the job-offering department.

After accepting the entry of comments, the management terminal 2B proceeds to step SP200 when an item for saving is selected on the screen, and executes enterprise-information storage processing so that comments entered in the corresponding enterprise table T3 are additionally recorded.

Accordingly, in the human resources employment system 1, a normal ID and password are posted after performing the enterprise-application examination, whereby the registration of the above-described skill sheet by the applicant terminal 4A or 4B can be performed. In the human resources employment system 1, enterprises that are registered on a so-called "blacklist" can be excluded. In addition, after posting a normal ID and password, by enabling the skill sheet to be registered, integrated management of applicants as persons and applicants relating to entrustment of business can be performed, whereby, when an applicant enterprise fails in examination, the need for excluding applicants that relate to entrustment of business to the enterprise is eliminated. This makes it possible to smoothly operate the human resources employment system 1 while avoiding complicated processing. Moreover, it is possible to prevent a human resources introducing enterprise from registering skill sheets.

In addition, after posting a normal ID and password, by enabling the skill sheet to be registered, human resources information relating to entrustment of business is recorded by using a link to the ID. This enables easy distinction from the other applicants.

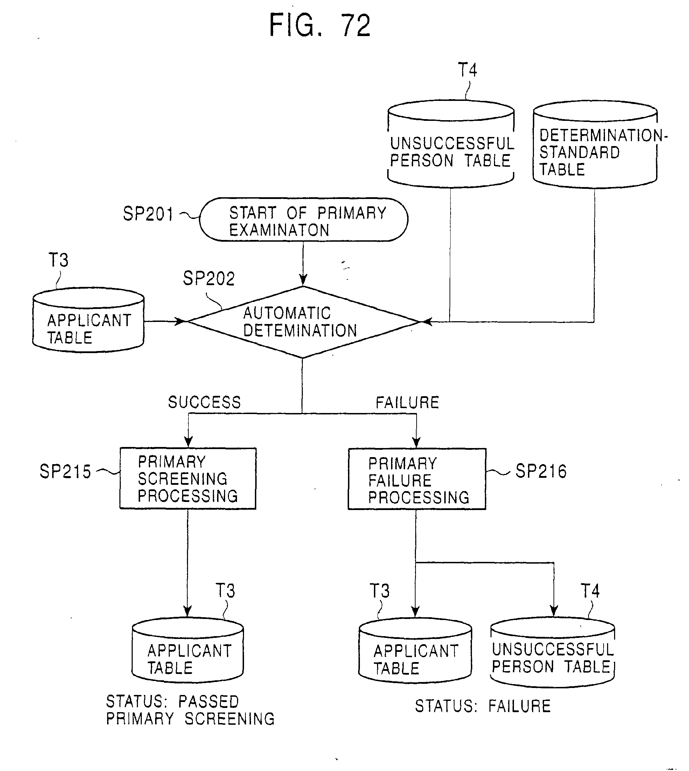

Fig. 72 is a flowchart showing primary examination processing that is executed by the management server 2A when an applicant as a person applies. In the human resources employment system 1, after a person's application that has passed the examination using the above-described format is examined in the primary examination processing, the application is further examined based on its document, and the person is registered in the human resources table T5 after an interview with the person is held by the personnel department, as required.

The management server 2A periodically repeats the primary examination processing in a time zone such as night, in which the management server 2A is accessed a relatively small number of times. Specifically, the management server 2A proceeds from step SP201 to step SP202. In step SP202, the management server 2A loads applications that each have a status set to represent an unprocessed state, compares details entered in the applications with the failure table T4, and detects repeated applications sent from applicants having failed before a predetermined period elapses. Similarly, by performing determination on applicants using a predetermined determination standard table, applicants such as those who fail to satisfy an English determination standard are detected.

As for each applicant detected as described above, the management server 2A proceeds from step SP202 to step SP203, and executes primary failure processing, whereby the status of the corresponding applicant table T2 is set to indicate a failure and the record corresponding to the applicant table T2 is recorded on the failure table T4. The applicant table T2 that has the status set to indicate failure is deleted by a notification to accessing by the applicant. The failure table T4 is deleted when a predetermined period elapses after the record corresponding to the applicant table T2 is recorded. These enable smooth long-term operation of the human resources employment system 1.

When no reason for failure is detected, the management server 2A proceeds from step SP202 to step SP204, and executes primary screen processing in which the status of the corresponding applicant table T2 is set to indicate that the application has passed the primary screening. This completes the processing for the applicant.

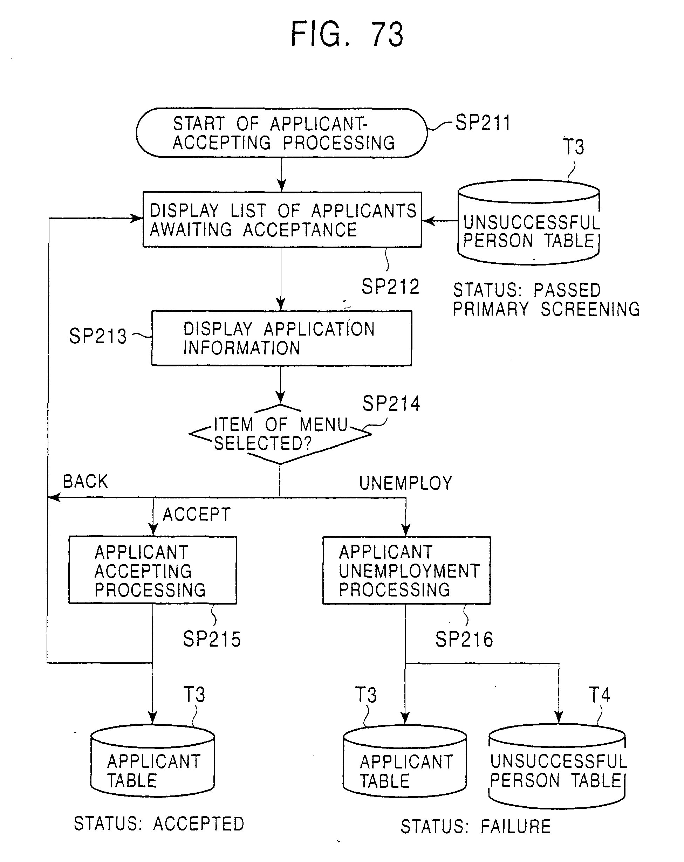

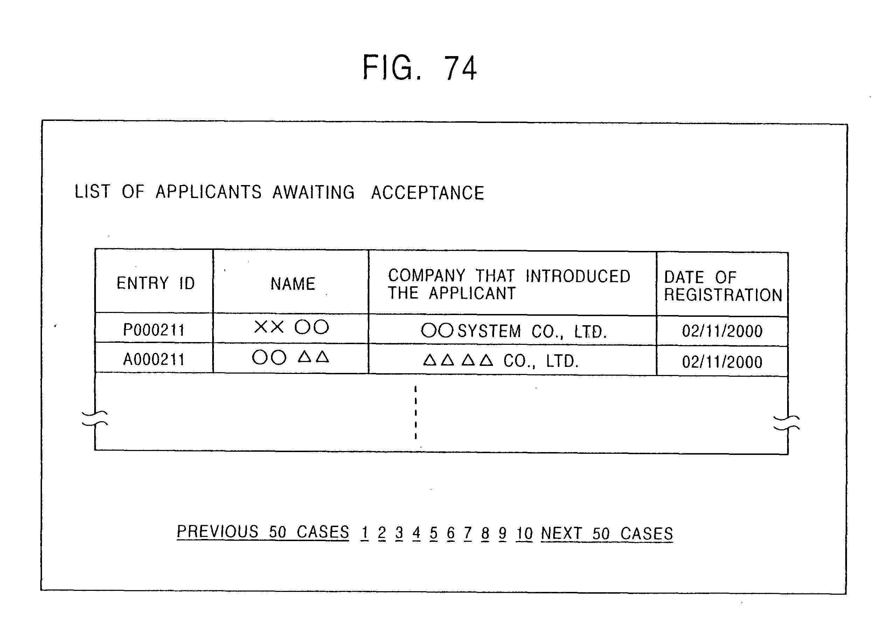

In the applicant-accepting processing shown in Fig. 73, the management terminal 2B further selects the applications that have passed the above mechanical primary screening. Specifically, on the management menu screen (Fig. 64), when the ACCEPTANCE OF APPLICATION FROM APPLICANT item is selected, the management terminal 2B proceeds from step SP211 to step SP212, and displays the screen shown in Fig. 74 which indicates a list of applicants awaiting acceptance. On the applicant list screen (Fig. 74), its title is displayed at the top, and each applicant table T2 in which the status is set to indicate that the application has passed the primary screening is displayed. For each case, an entry ID as a human resources ID, a name, a company that introduced the applicant, and a date of registration are displayed.

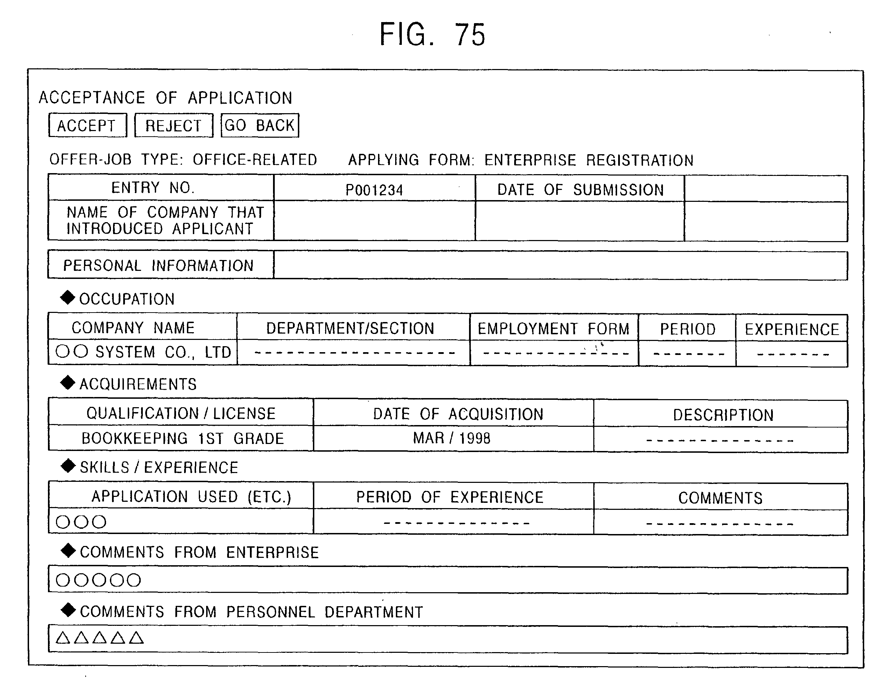

On the applicant list screen (Fig. 74), when one entry ID is selected, in step SP213, the management terminal 2B displays the application information screen shown in Fig. 75 by tracing the link of the entry ID. On the application information screen, its title is displayed at the top, and "ACCEPT", "REJECT", and "GO BACK" items follow. Below these items, an application form, and details entered in the application form are displayed.

In step SP214, the management terminal 2B determines which item is selected. When the GO BACK item is selected, the management terminal 2B proceeds back to step Sp212. When the ACCEPT item is selected, the management terminal 2B proceeds to step SP215, and executes applicant accepting processing in which the status of the corresponding applicant table T2 is changed from the primary-screened state to an accepted state. In a case in which it is determined that employment of the applicant is impossible due to, for example, an address that does not exist, the user selects the REJECT item, allowing the management terminal 2B to proceed from step SP214 to step SP216, and executes applicant unemployment processing in which the status of the corresponding applicant table T2 is changed from the primary-screened state to failure. A record corresponding to the applicant table T2 is recorded on the failure table T4.

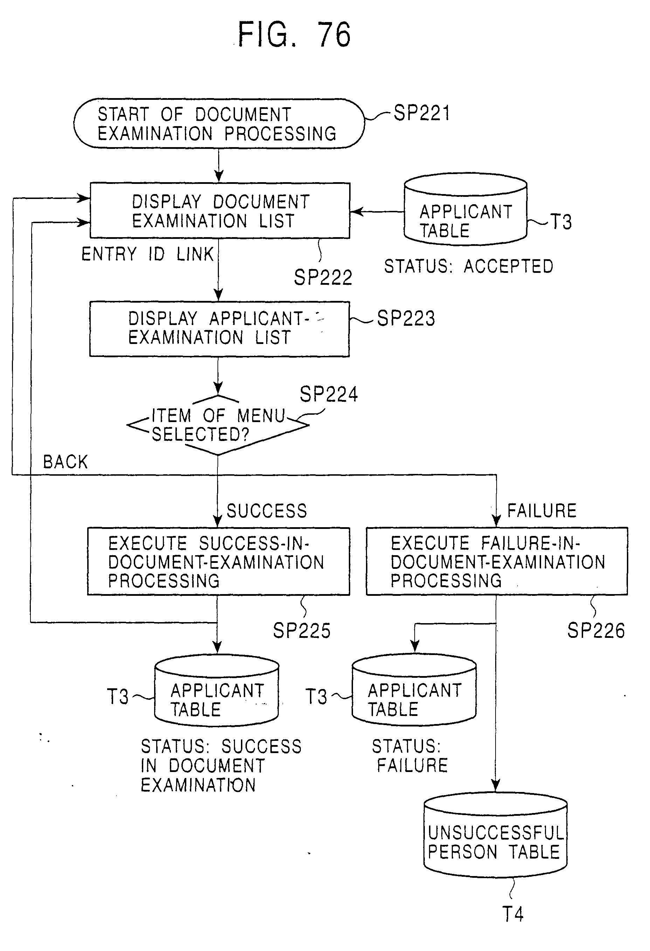

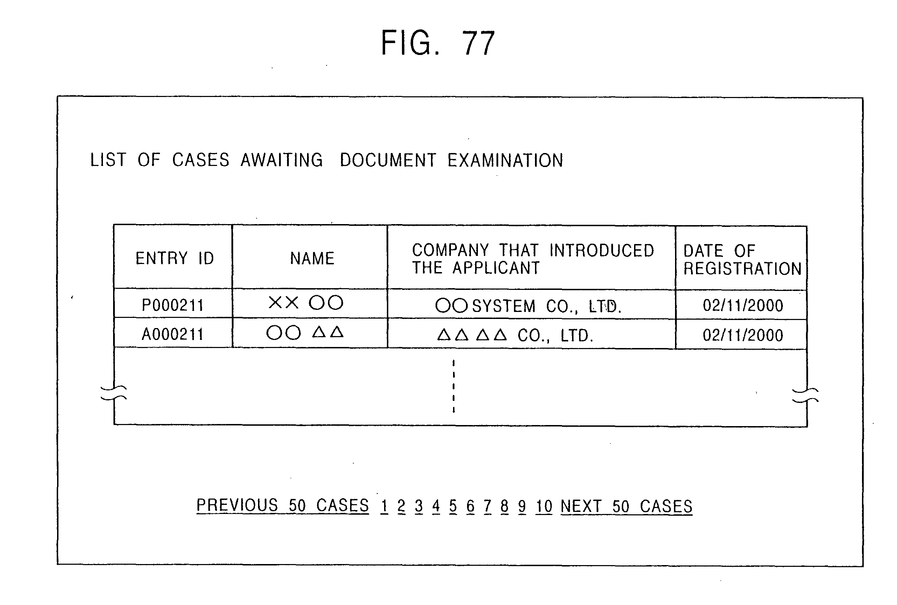

Fig. 76 is a flowchart showing document examination processing for examining each accepted application based on the entered information. On the management menu screen (Fig. 64), when the EXAMINATION BASED ON DOCUMENT item is selected, the management terminal 2B proceeds from step SP221 to step SP222, and displays the screen shown in Fig. 77 which indicates a list of cases awaiting document examination. On the list screen, its title is displayed at the top, and applications that have passed the applicant acceptance are displayed in the form of a list.

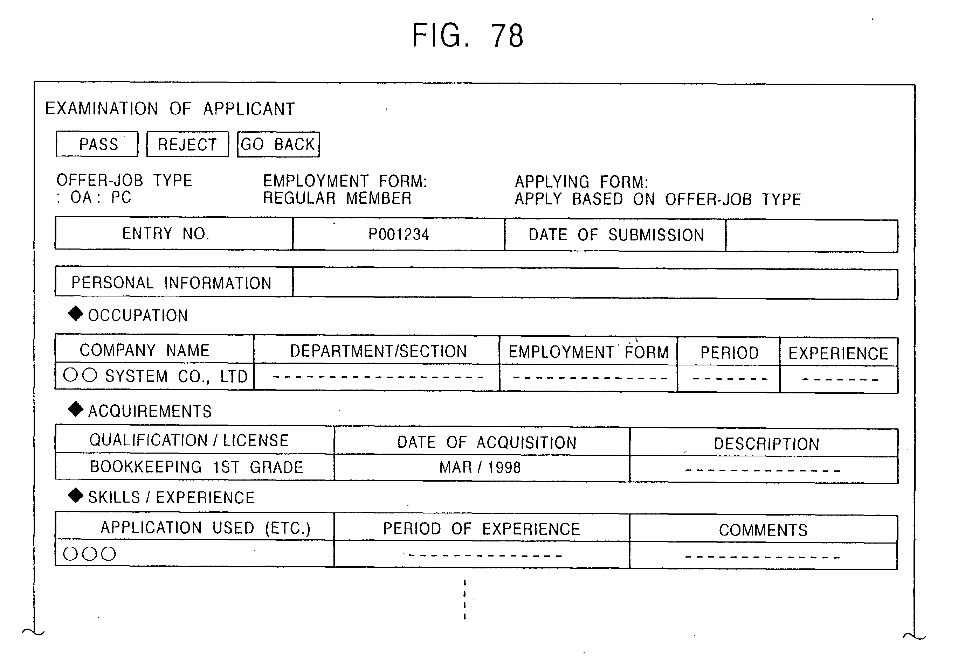

On the list screen (Fig. 77), one entry ID is selected, in step SP223, the management terminal 2B displays the applicant-examination screen shown in Fig. 78 by tracing the link of the selected entry ID. On-the applicant-examination screen, its title is displayed at the top, and "PASS", "REJECT", and "GO BACK" items follow. Below these items, an employment form, and details entered in the application form are displayed.

In step SP224, the management terminal 2B determines which item is selected. When the GO BACK item is selected, the management terminal 2B proceeds back to step SP222. When the ACCEPT item is selected, the management terminal 2B proceeds to step SP225, and executes success-in-document-examination processing in which the status of the corresponding applicant table T2 is changed from the accepted state to a success-in-document-examination state. In a case in which it is determined that employment is difficult as a result of the document-based examination, the user selects the REJECT item, allowing the management terminal 2B to proceed from step SP224 to step SP226, and executes failure-in-document-examination processing in which the status of the corresponding applicant table T2 is changed from the accepted state to failure. A record corresponding to the applicant table T2 is recorded n the failure table T4.

Accordingly, in the human resources employment system 1, when accessing by each applicant who passed the document examination is performed, an e-mail address for communication is posted, and in e-mail exchange using the e-mail address, each applicant is notified of an interview by the personnel department. In this processing, as to each application for, for example, a job offer, after holding an interview by the personnel department with the applicant, as required, it is determined, by posting the interview result to a job-offering department, whether the applicant is employed. As to each voluntary application, it is determined, in accordance with the user's manual operations, whether a job offer that corresponds to job-seeking conditions exists. Similarly to the application for the job offer, after holding an interview by the personnel department with the applicant, as required, it is determined, by posting the interview result to a job-offering department, whether the applicant is employed. In the human resources employment system 1, in a period after notifying the job-offering department until obtaining employment determination, a status for the corresponding application is set to indicate the process of determination, and registration to a human resources list (described later) is temporarily reserved. When employment is determined after performing the temporary reservation, the corresponding record is deleted from the applicant table T2, and is transferred to a personnel management server. When unemployment is determined, the status indicating the process of determination is changed to cancel the temporary reservation.

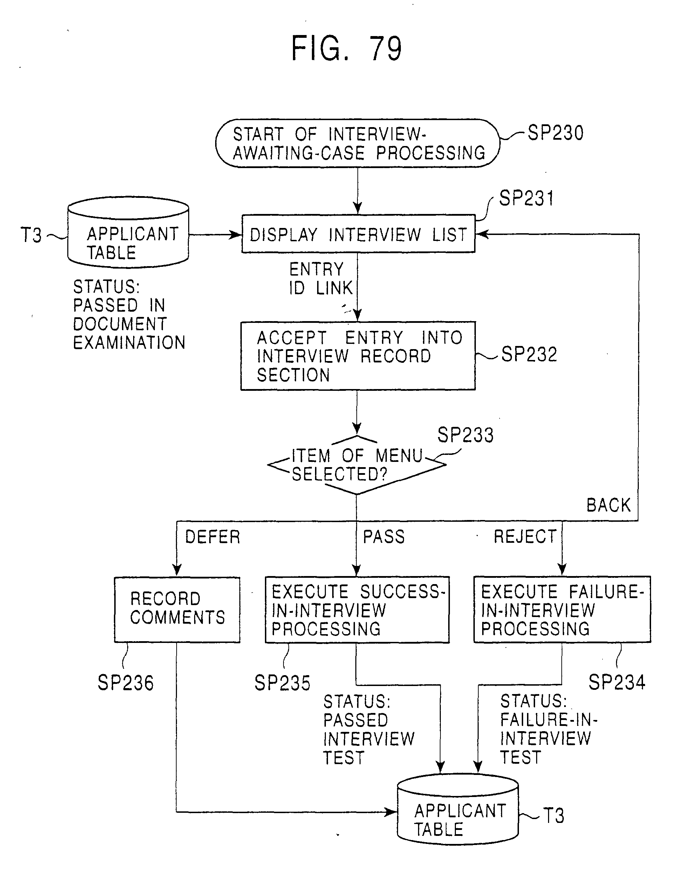

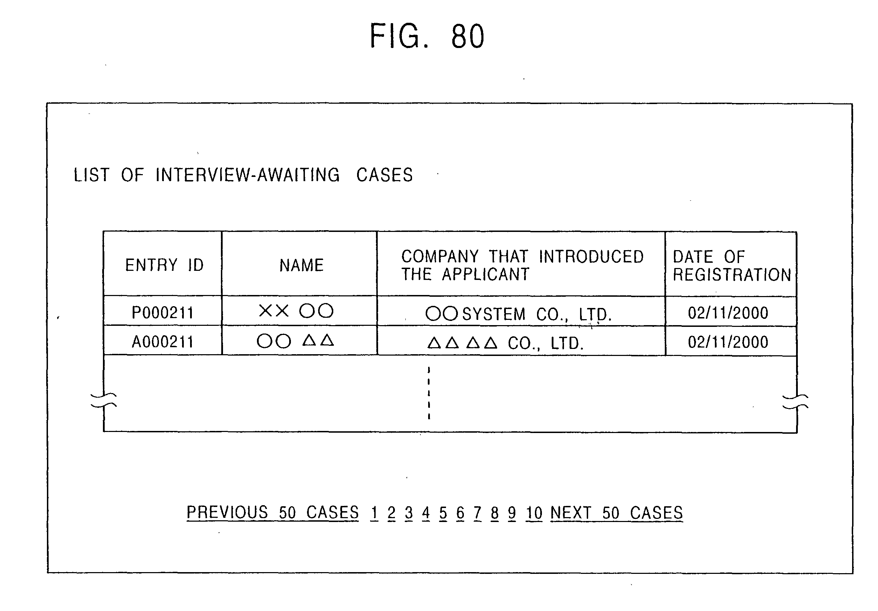

Fig. 79 is a flowchart showing interview-awaiting-case processing. The management terminal 2B executes the interview-awaiting-case processing, thereby recording the interview result on the applicant table T2. Specifically, on the management menu screen (Fig. 64), when the INTERVIEW AWAITING item is selected, the management terminal 2B proceeds from step SP230 to step SP231, and displays a list of interview-awaiting cases as shown in Fig. 80. On this interview-awaiting-case-list screen, its title is displayed at the top, and the entry IDs, names, etc., of the applications that have passed the document examination are displayed in the form of a list.

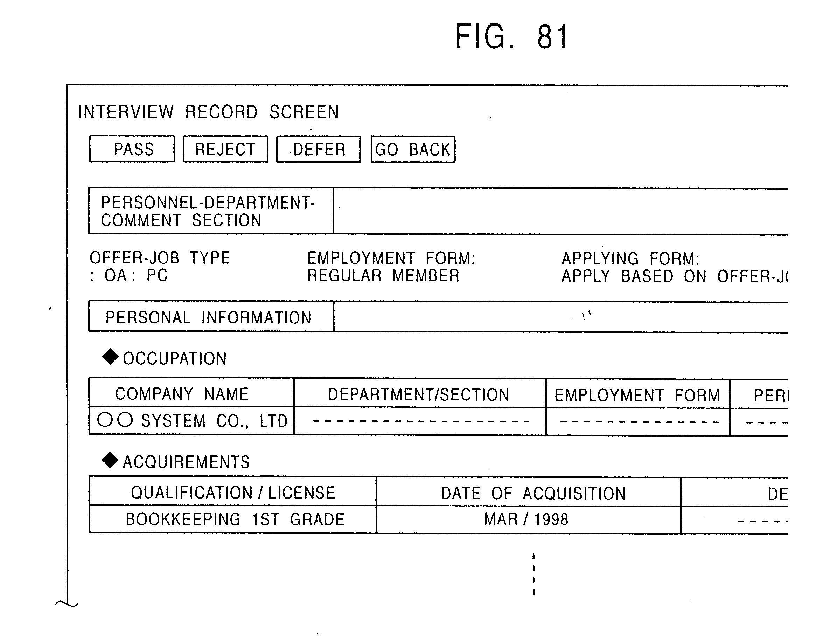

When one of the entry IDs is selected on the interview-awaiting-case-list screen, the management terminal 2B displays the interview record screen shown in Fig. 81 which contains details entered in the corresponding application form. On the interview record screen, its title is displayed at the top, and "PASS", "REJECT", "DEFER", and "GO BACK" items follow. Below these items, a comment entry section is displayed in which interviewer's impressions, etc., can be recorded. Also, an applying form, and details entered in the application form are displayed.

In step SP232, the management terminal 2B accepts entry into the interview record section. In step SP233, the management terminal 2B determines which item is selected. When the GO BACK item is selected, the management terminal 2B proceeds back to step SP231. When the REJECT item is selected as a result of interview, the management terminal 2B proceeds to step SP234, and executes failure-in-interview processing. The failure-in-interview processing is executed by changing the status of the corresponding applicant table T2 to failure, and recording the information in the interview record section.

When the PASS item is selected, the management terminal 2B proceeds to step SP235, and executes success-in-interview processing in which the status of the corresponding applicant table T2 is changed to success in interview by the personnel department and in which the information in the interview record section is recorded. In addition, for a case in which a conclusion may not be reached in one interview, the "DEFER" item is selected allowing the management terminal 2B to proceed to step SP236, and the management terminal 2B records the information in the interview record section on the applicant table T2 without changing the status.

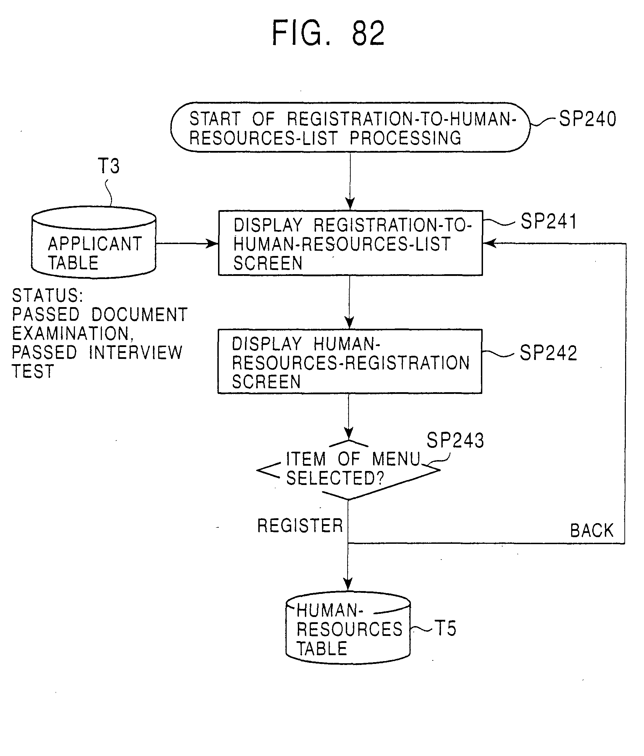

Fig. 82 is a flowchart showing registration-to-human-resources-list processing that is executed when the human resources table T5 is created based on each application recorded on the applicant table T2. In the human resources employment system 1, excluding those who each have a status set to indicate the process of determination by the operation of the job-offering department, persons who have passed the document examination are recorded on the human resources list (the human resources table T5) by the registration-to-human-resources-list processing. As a result, those who passed the interview but are not employed are also recorded on the human resources list.

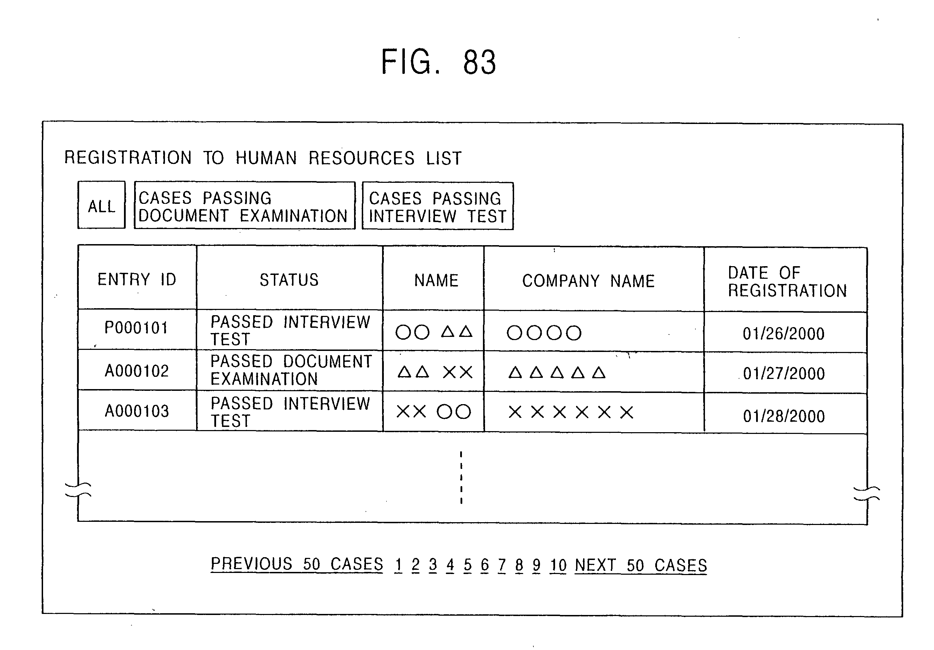

Specifically, on the management menu screen (Fig. 64), the HUMAN RESOURCES REGISTRATION item is selected, the management terminal 2B proceeds from step SP240 to step SP241, and displays a screen for human resources registration as shown in Fig. 83. On the screen for human resources registration, its title is displayed at the top, and the entry IDs, names, etc., of the applications that have passed the document examination are displayed in the form of a list.

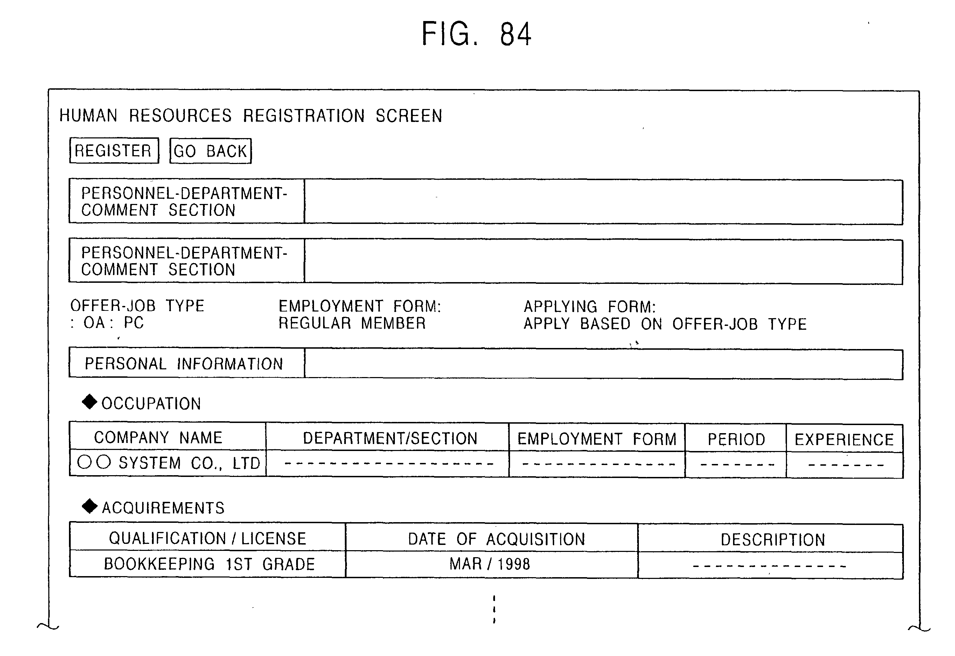

On the screen for human resources registration, when one of the entry IDs is selected, in step SP242, the management terminal 2B displays the human-resources-registration screen shown in Fig. 84 which contains the details entered in the corresponding application form. On the human-resources-registration screen, its title is displayed at the top, and "REGISTER" and "GO BACK" items follow. Below these items, comment entry sections are displayed which are used to record personnel-department's comments to the person in charge of operating the job-offer terminal 3A or 3B. Also, an interview record section is displayed with an applying form. For an application for a job offer, a job type and an employment form which relate to the application are displayed. After that, the details entered in the application form are displayed.

In step SP243, the management terminal 2B determines which item is selected. When the GO BACK item is selected, the management terminal 2B proceeds back to step SP241. When the REGISTRATION item is selected, the management terminal 2B records the contents of the applicant table T2 on the human resources table T5. Accordingly, in the human resources employment system 1, human resources that applied but are not employed and also human resources that have voluntarily applied can be actively employed by each job-offering department.

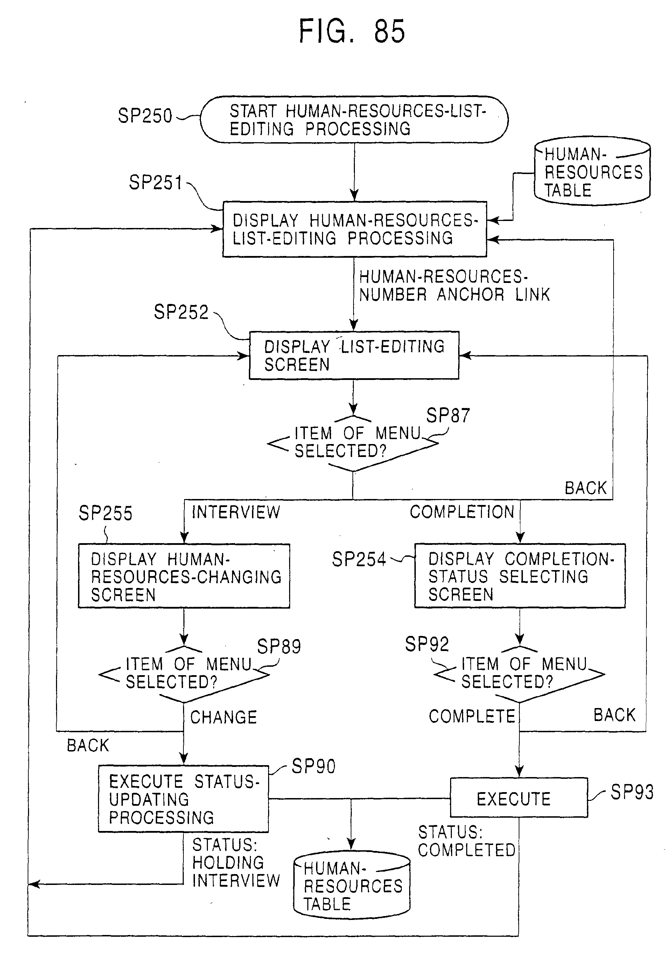

Accordingly, since, in the human resources employment system 1, job-offer forms are issued to the human resources registered as described above, the personnel department uses e-mail to communicate with each corresponding applicant, and an interview by the personnel department and an interview by the job-offering department are held for the applicant, as required. After that, determination on whether the applicant is employed is performed. Fig. 85 is a flowchart showing human-resources-list-editing processing in which a human resources list is processed for employment.

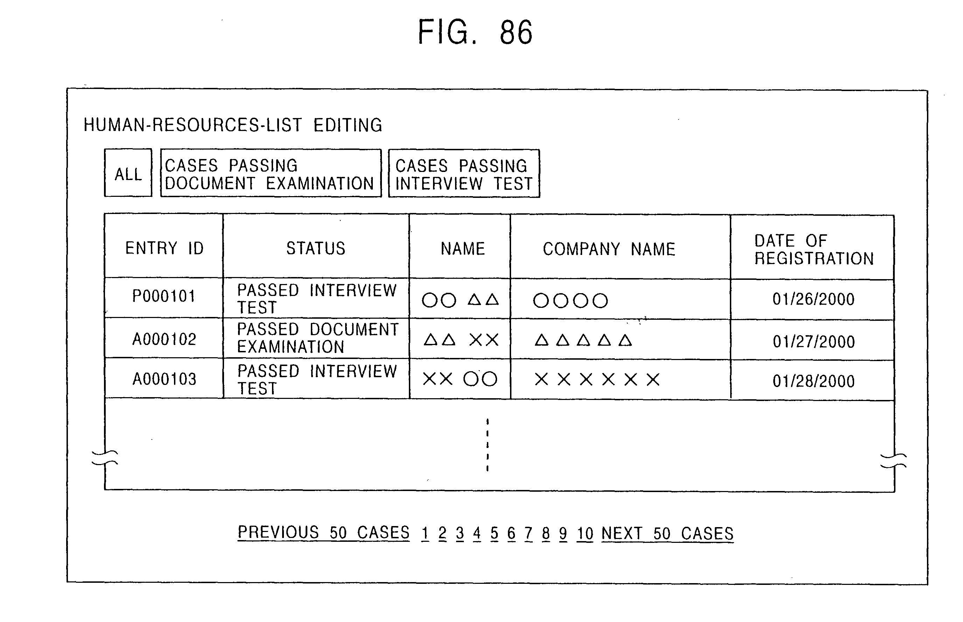

On the management menu screen (Fig. 64), when the EDITING HUMAN RESOURCES LIST item is selected, the management terminal 2B proceeds from step SP250 to step SP251, and displays the human-resources-list editing screen shown in Fig. 86. on the human-resources-list editing screen, its title is displayed at the top, and "ALL", "CASES PASSING DOCUMENT EXAMINATION", and "CASES PASSING INTERVIEW TEST" items follow. Below these items, the entry IDs, names, etc., of the applications that have passed the document examination are displayed in the form of a list.

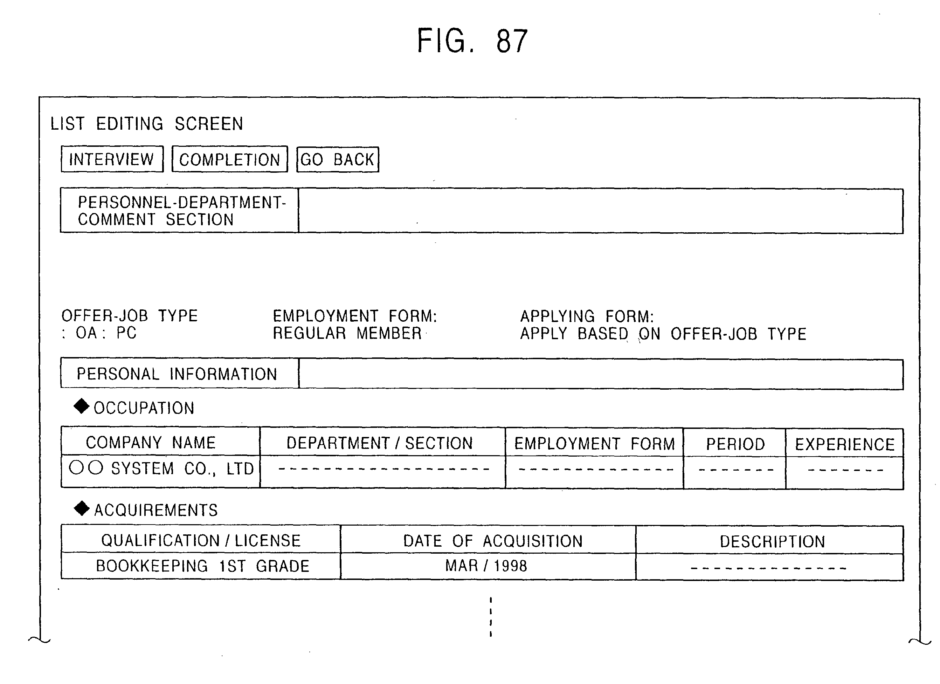

In response to selection of each displayed item, the management terminal 2B switches the presently displayed applications to the corresponding type of applications. When one of the entry IDs is selected, in step SP252, the management terminal 2B displays the list editing screen shown in Fig. 87 which includes details entered in the corresponding application form. On the list editing screen, its title is displayed at the top, and "INTERVIEW", "COMPLETION", and "GO BACK" items are displayed. Below these items, a comment entry section is displayed in which the personnel department records predetermined comments. Similarly to the interview record screen, the applicant information is displayed.

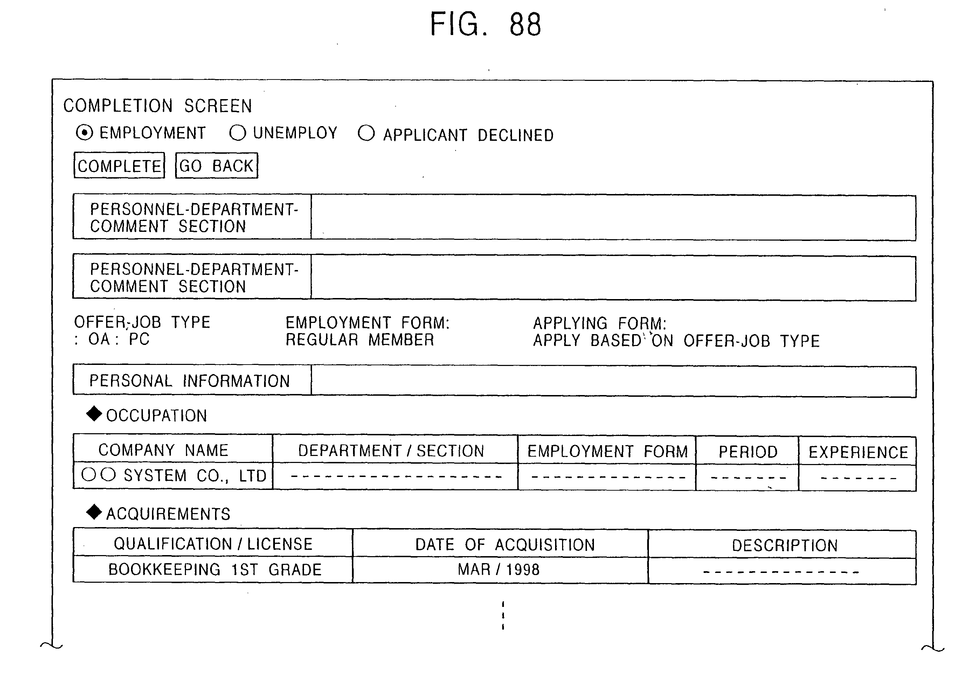

In step SP253, the management terminal 2B determines which item is selected. When the COMPLETION item is selected, the management terminal 2B proceeds to step SP254, and displays the completion screen shown in Fig. 88. On the completion screen, its title is displayed at the top, and "EMPLOYMENT COMPLETED", "UNEMPLOY", and "APPLICANT DECLINED" items follow. Below these items, "COMPLETE" and "GO BACK" items and the applicant information that is identical to that on the list editing screen are displayed.

The management terminal 2B uses the list editing screen to accept item settings, and determines, in step SP253, which item is selected. When the GO BACK item is selected, the management terminal 2B proceeds back to step SP251. When the COMPLETE item is selected, the management terminal 2B records the item-used operation on the corresponding human resources table, and sets the status so that it indicates completion, whereby in the successive processing the person is prevented from being viewed on the human resources list by the job-offering department. The COMPLETE item is applied to each applicant who is determined to be employed by job-offer-form submission based on the human resources list. The UNEMPLOY item is applied to each person who is determined not to be employed as a result of interview after job-offer-form submission based on the human resources list. The APPLICANT DECLINED item is applied to each person who has already declined after being informed of employment.

On the list editing screen (Fig. 87), when the INTERVIEW item is selected, the management terminal 2B proceeds from step SP253 to SP254, and displays a confirmation screen for status changing. On this confirmation screen, when an item for going back is selected, the management terminal 2B proceeds back to step SP252. When an item for interview is selected, the management terminal 2B proceeds to step SP255, and changes the status of the corresponding human resources table. Accordingly, in a case in which a job-offer form is issued by performing registration to the human resources list and the management terminal 2B proceeds to interview, the status is set to indicate the process of interview. For each applicant who should be continuously registered on the human resources list although interview has determined unemployment, the status that indicates the process of interview is returned to the original.

### 2. Operation of Embodiment

In the above-described construction, in the human resources employment system 1 (Fig. 1), a job-offer requirement and job-offer conditions are recorded as each job-offer form in the management server 2A of the management center 2 by the job-offer terminal 3A or 3b provided in each job-offering department, and the job-offer requirement and job-offer conditions are provided via the Internet to the applicant terminal 4A or 4B that accesses the management server 2A, as shown in Fig. 2. Each application from the applicant terminal 4A or 4B is recorded in the management server 2A, and is posted to prompt the job-offering department to determine employment.

In the above sequential processing, in the human resources employment system 1, after the job-offer requirement and job-offer conditions are set (Fig. 9) by performing, by a person in charge, entry into the job-offer form, and are approved by an approving department (Fig. 13), the job-offer requirement and job-offer conditions are accepted and approved by the personnel department (Figs. 18 and 32), and are subsequently processed so as to be accessed by the applicant terminal 4A or 4B. In a process from the creation of each job-offer form to the acceptance and approval of the job-offer form by the personnel department, the job-offer form is circulated among persons in charge by performing exchange of the job-offer form using a local area network or posting the job-offer form by e-mail. This enables employment activities that are greatly faster than that in a document-used processing case. For resubmission of the job-offer form, etc., such operation is executed similarly by exchange of the job-offer form using a local area network or posting the job-offer form by e-mail. This also enables greatly rapid employment activities.

When the job-offer form is approved by the personnel department, in the human resources employment system 1, the job-offer conditions are once rewritten and the rewritten job-offer conditions are provided to the applicant terminal 4A or 4B. This makes it possible to prevent the trend of research and development from being externally grasped, even if an inexperienced person in charge fills in the job-offer form. Therefore, each person in charge can set job-offer conditions without considering confidential information, and can rapidly create the job-offer form.

In the human resources employment system 1, when the job-offer information is provided to the applicant terminal 4A or 4B after being once rewritten as described, the job-offer form conditions are classified as requested by the applicant terminal 4A or 4B when being provided to the applicant terminal 4A or 4B. This enables a job-seeking side to easily and securely find out the desired conditions. Specifically, in the human resources employment system 1, the job-offer conditions are provided selecting either a classification of employment forms and a classification of job types. This can detect the desired job offer in a short time.

After the job-offer information is provided as described above, in the human resources employment system 1, each application is accepted by the applicant terminal 4A or 4B and the application information is recorded in the management server 2A. In the human resources employment system 1, an ID as a unique identification code, a password, and a URL are posted to each applicant when the applicant applies, and the applicant is notified of success or failure in an examination process by using the ID, the password, and the URL to access the management server 2A. This enables the human resources employment system 1 to notify each applicant of success or failure without paying attention to each local time even if the human resources employment system 1 uses the worldwide Internet to offer jobs. This can smoothly operate the human resources employment system 1. The management server 2A can notify each applicant of an examination result by simply recording success, failure, and a processing state in what is accessed using the ID, the password, and the URL. This can reduce the processing load on the human resources employment system 1.

When an application for a job offer is accepted as described above, the human resources employment system 1 performs format checking, and subsequently determines, by performing comparison with the record of the failure table T4, that an application, repeatedly sent within a predetermined period by a person who failed, is rejected. This automatically excludes applications of this type. Therefore, even if a large number of applications are sent, a number of persons in charge can perform processing on the applications. This enables the human resources employment system 1 to be smoothly operated.

After that, success or failure is determined based on document examination, and after holding an interview by the personnel department, introduction to a job-offering department is performed. In the successive processing, at the time each application has passed the document examination, an applicant is notified of an e-mail address for communication. Accordingly, in cases in which an interview cannot be easily held, such as the case of an application from abroad, e-mail is used to exchange various types of information, and the exchanged information can be used for material for determining employment or unemployment. This can reduce an enterprise-processing load when the enterprise develops job-offer activities by itself on the Internet.

The job-offering department finally determines whether each person, introduced as described above, should be employed or not.

In the above-described job-offer and job-seeking processing, the human resources employment system 1 performs processing on not only each application for a job offer but also on each so-called "voluntary application", etc. Specifically, in the human resources employment system 1, in accordance with selection of items in the applicant terminal 4A or 4B, by filling in a fixed application form for a job offer, and further issuing an ID, a password, and a URL, a voluntary application, and an application from an entrepreneur are accepted. Each application of this type, accepted as described above, is recorded in the management server 2A, similarly to an application for a job offer. After the application is examined similarly to the case of an application for a job offer, when the examination indicates that the application corresponds to job-offer conditions, the application is posted to the job-offering department, and determination of employment or unemployment is performed. Conversely, when the examination indicates that the application does not correspond to the job-offer conditions, the applicant is registered on the human resources list D4, with each application that has not reached determination of employment after passing the examination.

In the human resources employment system 1, the human resources list D4 is provided to not only a department that offers a job but also to the job-offer terminal 3A or 3B in each job-offering department so as to be viewed from the job-offer terminal 3A or 3B. Therefore, the human resources employment system 1 can perform integrated management of job-offer information and job-seeking information, and can be smoothly and effectively operated by effectively utilizing the two types of information. In other words, since application information can be fed back to the job-offering department, an application for each job offer is examined allowing each department to independently perform job-offering activities. As a result, the right person can be rapidly secured. In the job-offering activities independently performed by each department, job-offer conditions, etc., can be flexibly changed based on the fed-back application details in order to secure the right person, and a period required up to employment can be shortened than that in a conventional case.

In the above-described provision of the human resources list D4, the human resources employment system 1 prevents personal information, such as an address that can specify a person, and a telephone number, from being provided to the job-offer terminal 3A or 3B. This can protect privacy of the person.

As for the application, by issuing a URL, a password, and an ID for posting success or failure, performing communication by e-mail, and further excluding applications repeatedly sent from persons who failed, a small number of persons in charge can smoothly operate the human resources employment system 1.

In a case in which the job-offering department desires to employ one of persons registered as described above in the human resources list D4, the human resources employment system 1 performs, similarly to the case of widely announcing job offers, processing in which, after the job-offering department fills in and approves a job-offer form, and the personnel department approves the job-offer form, e-mail is used to confirm the intention of the corresponding applicant. Accordingly, also when the human resources list D4 is used to achieve employment, the human resources employment system 1 can perform human resources employment by performing processing similar to that in employment from job offering. This enables even a department in charge of employment to perform smooth processing.

When the human resources list D4 is used to create the corresponding job-offer form, as described above, in the human resources employment system 1, the corresponding human resources ID is selectively operated to create a job-offer form, whereby extremely simplified operations can create a job-offer form. This enables even an inexperienced job-offering department to independently set job-offer requirements and conditions and to perform easy and secure job-offering activities.

In the human resources employment system 1, each application by an enterprise for entrustment of business is also accepted by the applicant terminal 4A or 4B. Specifically, in the human resources employment system 1, selection of items by the applicant terminal 4A or 4B provides an enterprise-accepting form, and by filling the form, registration of the enterprise is accepted storing a contact address on the Internet. Subsequently, after the enterprise application is recorded in the management server 2A, and is examined by the personnel department, the result of the examination is sent to the contact address. When the result is a success, the enterprise application is normally registered on the enterprise table T3, information on the enterprise can be set so as to be accessed by the job-offer terminal 3A or 3B in the job-offering department, similarly to the case of the human resources list D4. Accordingly, in the human resources employment system 1, an enterprise can be selected and entrusted with business by the job-offering department.

In the above-described enterprise registration, the human resources employment system 1 performs examination. When the result of the examination is a success, a password and an ID for accessing are sent. By performing accessing using the password and the ID, a skill sheet a person for entrustment of business can be submitted. Accordingly, in the human resources employment system 1, applications from not only persons but also from enterprises can be received, which effectively utilizes the human resources employment system 1. In the human resources employment system 1, the skill sheet can be submitted after the application passes examination, whereby the human resources employment system 1 can be smoothly operated. Specifically, for example, applications from persons who belong to an enterprise registered on the blacklist can be securely excluded. Also, since the skill sheet includes personal information, by preventing submission of the skill sheet, for example, from service providers that introduce human resources, easy inflow of the personal information can be prevented.

Accordingly, in the human resources employment system 1, a skill sheet for use in entrustment of business, which is submitted as described above, is also registered on a human resources list. The registered human resources list is used as a reference material for entrustment of business. Specifically, when a person registered on the human resources list D4 is related to an application-by-person, the person is employed by contract in one of employment forms such as a non-regular member, a regular member, and an entrepreneur. Conversely, in the case of a person belonging to the registered enterprise, the person is employed in an employment form such as loan from the registered enterprise. Therefore, in this embodiment, not only application from persons but also applications from various human resources can be received.

### 3. Effects of Embodiment

According to the above-described construction, by not only externally providing job-offer information but also internally providing job-offer information, for example, when a job-offering enterprise develops job-offer activities on the Internet by itself, a job-offer system can be effectively utilized.

By rewriting job-offer conditions in the job-offering department and externally providing job-offer information, even an inexperienced person in charge of employment easily sets job-offer requirements and conditions, and a leakage of secrets can be prevented.

By allowing human resources information on a job-seeking request to be viewed by a terminal of the job-offering department, except for personal information on the job-seeking request, the privacy of each person as an applicant can be protected.

By accepting an application for each job offer and each voluntary application, a large number of persons can be registered on a human resources list. This enables rapid employment of appropriate persons and effective use of the human resources employment system 1.

By using selectable classification methods to classify job-offer requirements and conditions, and providing the classified job-offer requirements and conditions, in other words, by providing classifications according to employment forms and classifications according to job types, an applicant side can easily and rapidly select a job offer having the desired job-offer conditions. This can improve the convenience of using the human resources employment system 1.

In addition, by accepting not only an application for each job offer but also job-seeking request from each enterprise, and acquiring information on a person belonging to the enterprise, it is possible to receive applications not only from persons but also from enterprises. Accordingly, for example, when a job-offering enterprise develops job-offer activities on the Internet by itself, integrated management of applications from persons and applications from enterprises is performed enabling provision of job offers to various types of persons. This can effectively utilize the job-offer system.

At this time, an identification code is assigned to each enterprise whose application has passed an examination of the enterprise's request, and the identification code is used to acquire job-offer information. This can simplify management of applicants.

By allowing information on human resources information on each application from a person and information of each person belonging to an enterprise to be viewed by a terminal in the job-offering department, also the information, which relates to the enterprise application, can be effectively utilized.

As for the enterprise application, by allowing the human resources information to be viewed, except for personal information included in the human resources information, the privacy of the person can be effectively protected.

In addition, since job-offer conditions can be set, considering human resources information on each job-seeking request, even an inexperienced department can easily perform job-offer activities, and can perform job-offer activities in which a human resources type is specified, similarly to other types of job-offer activities. Therefore, for example, when a job-offering enterprise develops job-offer activities on the Internet by itself, a job-offer system is smoothly operated, whereby rapid job-offer activities can be performed.

By issuing a password and an identification code when each application is made, and notifying each applicant of an examination result in response to accessing using the password and the identification code, a processing load required for notifying the applicant of success or failure can be reduced. This can smoothly operate the job-offer system, for example, when a job-offering enterprise develops job-offer activities on the Internet by itself.

By also recording failure results and comparing each application with the record in order to determine success or failure, applications repeatedly sent from applicants who failed can be excluded. This can reduce a system-operation load, so that the job-offer system can be smoothly operated.

### 4. Other Embodiments

The above-described embodiment describes a case in which applications from enterprises are accepted in addition to applications from persons. However, the present invention is not limited to the embodiment but can be widely applied to a case in which the system is operated so that only applications from persons are accepted.

The above-described embodiment describes a case in which job-offer information is provided in the form of classifications according to job types and classifications according to employment forms. However, the present invention is not limited to the case. For example, the job-offer information may be provided in the form of classifications according to places of employment.

The above-described embodiment describes a case in which registration of applications from companies that introduces human resources is not accepted. However, the present invention is not limited to the case. That is, in the present invention, by performing processing that is different from processing required for an enterprise to which business is entrusted, such registration may be accepted.

The above-described embodiment describes a case in which, by providing various screens from the management server 2A in response to operations in the job-offer terminal 3A or 3B, job-offer conditions are set corresponding to human resources by the management server 2A. However, the present invention is not limited to the case. Each terminal may set job-offer conditions.

The above-described embodiment describes a case in which a single enterprise develops job-offer activities. However, the present invention is not limited to the case, but can be widely applied to services that provide human resources information to enterprises.

Moreover, the above-described embodiment describes a case in which in-company job-offer requirements are processed. However, the present invention is not limited to the case, but can be widely applied to cases in which job-offer requirements from a limited number of departments of a company are processed by a department that manages the limited number of departments or by a department that manages all the departments of the company, and in which job-offer requirements, sent not only from a company but also from each department belonging to a single group of enterprises such as subsidiary companies and affiliated companies, are processed. Even in the latter case, a management department the process the job-offer requirements accepts the job-offer requirements and job-offer conditions via an internal network that is only accessible by a department that sends the job-offer requirements, and outputs the accepted job-offer requirements and conditions to an external network that has such access limitation, so that the corresponding job-offer information is acquired and provided.

## Claims

1. A human resources employment method comprising:
a job-offer-information acquiring step for acquiring job-offer requirements and conditions from a terminal linked to a local area network;
a job-offer-information providing step for outputting the job-offer requirements and conditions to a terminal linked to an external network;
an application accepting step for acquiring a job-seeking request and human resources information relating to said job-seeking request via said external network; and
a job-seeking-information providing step for providing the human resources information relating to said job-seeking request to said terminal linked to said local area network;
wherein in said job-seeking-information providing step, the human resources information relating to said job-seeking request is allowed to be viewed by even a terminal other than said terminal which transmits the job-offer requirements.

2. A human resources employment method according to Claim 1, wherein in said job-offer-information providing step, information which is obtained by rewriting the job-offer conditions acquired in said job-offer-information acquiring step is output as the job-offer conditions.

3. A human resources employment method according to Claim 1 or 2, wherein in said job-seeking-information providing step, the human resources information is allowed to be viewed except for personal information included in the human resources information.

4. A human resources employment method according to Claim 1, 2 or 3 wherein in said application accepting step, the accepted job-seeking request is a job-seeking request corresponding to the job-offer conditions or a job-seeking request which does not correspond to the job-offer conditions.

5. A human resources employment method according to Claim 1, 2, 3 or 4 wherein:
in said job-offer-information providing step, classifications which are selectable by said terminal linked to said external network are provided, and the job-offer requirements and conditions are classified according to selection by said terminal linked to said external network so that the classified job-offer requirements and conditions are provided; and
said classifications which are selectable include at least classifications according to employment forms and classifications according to job types.

6. A human resources employment system for acquiring job-offer requirements and conditions from a terminal linked to a local area network and for outputting the job-offer requirements and conditions to a terminal linked to an external network, wherein:
a job-seeking request and human resources information relating to said job-seeking request are acquired via said external network; and
the human resources information relating to said job-seeking request are provided to said terminal linked to said local area network so as to be viewed by a terminal other than the terminal which transmits the job-offer requirements.

7. A human resources employment system according to Claim 6, wherein the job-offer requirements acquired from said terminal linked to said local area network are rewritten, and the rewritten job-offer requirements are output to said terminal linked to said external network.

8. A human resources employment system according to Claim 6 or 7, wherein the human resources information is provided to said terminal linked to said local area network in a form in which personal information is excluded from the human resources information.

9. A human resources employment system according to Claim 6, 7 or 8 wherein the accepted job-seeking request is a job-seeking request corresponding to the job-offer conditions or a job-seeking request which does not correspond to the job-offer conditions.

10. A human resources employment system according to Claim 6, 7, 8 or 9 wherein:
the job-offer requirements and conditions are classified according to selection by said terminal linked to said external network, and the classified job-offer requirements and conditions are provided to said terminal linked to said external network; and
the classifications of the job-offer requirements and conditions according to the selection include at least classifications according to employment forms and classifications according to job types.

11. A computer program comprising program code means for executing human resources employment processing, said human resources employment processing comprising:
a job-offer-information acquiring step for acquiring job-offer requirements and conditions from a terminal linked to a local area network;
a job-offer-information providing step for outputting the job-offer requirements and conditions to a terminal linked to an external network;
an application accepting step for acquiring a job-seeking request and human resources information relating to said job-seeking request via said external network; and
a job-seeking-information providing step for providing the human resources information relating to said job-seeking request to said terminal linked to said local area network wherein in said job-seeking-information providing step, the human resources information relating to said job-seeking request is allowed to be viewed by even a terminal other than said terminal which transmits the job-offer requirements.

12. A computer program according to Claim 11, wherein in said job-offer-information providing step, information which is obtained by rewriting the job-offer conditions acquired in said job-offer-information acquiring step is output as the job-offer conditions.

13. A computer program according to Claim 11 or 12, wherein in said job-seeking-information providing step, the human resources information is allowed to be viewed except for personal information included in the human resources information.

14. A computer program according to Claim 11, 12 or 13 wherein in said application accepting step, the accepted job-seeking request is a job-seeking request corresponding to the job-offer conditions or a job-seeking request which does not correspond to the job-offer conditions.

15. A computer program according to Claim 11, 12, 13 or 14 wherein:
in said job-offer-information providing step, classifications which are selectable by said terminal linked to said external network are provided, and the job-offer requirements and conditions are classified according to selection by said terminal linked to said external network so that the classified job-offer requirements and conditions are provided; and
said classifications which are selectable include at least classifications according to employment forms and classifications according to job types.

16. A human resources employment method comprising:
a job-offer-information acquiring step for acquiring job-offer requirements and conditions from a terminal linked to a local area network;
a job-offer-information providing step for outputting the job-offer requirements and conditions to a terminal linked to an external network;
an application accepting step for acquiring a job-seeking request and human resources information relating to said job-seeking request via said external network; and
a job-seeking-information providing step for providing the human resources information relating to said job-seeking request to said terminal linked to said local area network;
wherein in said job-seeking-information providing step, an application by a person and a job-seeking request by an enterprise are accepted and information on a person belonging to said enterprise is acquired.

17. A human resources employment method according to Claim 16, wherein said application accepting step comprises the steps of:
examining the request by said enterprise;
assigning an identification code to said enterprise when the request by said enterprise has passed the examination in the examining step, and registering said enterprise; and
acquiring the information on said person belonging to said enterprise by using the identification code

18. A human resources employment method according to Claim 16 or 17, wherein in said job-seeking-information providing step, the human resources information relating to said job-seeking request, and the information on said person belonging to said enterprise are allowed to be viewed by said terminal linked to said local area network.

19. A human resources employment method according to Claim 16, 17 or 18 wherein in said job-seeking-information providing step, the human resources information relating to said job-seeking request, and the information on said person belonging to said enterprise are allowed to be viewed except for personal information included in the two types of information.

20. A human resources employment system for acquiring job-offer requirements and conditions from a terminal linked to a local area network and for outputting the job-offer requirements and conditions to a terminal linked to an external network, said human resources employment system comprising:
application-accepting means for acquiring a job-seeking request and human resources information relating to said job-seeking request via said external network; and
job-seeking-information providing means for providing the human resources information to said terminal linked to said local area network;
wherein said application-accepting means accepts an application by a person and a job-seeking request by an enterprise and acquires information on a person belonging to said enterprise.

21. A human resources employment system according to Claim 20, wherein said application-accepting means comprises:
examination means for examining the job-seeking request by said enterprise;
enterprise-registration means for assigning an identification code to said enterprise when said enterprise has passed the examination by said examination means; and
acquirement means for acquiring information on the person belonging to said enterprise by using the identification code.

22. A computer program comprising program code means for executing human resources employment processing, said human resources employment processing comprising:
a job-offer-information acquiring step for acquiring job-offer requirements and conditions from a terminal linked to a local area network;
a job-offer-information providing step for outputting the job-offer requirements and conditions to a terminal linked to an external network;
an application accepting step for acquiring a job-seeking request and human resources information relating to said job-seeking request via said external network; and
a job-seeking-information providing step for providing the human resources information relating to said job-seeking request to said terminal linked to said local area network;
wherein in said job-seeking-information providing step, an application by a person and a job-seeking request by an enterprise are accepted and information on a person belonging to said enterprise is acquired.

23. A computer program according to Claim 22, wherein said application accepting step comprises the steps of:
examining the request by said enterprise;
assigning an identification code to said enterprise when the request by said enterprise has passed the examination in the examining step, and registering said enterprise; and
acquiring the information on said person belonging to said enterprise by using the identification code.

24. A human resources employment method comprising:
a job-offer-information acquiring step for acquiring job-offer requirements and conditions from a terminal linked to a local area network;
a job-offer-information providing step for outputting the job-offer requirements and conditions to a terminal linked to an external network;
an application accepting step for acquiring a job-seeking request and human resources information relating to said job-seeking request via said external network; and
a job-seeking-information providing step for providing the human resources information relating to said job-seeking request to said terminal linked to said local area network;
wherein in job-seeking-information providing step, selection on the human resources information relating to said job-seeking request is accepted, and the job-offer requirements and conditions are set corresponding to the accepted selection.

25. A job-offer method for outputting job-offer requirements and conditions to a server linked to a network so that introduction of human resources is performed, said job-offer method comprising the steps of:
accepting human resources information on a job-seeking request via said network;
accepting selection on the human resources information; and
setting the job-offer requirements and conditions to correspond to the selection.

26. A job-offer method according to Claim 25, wherein:
said network is a local area network;
the job-offer requirements and conditions are acquired and output to a terminal linked to an external network; and
the job-seeking request and the human resources information thereon are acquired via said external network and provided to a terminal linked to said local area network.

27. A human resources employment system for acquiring job-offer requirements and conditions from a terminal linked to a local area network and for outputting the job-offer requirements and conditions to a terminal linked to an external network,
wherein:
a job-seeking request and human resources information relating to said job-seeking request are acquired via said external network;
the human resources information is provided to said terminal linked to said local area network; and
selection on the human resources information is accepted, and the job-offer requirements and conditions are set corresponding to the selection.

28. A human resources employment system for outputting job-offer requirements and conditions to a server linked to a network so that introduction of human resources is performed,
wherein:
human resources information on a job-seeking request is acquired via said network;
selection on the human resources information is accepted; and
the job-offer requirements and conditions are set correspond to the selection.

29. A recording medium containing human resources employment processing, said human resources employment processing comprising:
a job-offer-information acquiring step for acquiring job-offer requirements and conditions from a terminal linked to a local area network;
a job-offer-information providing step for outputting the job-offer requirements and conditions to a terminal linked to an external network;
an application accepting step for acquiring a job-seeking request and human resources information relating to said job-seeking request via said external network; and
a job-seeking-information providing step for providing the human resources information relating to said job-seeking request to said terminal linked to said local area network;
wherein in said job-seeking-information providing step, selection on the human resources information is accepted, and the job-offer requirements and conditions are set corresponding to the selection.

30. A recording medium containing human resources employment processing, said human resources employment processing comprising the steps of:
accepting provision of human resources information on a job-seeking request via a network;
accepting selection on the human resources information; and
setting job-offer requirements and conditions to correspond to the selection.

31. A human resources employment method comprising:
a job-offer-information acquiring step for acquiring job-offer requirements and conditions from a terminal linked to a local area network;
a job-offer-information providing step for outputting the job-offer requirements and conditions to a terminal linked to an external network;
an application accepting step for acquiring a job-seeking request and human resources information relating to said job-seeking request via said external network;
an examination step for examining the job-seeking request;
an examination-result notification step for posting the result of the examination in said examination step to a terminal used relating to said job-seeking request; and
a job-seeking-information providing step for, based on the result of the examination in said examination step, providing the human resources information to said terminal linked to said local area network;
wherein:
in said application accepting step, an identification code and a password are posted by acquiring the job-seeking request and the human resources information; and
in said examination-result notification step, when said terminal used relating to said job-seeking request uses the ID code and the password to perform accessing, a corresponding response is posted as the result of the examination.

32. A human resources employment method comprising:
a job-offer-information acquiring step for acquiring job-offer requirements and conditions from a terminal linked to a local area network;
a job-offer-information providing step for outputting the job-offer requirements and conditions to a terminal linked to an external network;
an application accepting step for acquiring a job-seeking request and human resources information relating to said job-seeking request via said external network;
an examination step for examining the job-seeking request; and
a job-seeking-information providing step for, based on the result of the examination in said examination step, providing the human resources information to said terminal linked to said local area network;
wherein said examination step comprises:
a recording step for recording, in at least a predetermined period, a job-seeking request which has failed in the examination and human resources information on the job-seeking request; and
an examination-by-comparison step for examining said job-seeking request by comparing said job-seeking request with the record generated in said recording step.

33. A human resources employment method according to Claim 32, wherein:
in said application accepting step, an identification code and a password are posted by acquiring said job-seeking request and said human resources information; and
in said job-seeking-information providing step, when said terminal linked to said local area network uses the ID code and the password to perform accessing, a corresponding response is posted as the result of the examination.

34. A human resources employment system for acquiring job-offer requirements and conditions from a terminal linked to a local area network and for outputting the job-offer requirements and conditions to a terminal linked to an external network, said human resources employment system comprising:
application-accepting means for acquiring a job-seeking request and human resources information relating to said job-seeking request via said external network;
examination means for examining said job-seeking request;
examination-result notification means for posting the result of the examination by said examination means to a terminal relating to said job-seeking request; and
job-seeking-information providing means for, based on the result of the examination by said examination means, providing the human resources information to said terminal linked to said local area network;
wherein:
said application-accepting means posts an identification code and a password by acquiring said job-seeking request and the human resources information; and
examination-result notification means posts, when being accessed using the identification code and the password, a corresponding response as the result of the examination.

35. A human resources employment system for acquiring job-offer requirements and conditions from a terminal linked to a local area network and for outputting the job-offer requirements and conditions to a terminal linked to an external network, said human resources employment system comprising:
application-accepting means for acquiring a job-seeking request and human resources information relating to said job-seeking request via said external network;
examination means for examining said job-seeking request; and
job-seeking-information providing means for, based on the result of the examination by said examination means, providing the human resources information to said terminal linked to said local area network;
wherein in said examination means, a job-seeking request which has failed in the examination and human resources information on the job-seeking request are recorded in at least a predetermined period, and said job-seeking request is examined by comparing said job-seeking request with the record.

36. A computer program comprising program code means for executing human resources employment processing, said human resources employment processing comprising:
a job-offer-information acquiring step for acquiring job-offer requirements and conditions from a terminal linked to a local area network;
a job-offer-information providing step for outputting the job-offer requirements and conditions to a terminal linked to an external network;
an application accepting step for acquiring a job-seeking request and human resources information relating to said job-seeking request via said external network;
an examination step for examining the job-seeking request;
an examination-result notification step for posting the result of the examination in said examination step to a terminal used relating to said job-seeking request; and
a job-seeking-information providing step for, based on the result of the examination in said examination step, providing the human resources information to said terminal linked to said local area network;
wherein:
in said application accepting step, an identification code and a password are posted by acquiring the job-seeking request and the human resources information; and
in said examination-result notification step, when said terminal used relating to said job-seeking request uses the ID code and the password to perform accessing, a corresponding response is posted as the result of the examination.

37. A computer program for executing human resources employment processing, said human resources employment processing comprising:
a job-offer-information acquiring step for acquiring job-offer requirements and conditions from a terminal linked to a local area network;
a job-offer-information providing step for outputting the job-offer requirements and conditions to a terminal linked to an external network;
an application accepting step for acquiring a job-seeking request and human resources information relating to said job-seeking request via said external network;
an examination step for examining the job-seeking request; and
a job-seeking-information providing step for, based on the result of the examination in said examination step, providing the human resources information to said terminal linked to said local area network;
wherein said examination step comprises:
a recording step for recording, in at least a predetermined period, a job-seeking request which has failed in the examination and human resources information on the job-seeking request; and
an examination-by-comparison step for examining said job-seeking request by comparing said job-seeking request with the record generated in said recording step.
